# EUROPEAN PATENT SPECIFICATION

(11) **EP 3 084 699 B1**
(45) Date of publication and mention of the grant of the patent: **05.05.2021**
(21) Application number: 14828617.2
(22) Date of filing: 18.12.2014
(51) Int. Cl.: G06Q 20/32, G06Q 20/36, G06Q 20/40, G06Q 20/18, G06Q 30/06, G06Q 20/38, G07F 9/00, G07F 9/02

(54) **MOBILE DEVICE-TO-MACHINE PAYMENT SYSTEMS**
MOBILE VORRICHTUNGS-MASCHINEN-ZAHLUNGSSYSTEME
SYSTÈMES DE PAIEMENT DISPOSITIF MOBILE-À-MACHINE

(30) Priority: 18.12.2013 US 201361917936 P; 14.03.2014 US 201414214644
(43) Date of publication of application: 26.10.2016
(60) Divisional application: 21165692.1
(73) Proprietor: PayRange Inc., Portland, OR 97220 (US)
(72) Inventor: PATEL, Paresh, K., Portland, OR 97220 (US); DOAN, Chau, M., Beaverton, OR 97005 (US); SOKOL, Christopher, Michael, Portland, OR 97212 (US); FRAUENGLASS, Corin, Premoe, Seattle, WA 98102 (US)
(74) Representative: Mewburn Ellis LLP
(86) International application number: PCT/US2014/071284
(87) International publication number: WO 2015/095599

(56) References cited:
- WO-A1-2013/132995
- US-A1- 2005 101 295
- US-A1- 2011 251 910
- US-A1- 2012 108 173
- US-A1- 2012 316 963
- US-A1- 2013 267 176
- US-B1- 8 438 066

## Description

### TECHNICAL FIELD

The present application relates to the field of payment processing systems, and in particular, to a mobile-device-to-machine payment processing system over a non-persistent network connection.

### BACKGROUND

Vending machines (or "automatic retailing" macines), in the broadest sense, have been around for thousands of years. The first simple mechanical coin operated vending machines were introduced in the 1880s. Modern vending machines stock many different types of products including, but not limited to drinks (e.g., water, juice, coffee, and soda) and edible food products/items (e.g., snacks, candy, fruit, and frozen meals), as well as a wide variety of non-food items. In this fast paced world, vending machines are ubiquitous.

Vending machines are one type of "payment accepting unit" (payment accepting units are also referred to herein generically as "machines"). A payment accepting unit (or machine) is equipment that requires payment for the dispensing of products and/or services. In addition to vending machines, payment accepting units can also be other machines that require payment for the dispensing of a product and/or services including, but not limited to parking meters, toll booths, laundromat washers and dryers, arcade games, kiosks, photo booths, toll booths, transit ticket dispensing machines, and other known or yet to be discovered payment accepting units.

In using a payment accepting unit, a user will (1) approach the payment accepting unit, (2) determine from the face of the payment accepting unit the product (or service) he/she desires, (3) insert payment (e.g., coins, bills, or payment cards), and (4) input his/her selection into the payment accepting unit using a user interface (e.g., a series of buttons, a key pad, touch screen, or other input mechanism using, for example, the column and row at which a product is located). Based on the user's inputted selection, technology within the payment accepting unit provides the desired product (or service) to the user.

As the number of people with Internet-connected mobile devices proliferates, so does the variety of uses for such devices. Mobile payment is a logical extension. There is a large development effort around bringing mobile payment to the retail sector in an effort to not only provide options to the user, but also increased convenience.

### SUMMARY

Disclosed herein is a payment processing system, or more specifically, a mobile-device-to-machine payment processing system over a non-persistent network connection with hands-free and manual (sometimes also herein called "swipe" or "swipe-to-pay" modes. The invention is set out in the appended set of claims. According to a first aspect of the invention, there is provided a method of retrofitting an offline-payment operated machine to accept electronic payments, as set out in claim 1. According to another aspect of the invention, there is provided a payment module for retrofitting an offline-payment operated machine to accept electronic payments as set out in claim 11.

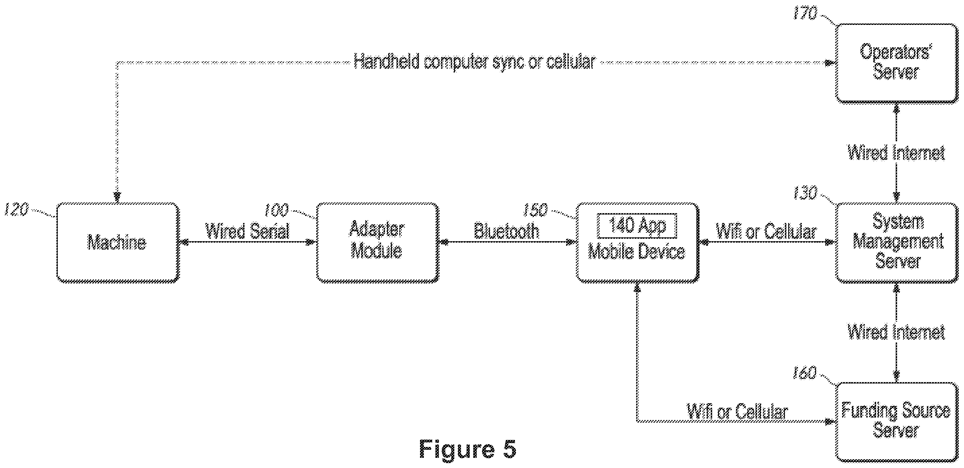

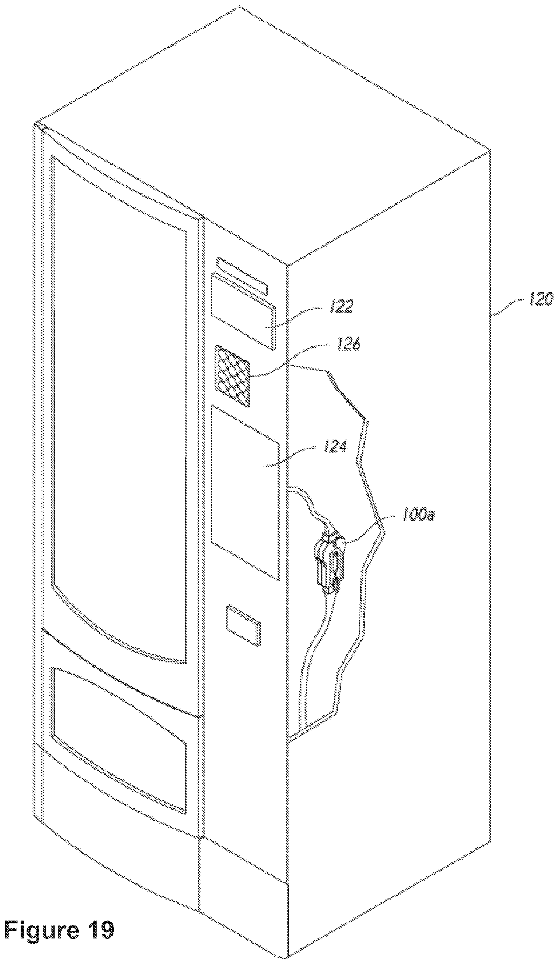

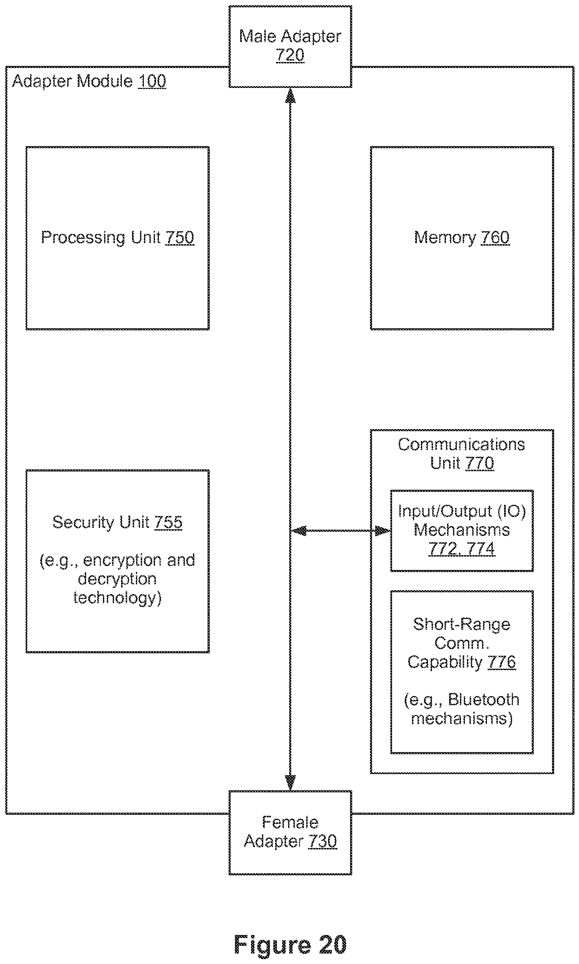

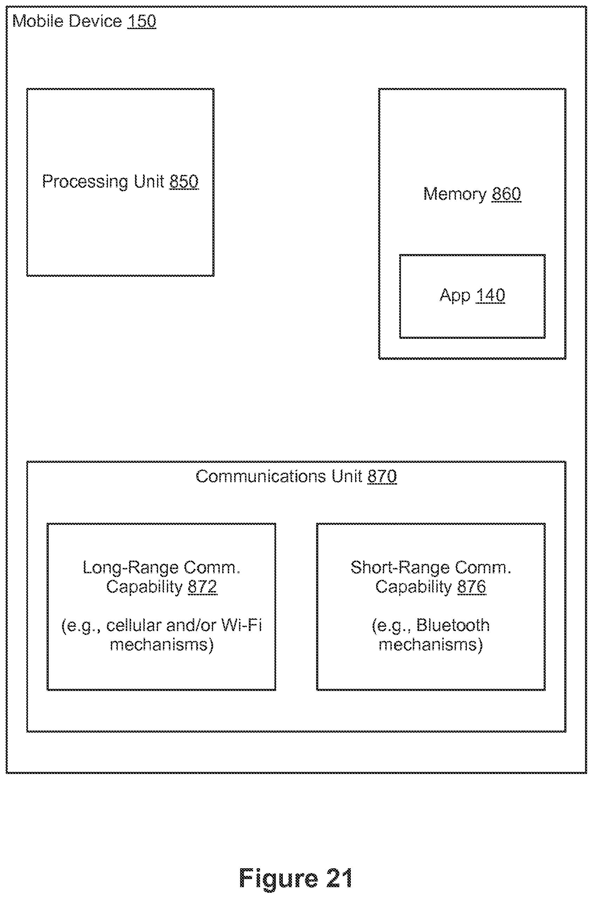

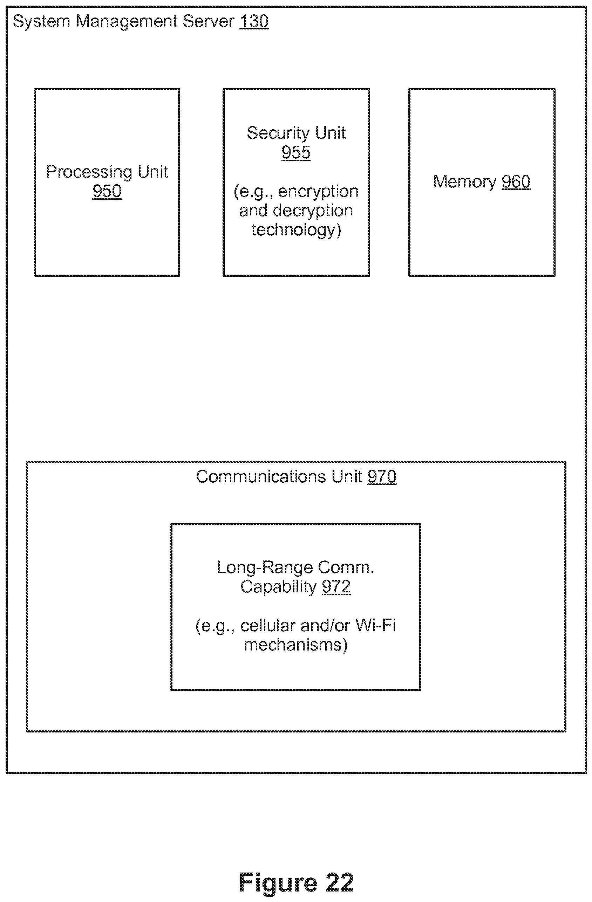

In some implementations, a method of payment processing is performed at a device (e.g., the mobile device 150, Figures 5 and 21) with one or more processors, memory, and two or more communication capabilities. The method includes obtaining, from a payment module (e.g., the adapter module 100, Figures 5 and 20), advertised information via a first communication capability (e.g., a short-range communication technology/protocol such as BLE), where the advertised information at least includes an authorization code. The method includes sending, to a server (e.g., the server 130, Figures 5 and 22), at least the authorization code from the advertised information via a second communication capability distinct from the first communication capability (e.g., a long-range communication technology/protocol such as GSM, CDMA, or Wi-Fi). In response to sending at least the authorization code, the method includes obtaining, from the server, authorization information via the second communication capability, where the authorization information at least includes an authorization grant token. After obtaining the authorization information, the method includes detecting a trigger condition to perform a first transaction with a payment accepting unit (e.g., the payment accepting unit 120 (sometimes also herein called "machine 120") (Figures 5 and 19) such as a vending machine or kiosk for dispensing goods and/or services) associated with the payment module. In response to detecting the trigger condition, the method includes sending, to the payment module, the authorization grant token via the first communication capability.

In some non-claimed implementations, a method of transmitting machine status information is performed at a device (e.g., the mobile device 150, Figures 5 and 21) with one or more processors, memory, and two or more communication capabilities. The method includes obtaining, from a payment module (e.g., the adapter module 100, Figures 5 and 20), advertised information via a first communication capability (e.g., the short-range communication technology/protocol such as BLE), where the advertised information at least includes status information indicating one or more states of at least one of a payment module and a payment accepting unit associated with the payment module. The method includes sending, to a server (e.g., the server 130, Figures 5 and 22), at least the status information from the advertised information via a second communication capability distinct from the first communication capability (e.g., the long-range communication technology/protocol such as GSM, CDMA, or Wi-Fi).

In some implementations, a method of payment processing acknowledgment information is performed at a payment module (e.g., the adapter module 100, Figures 5 and 20) coupled with a payment accepting unit (e.g., the payment accepting unit 120 (sometimes also herein called "machine 120") (Figures 5 and 19) such as a vending machine or kiosk for dispensing goods and/or services), the payment module including one or more processors, memory, and one or more first communication capabilities. The method includes obtaining, from the payment accepting unit, a first notification indicating completion of a first transaction performed by a first user of a first mobile device (e.g., the mobile device 150, Figures 5 and 21) at the payment accepting unit and an amount of the first transaction. In response to receiving the notification, the method includes: generating first transaction information based at least in part on the first notification; storing the generated first transaction information; and sending the generated first transaction information to the first mobile device via one of the one or more first communication capabilities (e.g., the short-range communication technology/protocol such as BLE). After sending the first transaction information to the first mobile device, the method includes: deleting the stored first transaction information generated for the first transaction performed by the first user of the first mobile device in accordance with a determination that first acknowledgement information has been received from the first mobile device within a predetermined time period; and maintaining the stored first transaction information generated for the first transaction performed by the first user of the first mobile device in accordance with a determination that the first acknowledgement information has not been received from the first mobile device within the predetermined time period.

In some non-claimed implementations, a method of updating firmware is performed at a first device (e.g., the mobile device 150, Figures 5 and 21) with one or more processors, memory, and two or more communication capabilities. The method includes obtaining, from a payment module (e.g., the adapter module 100, Figures 5 and 20), advertised information via a first communication capability (e.g., the short-range communication technology/protocol such as BLE), where the advertised information at least includes a current firmware version of the payment module. In accordance with a determination that the current firmware version of the payment module satisfies one or more predefined firmware criteria (i.e., indicating that the payment module's firmware needs updating), the method includes sending, to the payment module, firmware update information via the first communication capability, where the firmware update information includes one or more data packets for updating the current firmware version of the payment module.

In some implementations, a device (e.g., the adapter module 100 (Figures 5 and 20), the mobile device 150 (Figures 5 and 21), the server 130 (Figures 5 and 22), or a combination thereof) includes one or more processors and memory storing one or more programs for execution by the one or more processors, the one or more programs include instructions for performing, or controlling performance of, the operations of any of the methods described herein. In some implementations, a non-transitory computer readable storage medium storing one or more programs, the one or more programs comprising instructions, which, when executed by a device (e.g., the adapter module 100 (Figure 20), the mobile device 150 (Figure 21), the server 130 (Figure 22), or a combination thereof) with one or more processors, cause the computer system to perform, or control performance of, the operations of any of the methods described herein. In some implementations, a device (e.g., the adapter module 100 (Figure 20), the mobile device 150 (Figure 21), the server 130 (Figure 22), or a combination thereof) includes means for performing, or controlling performance of, the operations of any of the methods described herein.

The subject matter described herein is particularly pointed out and distinctly claimed in the concluding portion of this specification. Objectives, features, combinations, and advantages described and implied herein will be more readily understood upon consideration of the following detailed description of the invention, taken in conjunction with the accompanying drawings.

### BRIEF DESCRIPTION OF THE DRAWINGS

Figure 1 is a schematic diagram that shows three zones: a "communication zone" (e.g., Bluetooth range), an "authorization zone," and a "payment zone" in accordance with some implementations.
Figure 2 is a schematic diagram that shows the three zones of Figure 1 with multiple users therein in accordance with some implementations.
Figure 3 is a table that illustrates the hands-free credit or alert user principle in accordance with some implementations.
Figure 4 is a flow chart showing the logging received signal strength indicator (RSSI) information in accordance with some implementations.
Figure 5 is a block schematic that shows elements of the payment processing system including, but not limited to, the adapter module, the machine, the mobile device, and servers, as well as communications therebetween in accordance with some implementations.
Figure 6 is a block schematic that shows three areas of encryption used (each is bi-directional) between the adapter module, the machine, the mobile device, and/or servers in accordance with some implementations.
Figure 7 is a block diagram that shows communications, messaging, vending sequence, and purchase flow between the adapter module, the mobile device, and a system management server in accordance with some implementations.
Figure 8A is a schematic process flow diagram that shows additional elements and features of the payment processing system (e.g., communications, messaging, vending sequence, and purchase flow) when the user enters the "communication zone" (e.g., Bluetooth range) in accordance with some implementations.
Figure 8B is a schematic process flow diagram that shows additional elements and features of the payment processing system (e.g., communications, messaging, vending sequence, and purchase flow) when the user enters the "authorization zone" in accordance with some implementations.
Figure 8C is a schematic process flow diagram that shows additional elements and features of the payment processing system (e.g., communications, messaging, vending sequence, and purchase flow) when the user enters the "payment zone" and, in particular, detailing a hands-free mode example and a swipe mode example in accordance with some implementatins.
Figure 8D is a schematic process flow diagram that shows additional elements and features of the payment processing system (e.g., communications, messaging, vending sequence, and purchase flow) in a vending transaction including a loop for multiple transactions in accordance with some implementations.
Figure 8E is a schematic process flow diagram that shows additional elements and features of the payment processing system (e.g., communications, messaging, vending sequence, and purchase flow) in the login mode in accordance with some implementations.
Figure 8F is a schematic process flow diagram that shows additional elements and features of the payment processing system (e.g., communications, messaging, vending sequence, and purchase flow) during boot-up of the adapter module in accordance with some implementations.
Figure 8G is a schematic process flow diagram that shows additional elements and features of the payment processing system (e.g., communications, messaging, vending sequence, and purchase flow) during an account check/update process in accordance with some implementations.
Figures 9A-9E are flow charts that show example steps and features of the payment processing system (e.g., communications, messaging, vending sequence, and purchase flow) in accordance with some implementations.
Figures 10A-10D show a mobile device with a graphical representation of a mobile application shown thereon, the mobile application being used as part of the mobile-device-to-machine payment processing system in accordance with some implementations.
Figure 11 is a perspective view of the in-line dongle adapter module in accordance with some implementations.
Figure 12 is a front plan view of the in-line dongle adapter module of Figure 11 in accordance with some implementations.
Figure 13 is a back plan view of the in-line dongle adapter module of Figure 11 in accordance with some implementations.
Figure 15 is a first end view of a connector receptacle of the in-line dongle adapter module of Figure 11 in accordance with some implementations.
Figure 16 is a second end view of a connector receptacle of the in-line dongle adapter module of Figure 11 in accordance with some implementations.
Figure 17 is a perspective view taken from the first end of the in-line dongle adapter module of Figure 11, the connectors and cables between which the in-line dongle adapter module is inserted being shown in broken lines for illustrative purposes in accordance with some implementations.
Figure 18 is a perspective view taken from the second end of the in-line dongle adapter module of Figure 11, the connectors and cables between which the in-line dongle adapter module is inserted being shown in broken lines for illustrative purposes in accordance with some implementations.
Figure 19 is a perspective view of the in-line dongle adapter module of Figure 11 within a vending machine in accordance with some implementations.
Figure 20 is a block diagram of an adapter module in accordance with some implementations.
Figure 21 is a block diagram of a mobile device in accordance with some implementations.
Figure 22 is a block diagram of a server in accordance with some implementations.
Figure 23 is a schematic flow diagram of a process for authenticating a user to perform a transaction in the payment processing system in accordance with some implementations.
Figure 24A is a block diagram of a packet of information broadcast by the payment module (sometimes also herein called the "adapter module") in accordance with some implementations.
Figure 24B is a block diagram of an authorization request in accordance with some implementations.
Figure 24C is a block diagram of an authorization grant token in accordance with some implementations.
Figure 24D is a block diagram of transaction information generated by the payment module in accordance with some implementations.
Figure 25A is a schematic flow diagram of a process for processing acknowledgment information in the payment processing system in accordance with some implementations.
Figure 25B is a schematic flow diagram of a process for processing interrupted transactions in the payment processing system in accordance with some implementations.
Figures 26A-26C show schematic flow diagrams of processes for updating firmware of the payment module in the payment processing system in accordance with some implementations.
Figures 27A-27C illustrate a flowchart diagram of a method of payment processing in accordance with some implementations.
Figures 28A-28B illustrate a flowchart diagram of a method of transmitting machine status information in accordance with some implementations.
Figures 29A-29C illustrate a flowchart diagram of a method of payment processing acknowledgment in accordance with some implementations.
Figures 30A-30D illustrate a flowchart diagram of a method of updating firmware in accordance with some implementations.
Figure 31A illustrates a schematic flow diagram of a process for providing a representation of a machine event at a mobile device in accordance with some implementations.
Figure 31B is a schematic flow diagram of a process for processing acknowledgment information in the payment processing system in accordance with some implementations.
Figures 32A-32D illustrate example user interfaces for providing a representation of a machine event at a mobile device in accordance with some implementations.
Figures 33A-33B illustrate a flowchart diagram of a method of presenting representations of payment accepting unit events in accordance with some implementations.
Figure 34A illustrates a block diagram of an offline-payment operated machine in accordance with some implementations.
Figure 34B illustrates signals sampled by the payment module in accordance with some implementations.
Figures 35A-35B illustrate a flowchart diagram of a method of retrofitting an offline-payment operated machine to accept electronic payments in accordance with some implementations.
Figure 36 illustrates a flowchart diagram of a method of enabling a payment
Figure 37 is a block diagram of a device for retrofitting a payment accepting unit to accommodate a plurality of payment peripherals in accordance with some implementations.
Figure 38 is a schematic flow diagram of a payment peripheral registration process in accordance with some implementations.
Figures 39A-39B illustrate a schematic flow diagram of a payment process in accordance with some implementations.
Figures 40A-40D illustrate a flowchart diagram of a method of retrofitting a payment accepting unit to accommodate a plurality of payment peripherals in accordance with some implementations.

Like reference numerals refer to corresponding parts throughout the several views of the drawings.

### DETAILED DESCRIPTION

Disclosed herein is a payment processing system or, more specifically, a mobile-device-to-machine payment processing system for processing transactions over a non-persistent network connection. The mobile-device-to-machine payment processing system disclosed herein focuses on the unattended retail space (e.g., a payment accepting unit 120, sometimes also herein called a "machine 120"). More specifically, the mobile-device-to-machine payment processing system disclosed herein allows a user (having a mobile device 150 with a mobile application 140 thereon) to make a cashless purchase from a payment accepting unit 120 (having an adapter module 100 associated therewith).

The mobile-device-to-machine payment processing system described herein can be implemented with one or more of the following features: easy installation feature, a non-persistent network connection feature; a manual (swipe to pay) mode feature; a hands-free mode feature; and a multiple vending transactions (multi-vend) feature.

Easy Installation: Installation is very easy, requires no tools, requires no configuration, and takes as little as 30 seconds. This is accomplished by using an adapter module 100 (sometimes also herein called "payment module 100") such as an in-line dongle (a hardware device with software thereon) design for in-line insertion within a multi-drop bus (MDB) of a payment accepting unit 120 (e.g., a vending machine) (sometimes also herein called 'the machine 120"). Installation is as simple as "powering down" (turning off) the machine 120, identifying the "wire" that connects with a payment receiving mechanism (e.g., the coin mechanism), disconnecting the wire (so that there are two loose ends, such as a male connection end or adapter of an MDB and a female connection end or adapter of an MDB), plugging (inserting) the adapter module 100 in serial ("in-line") with the wire (e.g., connecting the MDB female adapter to a male adapter of the adapter module 100 and connecting the MDB male adapter to a female adapter of the adapter module 100), tucking the wire and the installed adapter module 100 back into position, and "powering up" (turning on) the machine 120. Most vending machines made since 1995 have this industry standard MDB technology that would allow this easy 30-second installation. On machines without MDB technology, the adapter module 100 can be configured or designed to work with other serial protocols or activate a switch. In essence the adapter module 100 simulates establishing payment on payment accepting unit 120 in much the same manner as other alternative forms of payment (e.g., cash).

Non-persistent Network Connection: Although payment accepting units (or "machines") that accept only cash (e.g., paper currency and coins) may not require a connection (persistent or non-persistent) to a network, traditional payment accepting units that accept cashless payments (e.g., credit cards, debit cards, and alternative mobile device payment methods using, for example, smart phones) require a persistent connection to a network (wired or wireless) to facilitate the cashless payments. In other words, without a persistent (ongoing or accessible on demand) network connection, traditional payment accepting units cannot accept cashless payments. Most traditional payment accepting units that accept cashless payments include the technology to accomplish this persistent network connection that allows them to connect to a remote server. If the network connection to a traditional machine is temporarily interrupted, cashless payments will be temporarily unavailable. If the machine is located in a location where no network connection is available, cashless payments is not possible. In addition to using a mobile device 150 as an intermediary between the payment accepting units 120 and the server 130, the mobile-device-to-machine payment processing system described herein minimizes (i.e., the manual mode) or eliminates (i.e., the hands-free mode) user interaction with the mobile device 150. Further, in some implementations, the mobile-device-to-machine payment processing system described herein facilitates the acceptance of cashless payments without requiring any network connection near the payment accepting unit 120. In some implementations, when the mobile-device-to-machine payment processing system described herein is located in a remote location where network connection is unavailable, the mobile-device-to-machine payment processing system, therefore, can still accept cashless payments.

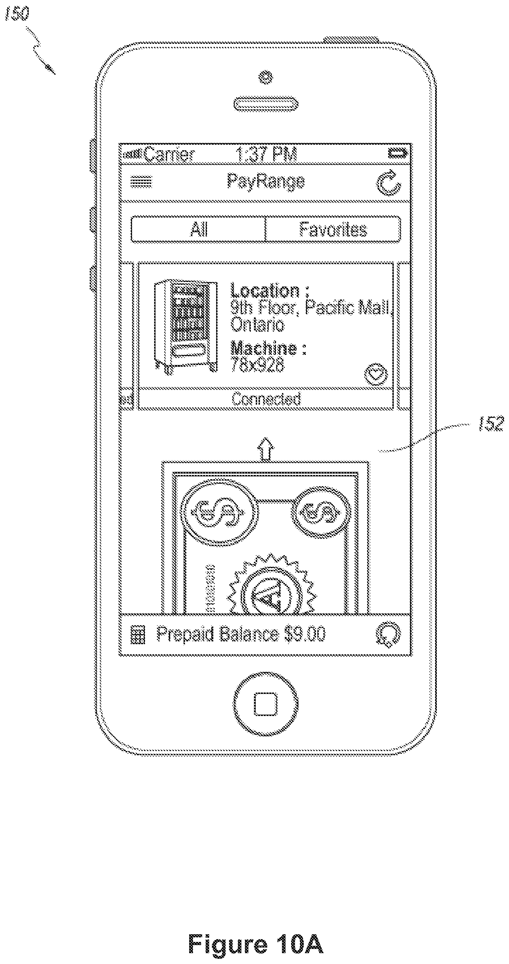

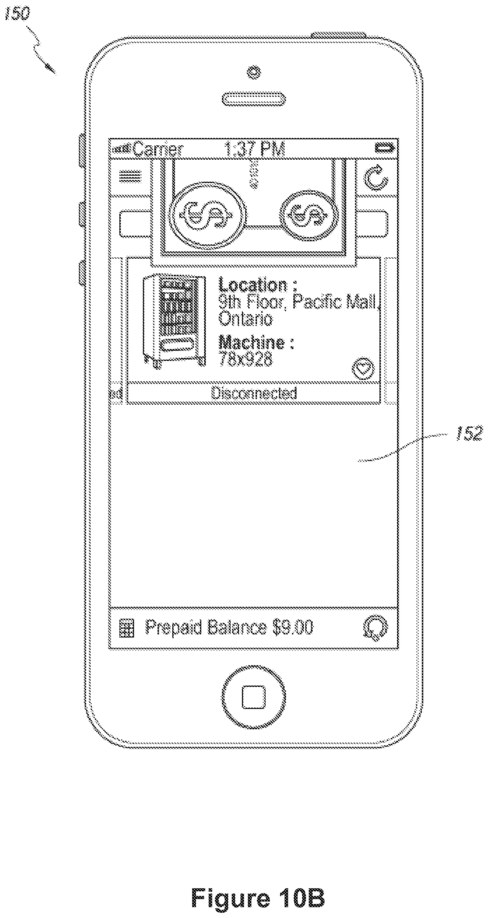

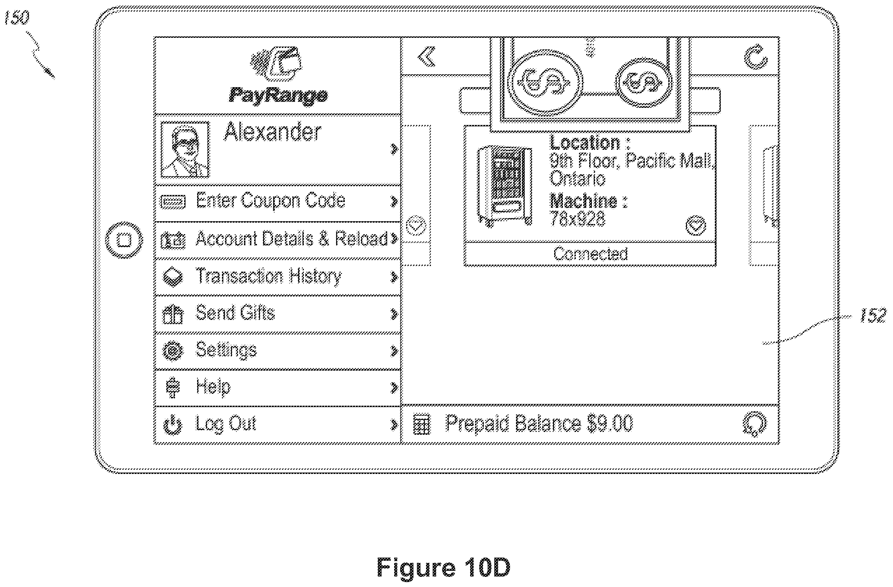

Manual (Swipe-to-Pay) Mode: Using a "swipe-to-pay" feature (or just "swipe") refers to a user's action implemented on his/her mobile device 150 where he/she quickly brushes his/her finger (or other pre-determined interaction) on the mobile device's touch screen 152 (Figures 10A-10D) or other input devices associated with the mobile device 150. From the user's perspective, when the user is within range, a pre-installed mobile application 140 automatically connects to the payment accepting unit 120 (e.g., a vending machine). The mobile application 140 might display (on the touch screen 152) a prepaid balance that the user "swipes" to transfer payment to the payment accepting unit 120. The user could observe the transferred funds on the touch screen 152 of the mobile device 150 and/or on the display 122, 124 (Figure 19) of the payment accepting unit 120. The transaction is completed just as if cash was inserted in the machine 120 with the user inputting his selection on the payment accepting unit 120 and the payment accepting unit 120 dispensing the product or service. After the selection is made, the change is returned to the mobile device 150 and this may be shown on the touch screen 152 of the mobile device 150.

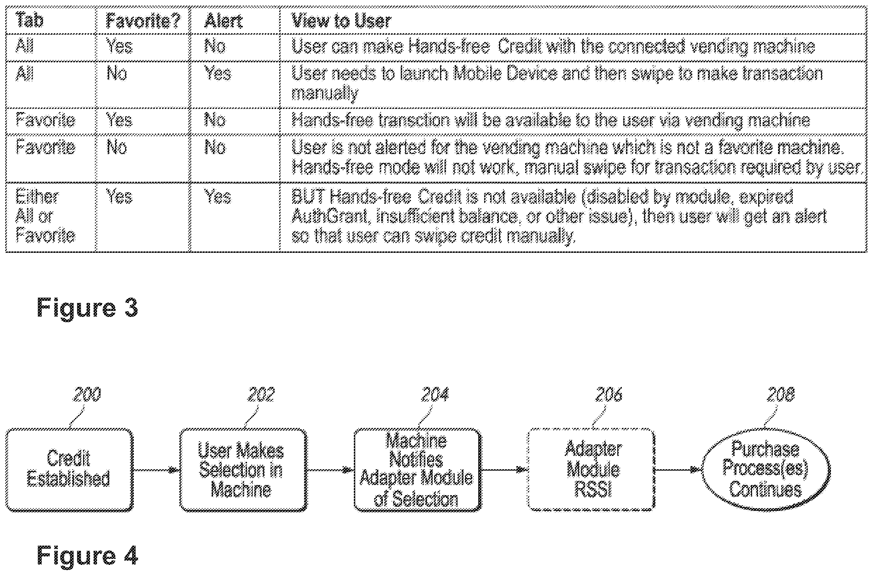

Hands-Free Mode: A "hands-free pay" feature (or just "hands-free") would most likely be used with "favorite" payment accepting units 120 (e.g., a frequently used vending machine at a user's work or school). From the user's perspective, he/she would approach the favorite payment accepting unit 120 and notice that the display 122, 124 (Figure 19) of the payment accepting unit 120 shows funds available, he/she would select the product or service using the payment accepting unit's input mechanisms (e.g., buttons 126 or a touch screen display 124 shown in Figure 19), and he/she would retrieve dispensed services or products. It would be that simple. More specifically, when the user is within range, a pre-installed mobile application 140 automatically connects to the payment accepting unit 120 (e.g., a vending machine). The user may leave the mobile device 150 in a pocket, purse, briefcase, backpack, or other carrier. As the user approaches the payment accepting unit 120 and is in approximately "arm's-length" distance (e.g., 3 to 5 feet) of the payment accepting unit 120, the user could observe the transferred funds on the display 122, 124 (Figure 19) of the payment accepting unit 120. The transaction is completed just as if cash was inserted into the payment accepting unit 120 with the user inputting his/her selection on the payment accepting unit 120 and the payment accepting unit 120 dispensing the product or service. After the selection is made, the change is returned to the mobile device 150. Figure 3 details when the hands-free mode would be available.

Multiple Vending Transactions (Multi-Vend): Both the manual and hands-free modes could be used multiple times in sequence (implemented, for example, as a loop) so that a user may make multiple purchases. After making his/her first selection and receiving his product (or service), the user would observe that additional funds were available on the display 122, 124 (Figure 19) on the payment accepting unit 120. He/she could make another selection (or multiple selections) and receive additional product(s) (or service(s)). More specifically, the display 122, 124 (Figure 19) may reset as if the transaction is complete, but then, because the user is still standing in range, the mobile application 140 would send another credit to the payment accepting unit 120, allowing for a second purchase. When the user walks away, the system clears (e.g., returns unused funds to the application 140 on the mobile device 150).

The features described above, alone or in combination with other features described herein will revolutionize the hundred billion dollar automated retail industry. The hardware is very low cost and there are no reoccurring fees because no cellular connection is required on the machine 120. Using the mobile-device-to-machine payment processing system described herein, operators of machines 120 can increase frequency of visits by purchasers and items sold with each visit.

The mobile-device-to-machine payment processing system described herein may be implemented as an apparatus, system, and/or method for enabling payments to a machine 120 via a mobile device 150. The mobile-device-to-machine payment processing system may be better understood with reference to the drawings, but the shown mobile-device-to-machine payment processing system is not intended to be of a limiting nature.

### DEFINITIONS

Before describing the mobile-device-to-machine payment processing system and the figures, some of the terminology should be clarified. Please note that the terms and phrases may have additional definitions and/or examples throughout the specification. Where otherwise not specifically defined, words, phrases, and acronyms are given their ordinary meaning in the art. The following paragraphs provide some of the definitions for terms and phrases used herein.

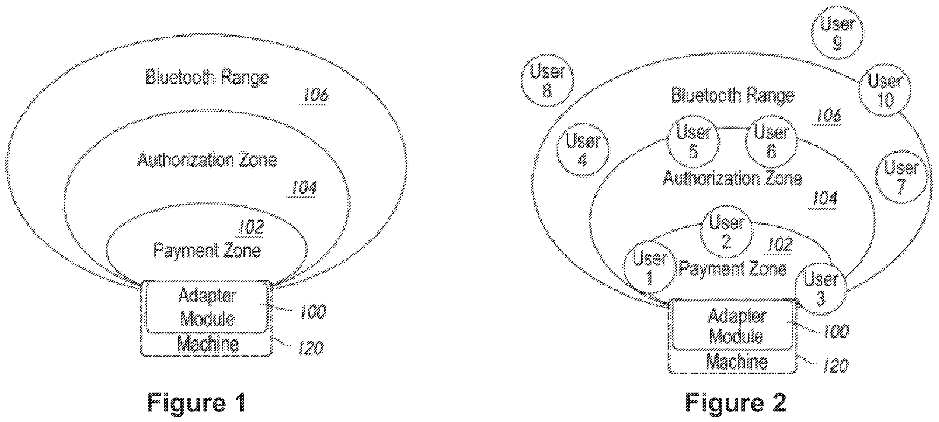

Adapter Module 100: As shown in Figures 1 and 2, the adapter module 100 (sometimes also herein called the "payment module 100") is a physical device that is installed in a machine 120 (a payment accepting unit 120). The shown adapter module 100 is an in-line dongle (a hardware device with software thereon) device that may be inserted in-line within a multi-drop bus (MDB) of a machine 120. The adapter module 100 bridges the communication between the machine 120 and a mobile device 150. Although described as a unique component, it should be noted that the adapter module 100 could be implemented as a plurality of devices or integrated into other devices (e.g., components of a machine 120). In its unique component form, the adapter module 100 can be easily inserted into a machine 120 so that the machine 120 is able to perform new features with the assistance of the adapter module 100. Figure 20 shows components associated with the adapter module 100. As shown in Figure 20, the communications unit 770 of the adapter module 100 includes short-range communication capability 776 (e.g., Bluetooth mechanisms).The shown example may be divided into multiple distinct components that are associated with each other or the example may be incorporated into or drawn from other technology (e.g., a computer or a payment accepting unit) as long as the components are associated with each other.

Mobile Device 150 and Application 140 (also referred to as a "mobile application," "mobile app," or "app"): In general, a mobile device 150 may be a user's personal mobile device 150. The mobile device 150 (with a mobile application 140 thereon) acts as a communication bridge between the adapter module 100 (associated with a payment accepting unit 120) and the server 130. The mobile device 150 and the application 140, however, are not "trusted" in that the communications (transmissions) it passes are encrypted. Encrypted (secured) communications are undecipherable (unencryptable, unreadable, and/or unuseable) by the mobile device 150. This keeps the communications passed between the adapter module 100 and the server 130 secured and safe from hacking. Mobile devices include, but are not limited to smart phones, tablet or laptop computers, or personal digital assistants (PDAs), smart cards, or other technology (e.g., a hardware-software combination) known or yet to be discovered that has structure and/or capabilities similar to the mobile devices described herein. The mobile device 150 preferably has an application (e.g., the application 140) running on it. The term "app" is used broadly to include any software program(s) capable of implementing the features described herein. Figures 10A-10D show user interfaces for the application 140 displayed by the mobile device 150. It should be noted that the phrase "mobile device" can be assumed to include the relevant app unless specifically stated otherwise. Similarly, it should be noted that an "app" can be assumed to be running on an associated mobile device unless specifically stated otherwise. Figure 21 shows components associated with the mobile device 150. The shown example may be divided into multiple distinct components that are associated with each other or the example may be incorporated into or drawn from other technology (e.g., the cell phone itself) as long as the components are associated with each other.

Payment Accepting Unit 120 (or Machine 120): A payment accepting unit 120 (or the machine 120) is equipment that requires payment for the dispensing of an product and/or service. Payment accepting units 120 may be vending machines, parking meters, toll booths, laundromat washers and dryers, arcade games, kiosks, photo booths, toll booths, transit ticket dispensing machines, and other known or yet to be discovered payment accepting units 120. Some payment accepting units 120 can accept cashless payments (payments other than cash (paper currency and coins)) by accepting payment from, for example, credit cards, debit cards, and mobile devices.

Network Connections: For purposes of this discussion, a persistent network connection is a wired or wireless communications connection that is ongoing (e.g., a dedicated connection, a dedicated online connection, and/or a hardwired connection) or accessible on demand (e.g., the ability for the machine to make a temporary connection to a server or the ability for the user to contact a server from his mobile device). Typically the persistent network connection has been conducted over "long-range communication technology" or "long-range communication protocol" (e.g., hardwired, telephone network technology, cellular technology (e.g., GSM, CDMA, or the like), Wi-Fi technology, wide area network (WAN), local area network (LAN), or any wired or wireless communication technology over the Internet that is known or yet to be discovered). Traditionally, machines that accept payment other than cash require a persistent (ongoing or accessible on demand) connection to a network to facilitate payment. This is true for machines that accept, for example, credit cards and debit cards. The payment accepting units 120 described herein do not require a traditional persistent network connection. The user's mobile device 150 acts as a communication bridge between the adapter module 100 and the server 130. Communications between user mobile devices 150 and the servers (e.g., a system management server 130 and/or a funding source server 160) take place using long-range communication technology. Communications between user mobile devices 150 and the adapter module 100 of the payment accepting unit 120 take place using "short-range communication technology" or "short-range communication protocol" (e.g., Bluetooth (such as Bluetooth 4.0, Bluetooth Smart, Bluetooth Low Energy (BLE)), near-field communication (NFC), Ultra Wideband (UWB), radio frequency identification (RFID), infrared wireless, induction wireless, or any wired or wireless technology that could be used to communicate a small distance (approximately a hundred feet or closer) that is known or yet to be discovered). Therefore, neither the adapter module 100 nor the payment accepting unit 120 requires a traditional persistent long-range wireless network connection. The communications technology shown in the figures may be replaced with alternative like communications technology and, therefore, specific shown communications technologies are not meant to be limiting. For example, Wi-Fi technology could be replaced with another long-range communication technology.

Server: A server is the host processing server that may be operated by the company running the payment processing system. For each user, the server 130 preferably maintains at least one "virtual wallet" having at least one "balance" (which can be $0) of designated funds for which the server 130 keeps an accounting. The balance may represent, for example, "cash" or it may be a "promotional value" that represents funds that may be spent under certain circumstances. If these funds begin to be depleted, the user may be notified (e.g., via the application 140 on the mobile device 150) that additional funds need to be designated and/or transferred. Alternatively, funds from other sources (e.g., the funding source server 160) may be automatically transferred to restore a predetermined balance. The balance may also be increased based on a promotion (e.g., points earned or coupons). As shown in Figure 22, the server includes appropriate processors 950, memory 960 (which would keep an accounting of the user's balance in a manner similar to a gift card), and communication systems 970. As shown in Figure 22, the communications unit 970 of the server 130 includes long-range communication capability 972 (e.g., cellular technology and/or Wi-Fi mechanisms). The server 130 also includes a security unit 955 for encrypting and decrypting messages. The server 130 receives an authorization request (sometimes also herein called an "AuthRequest") from the adapter module 100 (via a mobile device 150) and, if funds are available, returns an authorization grant (sometimes also herein called an "AuthGrant" or an "authorization grant token") for funds. Figure 22 shows components associated with the server 130. The shown example may be divided into multiple distinct components that are associated with each other or the example may be incorporated into or drawn from other technology (e.g., a computer or a main frame) as long as the components are associated with each other.

Advertise Presence: Each adapter module 100 advertises its presence by broadcasting signals (advertising broadcast signals) to mobile devices in the zones 102, 104, 106. Each adapter module 100 can listen to other adapter modules' advertisements.

Received Signal Strength Indicator (RSSI): The adapter module 100 may have a self-calibrating signal strength to determine zone thresholds (e.g., a payment zone threshold and an authentication zone threshold). At the time the user selects an item (product or service) from the payment accepting unit 120, the Received Signal Strength Indicator (RSSI) is logged. At this moment, it is presumed the user is within "arm's-length" (which may be a predetermined length approximating the distance of a user standing in front of a machine for the purpose of making a purchase) from the payment accepting unit 120. A mathematical computation (i.e., In-Range Heuristics) is conducted to derive the optimal RSSI threshold at which point payment should be triggered by an application 140 on a mobile device 150. The threshold may be payment accepting unit specific and can vary over a period of time. This optimal zone threshold is preferably reported to the mobile device 150 during an initial handshake.

In-Range Heuristics: A mathematical computation that determines the RSSI threshold to determine when a user is in the authorization zone 104 and/or the payment zone 102. This computation can take into consideration numerous historical data points as well as transaction specific information such as which the mobile device 150 is being used, payment accepting unit type, among other factors. Preferably the RSSI is logged while the user is making his selection (this is the one time in the entire process that the user definitely will be "in range" (e.g., they will be arm's length from the machine 120 because they are physically interacting with the machine 120). The type of user mobile device 150, accelerometer data (e.g., is the user moving or stationary), and/or other information may also be logged while the user is making his selection. The adapter module 100 can give a reference RSSI for the payment zone 102 for the machine 120, and the application 140 can make a +/- adjustment based on the specific mobile device 150 on which it is installed. Over a period of time, the payment processing system continues to improve itself based on additional data points.

Authorization Request ("AuthRequest:): When a user enters the authorization zone 104, the mobile device 150 notifies the adapter module 100 and the adapter module 100 sends a secured authorization request (e.g., the encrypted authorization request) as a "message" (also referred to as a communication or transmissions) to the server 130 via the mobile device 150. Encryption may be performed by a security unit 755 (Figure 20) with security technology (e.g., encryption and decryption means) that may be associated with the processing unit 750 and/or the memory 760. Significantly, the AuthRequest is a request for authorization of funds, not a request for authorization of a transaction. The purpose of the funds is irrelevant to the server 130.

Authorization Grant Token ("AuthGrant"): This is a "message" (also referred to as a communication or transmissions) encrypted by the security unit 955 (Figure 22) with security technology (e.g., encryption and decryption means) of the server 130 with the unique private key corresponding to the adapter module 100. The secured authorization grant (e.g., the encrypted authorization grant) is passed from the server 130 to the adapter module 100 via the mobile device 150 in the form of a message. The mobile device 150, however, is not able to decrypt and/or read the message. The authorization grant is in response to the authorization request. The amount of the funds granted by the AuthGrant may be determined by factors including, but not limited to, the amount of funds available (or, if funds are not available, a mini-loan could be granted), a pre-authorized amount (e.g., set by the server, set by the user during set-up, set by the funding source, or a standard amount), limited by time (e.g., only a certain amount per hour, or a predetermined amount at specific times of the day), limited to the maximum amount of an item on the machine (or enough for two or three items in the machine), or one or more of these and other factors. Significantly, the AuthGrant makes the funds available, but does not authorize a transaction. The AuthGrant may have an associated expiration period in that it may expire if it is not used in a pre-determined time period. The length of time before the AuthGrant expires may be determined by factors including, but not limited to, the trustworthiness of the user (e.g., the user has a long history with the payment processing system or some known provider (e.g., credit card provider, bank, or credit union), the user has a good credit rating, or the user has a large wallet balance), a pre-authorized time period (e.g., set by the server, set by the user during set-up, set by the funding source, or a standard time period), limited by time (e.g., predetermined time periods at specific times of the day such as longer times during breakfast, lunch, and dinner), limited by the machine or the products or services sold in the machine, limited by the number of other users near the machine (e.g., if it is a crowded machine, the AuthGrant may expire faster), or one or more of these and other factors. The AuthGrant remains valid until it expires or some other event occurs to end its validity (e.g., the user cancels it). This means that under normal circumstances the mobile device 150 will hold the AuthGrant authorizing use of funds for a pre-determined time period that will allow the user sufficient time to make a purchase. The authorized amount may be considered to be the "wallet balance" that is held in a virtual "wallet."

Synchronization: Time may be synchronized to the adapter module 100 from the server 130. The server 130 sends time information with encrypted messages and the adapter module 100 uses the time encoded in the messages for synchronization.

The mobile-device-to-machine payment processing system and components thereof may have associated hardware, software, and/or firmware (a variation, subset, or hybrid of hardware and/or software). The term "hardware" includes at least one "processing unit," "processor," "computer," "programmable apparatus," and/or other known or yet to be discovered technology capable of executing instructions or steps (shown as the processing unit 750 in Figure 20, the processing unit 850 in Figure 21, and the processing unit 950 in Figure 22). The term "software" includes at least one "program," "subprogram," "series of instructions," or other known or yet to be discovered hardware instructions or hardware-readable program code. Software may be loaded onto hardware (or firmware) to produce a "machine," such that the software executes on the hardware to create structures for implementing the functions described herein. Further, the software may be loaded onto the hardware (or firmware) so as to direct the mobile-device-to-machine payment processing system (and components thereof) to function in a particular manner described herein or to perform a series of operational steps as described herein. "Hardware" such as the adapter module 100, the mobile device 150, and the payment accepting unit 120 may have software (e.g., programs and apps) loaded thereon. The phrase "loaded onto the hardware" also includes being loaded into memory (shown as the memory 760 in Figure 20, the memory 860 in Figure 21, and the memory 960 in Figure 22) associated with or accessible by the hardware. The term "memory" is defined to include any type of hardware (or other technology) -readable media (also referred to as computer-readable storage medium) including, but not limited to, attached storage media (e.g., hard disk drives, network disk drives, servers), internal storage media (e.g., RAM, ROM, EPROM, FLASH-EPROM, or any other memory chip or cartridge), removable storage media (e.g., CDs, DVDs, flash drives, memory cards, floppy disks, flexible disks), firmware, and/or other known or yet to be discovered storage media. Depending on its purpose, the memory may be transitory and/or non-transitory. Appropriate "messages," "communications," "signals," and/or "transmissions" (that includes various types of information and/or instructions including, but not limited to, data, commands, bits, symbols, voltages, currents, electromagnetic waves, magnetic fields or particles, optical fields or particles, and/or any combination thereof) over appropriate "communication paths," "transmission paths," and other means for signal transmission including any type of connection between two elements on the payment processing system (e.g., the adapter module 100, the mobile device 150, the payment accepting unit 120, hardware systems and subsystems, and memory) would be used as appropriate to facilitate controls and communications.

It should be noted that the terms "programs" and "subprograms" are defined as a series of instructions that may be implemented as software (i.e. computer program instructions or computer-readable program code) that may be loaded onto a computer to produce a "machine," such that the instructions that execute on the computer create structures for implementing the functions described herein or shown in the figures. Further, these programs and subprograms may be loaded onto a computer so that they can direct the computer to function in a particular manner, such that the instructions produce an article of manufacture including instruction structures that implement the function specified in the flow chart block or blocks. The programs and subprograms may also be loaded onto a computer to cause a series of operational steps to be performed on or by the computer to produce a computer implemented process such that the instructions that execute on the computer provide steps for implementing the functions specified in the flow chart block or blocks. The phrase "loaded onto a computer" also includes being loaded into the memory of the computer or a memory associated with or accessible by the computer. Separate, albeit interacting, programs and subprograms may be associated with the adapter modules 100, the server 130, and the mobile device 150 (including the mobile application 140) and these programs and subprograms may be divided into smaller subprograms to perform specific functions.

The terms "messages," "communications," "signals," and/or "transmissions" include various types of information and/or instructions including, but not limited to, data, commands, bits, symbols, voltages, currents, electromagnetic waves, magnetic fields or particles, optical fields or particles, and/or any combination thereof. Appropriate technology may be used to implement the "communications," "signals," and/or "transmissions" including, for example, transmitters, receivers, and transceivers. "Communications," "signals," and/or "transmissions" described herein would use appropriate technology for their intended purpose. For example, hard-wired communications (e.g., wired serial communications) would use technology appropriate for hard-wired communications, short-range communications (e.g., Bluetooth) would use technology appropriate for close communications, and long-range communications (e.g., GSM, CDMA, Wi-Fi, or the like) would use technology appropriate for remote communications over a distance. Appropriate security (e.g., SSL or TLS) for each type of communication is included herein. The security units 755 and 955 include technology for securing messages. The security technology may be, for example, encryption/decryption technology (e.g., software or hardware). Although encryption/decryption is discussed primarily as being performed using a unique private key, alternative strategies include, but are not limited to encryption/decryption performed using public/private keys (i.e., asymmetric cryptography), or other encryption/decryption strategies known or yet to be discovered. Appropriate input mechanisms and/or output mechanisms, even if not specifically described, are considered to be part of the technology described herein. The communications unit 770 (shown in Figure 20) of the adapter module 100 is shown as including appropriate input and output mechanisms 772, 774 that may be implemented in association (e.g., directly or indirectly in functional communication) with male and female adapters 720, 730 of the adapter module 100. The communications unit 870 (shown in Figure 21) of the mobile device 150 includes mechanisms for both long-range communications (shown as the long-range communication capability 872 such as cellular and/or Wi-Fi mechanisms) for communicating with the server 130 and short-range communications (shown as the short-range communication capability 876 such as Bluetooth mechanisms) for communicating with the adapter module 100.

When used in relation to "communications," "signals," and/or "transmissions," the terms "provide" and "providing" (and variations thereof) are meant to include standard means of provision including "transmit" and "transmitting," but can also be used for non-traditional provisions as long as the "communications," "signals," and/or "transmissions" are "received" (that can also mean obtained). The terms "transmit" and "transmitting" (and variations thereof) are meant to include standard means of transmission, but can also be used for non-traditional transmissions as long as the "communications," "signals," and/or "transmissions" are "sent." The terms "receive" and "receiving" (and variations thereof) are meant to include standard means of reception, but can also be used for non-traditional methods of obtaining as long as the "communications," "signals," and/or "transmissions" are "obtained."

The term "associated" is defined to mean integral or original, retrofitted, attached, connected (including functionally connected), positioned near, and/or accessible by. For example, if the user interface (e.g., a traditional display 122 (Figure 19), a touch screen display 124 (Figure 19), a key pad 126 (Figure 19), buttons 126 (Figure 19, shown as part of the key pad 126), a keyboard (not shown), and/or other input or output mechanism) is associated with a payment accepting unit 120, the user interface may be original to the payment accepting unit 120, retrofitted into the payment accepting unit 120, attached to the payment accepting unit 120, and/or a nearby the payment accepting unit 120. Similarly, adapter modules 100 may be associated with payment accepting units 120 in that the adapter modules 100 may be original to the payment accepting unit 120, retrofitted into the payment accepting unit 120, attached to the payment accepting unit 120, and/or a nearby the payment accepting unit 120.

### SYSTEM OVERVIEW

Figures 5, 6, and 7 together show major components of the mobile-device-to-machine payment system and the interactions there-between.

As shown, the adapter module 100 functionally connected bi-directionally to the payment accepting unit 120 via a wired serial connection such that no security is necessary. The adapter module 100 is also functionally connected bi-directionally to the mobile device 150 (and its installed mobile application 140) via short-range communication technology (e.g., a Bluetooth connection). Because the mobile device 150 is not a "trusted" link (e.g., it could be hacked by a user), only secured communications (transmissions) are passed between the adapter module 100 and the mobile device 150. This keeps communications secured and safe from hacking. The mobile device 150 (and its installed mobile application 140) is also functionally connected bi-directionally to a system management server 130 and/or a funding source server 160 via long-range communication technology (e.g., Wi-Fi or Cellular connection) that preferably has appropriate security (e.g., SSL security). Security between the mobile device 150 and the system management server 130 has the advantage of protecting communications from the mobile device 150 to the system management server 130 that may include sensitive data and may not be encrypted. The system management server 130 and the funding source server 160 may be connected via a wired Internet connection with SSL security. The system management server 130 may be connected via a wired Internet connection with SSL security to an operators' server 170. Although not necessary to implement a purchase transaction, for other purposes (e.g., inventory), the operators' server 170 may be connected to the payment accepting unit 120 using a handheld computer sync or a cellular connection.

Also, a unique private key may be used to securely transmit encrypted messages between the adapter module 100 and the system management server 130 (although the encrypted transmissions would most likely be routed through the mobile device 150). The server 130 stores a private key for each adapter module 100, and this key is only known to the adapter module 100 and the server 130. No intermediary is privy to this key (especially not the mobile device 150). When the adapter module 100 and the server 130 communicate messages (e.g., AuthRequest and AuthGrant), the security unit 755 of the adapter module 100 encrypts the message with its private key and passes the message to the mobile device 150. The mobile device 150 (which preferably cannot decrypt the message) passes the encrypted message to the server 130. The server 130 is able to decrypt the message using the security unit 955 of the adapter module 100 and the unique private key. The security unit 955 of the server 130 uses this same unique private key to encrypt messages to the adapter module 100 and sends the message to the mobile device 150 to relay to the adapter module 100 that is able to decrypt the message using the security unit 755 of the adapter module 100 and the unique private key.

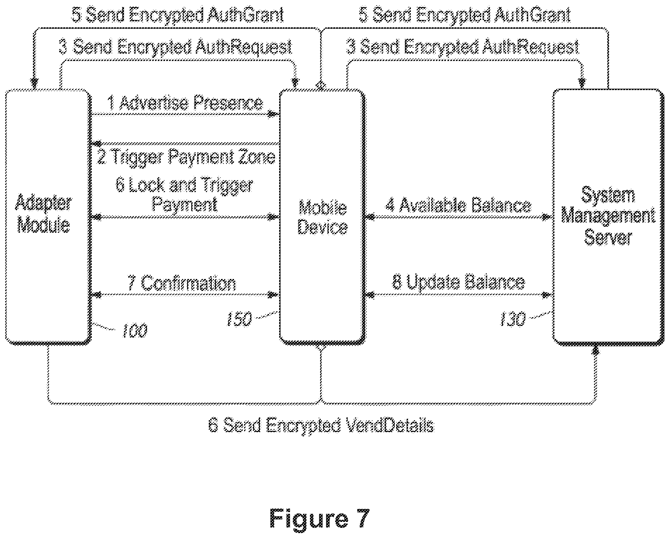

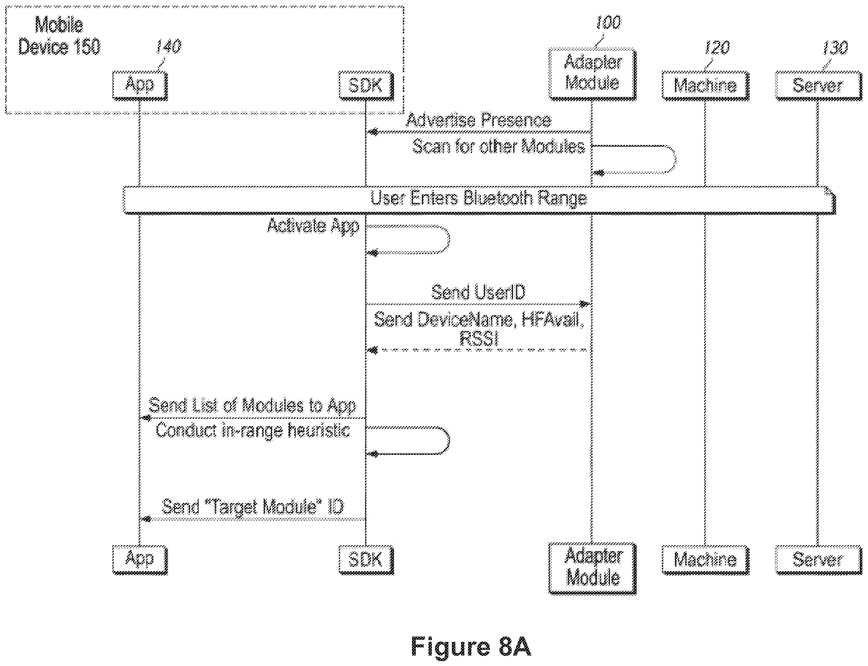

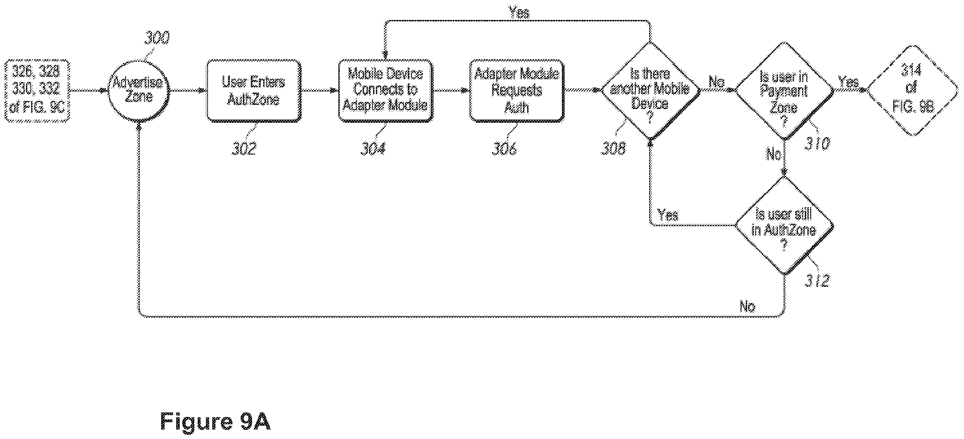

Figure 7 shows specific communications and messaging with a vending sequence (the numbers to the left of the communications and messaging) between the adapter module 100, the mobile device 150, and the system management server 130. These communications are discussed in more detail in the discussion pertaining to the schematic flow diagrams (Figures 8A-8G) and the flow charts (Figures 9A-9E).

It should be noted that Figures 5, 6, and 7 are examples, and are meant to help in the understanding of the mobile-device-to-machine payment system. For example, the shown long-range communications technology may be replaced with alternative long-range communications technology known or yet to be discovered, the shown short-range communication technology may be replaced with alternative short-range communication technology known or yet to be discovered, and the shown security may be replaced with alternative security known or yet to be discovered. The shown connections are meant to be examples, and there may be intermediaries that are not shown. The shown components have been simplified in that, for example, only one mobile device 150 (or machine 120, adapter module 100, or server 130) is shown where many may be included. Finally, the order of the steps may be changed and some steps may be eliminated.

### ADAPTER MODULE

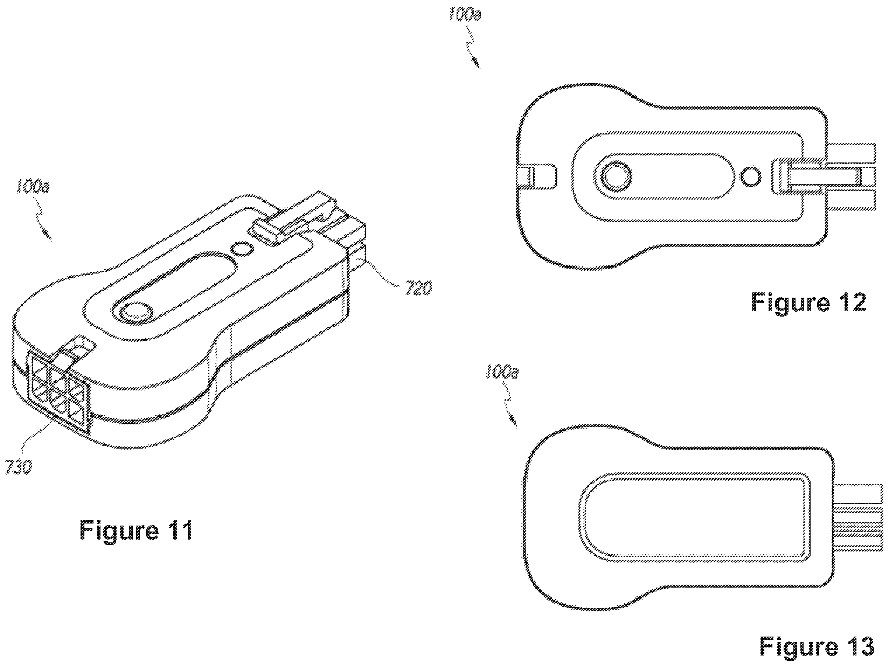

Figures 11-18 show views of adapter module 100a (referred to generally as adapter module 100). Adapter module 100 is a relatively low cost hardware component that is pre-configured to work with the industry standard multi-drop bus (MDB). On machines without MDB technology, the adapter module 100 can be configured or designed to work with other serial protocols or activate a switch. In essence the adapter module 100 simulates establishing payment on payment accepting unit 120 in much the same manner as other alternative forms of payment (e.g., cash).

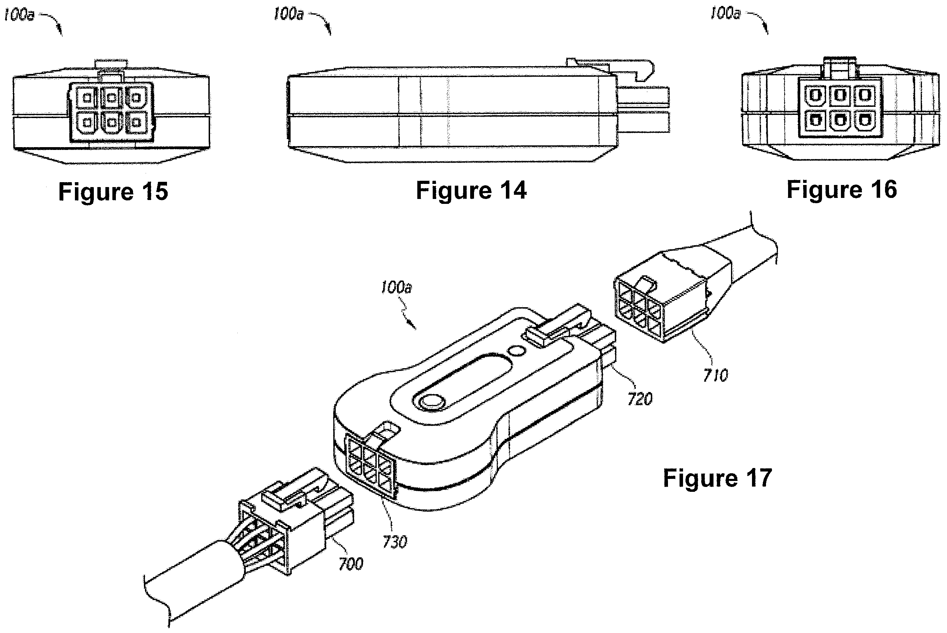

The shown adapter modules 100 are preferably designed to be used as an in-line dongle for in-line insertion within, for example, a MDB of a machine 120. The wire used in MDB technology uses male and female connection ends or adapters to allow the attachment of peripherals. In the case of a vending machine, the wire with the connection ends or adapters would be present to allow the attachment of a payment receiving mechanism (e.g., a coin mechanism). The MDB male and female adapters 700, 710 may be separated (as shown in Figures 17-18). The adapter module 100a in Figures 11 and 17-18 has a male adapter 720 and a female adapter 730. The adapter module 100a may be plugged (inserted) in serial ("in-line") with the wire. For example, the MDB female adapter 710 may be connected to the male adapter 720 of the adapter module 100 and the MDB male adapter 700 may be connected to the female adapter 730 of the adapter module 100. The resulting in-line configuration is shown in Figure 19. It should be noted that the adapter modules 100 are designed to allow pass-through communications so that if the mobile-device-to-machine payment processing system is not enabled (e.g., for a particular purchase or simply turned off) the MDB functions as though the adapter module 100 is not there and the machine 120 can function normally.

### HANDS-FREE MODE

Summarily, if it is available, a hands-free mode, from the user's perspective, would allow the user to approach a favorite payment accepting unit 120 and notice that the display (e.g., the displays 122 or 124 shown in Figure 19) associated with the payment accepting unit 120 shows funds available (e.g., the wallet balance), he would select the product or service using input mechanisms (e.g., buttons 126 or a touch screen display 124 shown in Figure 19) associated with the payment accepting unit 120, and he would retrieve his dispensed services or products.

During an initial handshake with the mobile device 150 (when the user is within range), the adapter module 100 reports to the mobile device 150 whether or not hands-free mode is available. If it is available, the installed mobile application 140 automatically connects to the payment accepting unit 120 without the user having to interact with the mobile device 150. The user observes that funds are available on the display 122, 124 of the payment accepting unit 120 and completes the purchase transaction as if cash was inserted in the machine 120 by inputting his selection on the payment accepting unit 120. The payment accepting unit 120 dispenses the product or service. After the selection is made, the change is returned to the mobile device 150.

Whether hands-free payment is available is determined by factors including, but not limited to whether if other mobile devices 150 are in range, if other adapter modules 100 are in range, if there are any alerts, if the payment trigger threshold is having wide variances and so deemed unstable, or if the payment accepting unit operator (e.g., a vending machine operator) has opted to disable hands-free mode for the payment accepting unit 120. In the latter instance, operators can disable via a maintenance mobile device 150, as well as through the operators' server 170 and/or the system management server 130.

Figure 3 is a table that shows considerations, conditions, or factors that may be used to determine whether the hands-free pay feature is available. Starting at the "Favorite?" column, this indicates whether the payment accepting unit 120 is a favorite machine. Preferably the hands-free pay feature is only available for use with "favorite" payment accepting units 120 (e.g., a vending machine at work or school). The "Alert" column has to do with whether there is some reason (e.g., there are too many users in range) that the hands-free pay feature should not work and, if there is such a reason, the user will be notified (alerted) and may be able to use the manual mode to resolve the alert and/or complete the transaction. Figure 3 shows situations in which a user is or is not able to make hands-free purchases from a machine 120 using a mobile application 140 on his mobile device 150. It should be noted that the shown interface is an example. For example, some of the features could be automated or pre-selected. (It should be noted that the left hand column, the "Tab" column, relates to whether the selected tab on the mobile application 140 is "all" or "favorite." Figures 10A-10D all show these tabs. Unlike the other columns in Figure 3, this column has more to do with the functionality and view of the application 140 than specifically with the hands-free feature. The tabs would allow a user to select whether he wanted to be alerted when he was in range of all payment accepting units 120 or just "favorite" payment accepting units 120 and the application 140 would show the appropriate view.)

Balance Display: An optional feature of the mobile-device-to-machine payment system that is particularly helpful in the hands-free mode (although it may be available in the manual mode and/or in a multiple-vend scenarios) is when the user's mobile device 150 sends "credit" to the payment accepting unit 120 (either via hands-free payment or through a manual swipe), the wallet balance is sent to the payment accepting unit 120 that is then displayed to the user on a display 122, 124 of the machine 120. This is particularly beneficial during hands-free mode when the user does not retrieve the mobile device 150 and, therefore, may not know the balance. Also, in a multiple-vend scenario the user would not have to calculate a remaining balance.

An example of a hands-free, multiple-vend scenario where a balance is displayed by the payment accepting unit 120, follows: The user has $5.00 in his/her virtual wallet as that is the amount that has been authorized (the AuthGrant being stored on the mobile device 150). The user walks up to the payment accepting unit 120 and $5.00 is displayed on the display 122, 124 of the payment accepting unit 120 since hands-free mode was enabled and credit was sent (e.g., via the short-range communication capability) to the payment accepting unit 120. The user makes a selection of $1.50 by interacting (e.g., pressing buttons) with the machine 120. The item (product or service) is dispensed and the "change" is "returned" (e.g., via the short-range communication capability) to the virtual wallet. But since the user is still standing in the payment zone 102, the remaining wallet balance of $3.50 is sent to the payment accepting unit 120 and displayed so that the user can now see that he/she has a $3.50 balance. (It should be noted that the authorized funds may remain on the machine 120 and not be transferred back to the mobile device 150 between transactions.) The user decides to purchase a $1.50 item, and the transaction is completed as usual (e.g., by interacting with the machine 120). Now the user is still standing in the payment zone 102 and he/she sees the wallet balance of $2.00 on the display 122, 124 of the payment accepting unit 120. The user decides that he/she does not wish to purchase anything else and simply walks away. As he/she walks out of the payment zone 102, the credit is cleared from the machine 120, but he/she is left with the knowledge that his wallet balance is $2.00 even though he/she never touched the mobile device 150. Communications between the payment accepting unit 120 and the adapter module 100 (via the mobile device 150) handle the accounting incidental to the transaction. The remaining balance ($2.00) is technically stored on the server 130, and may be reflected on the application 140 on the mobile device 150.

### MULTIPLE DISTINCT ZONES

As shown in Figures 1-2, the functions performed by the adapter module 100 can be divided into distinct zones: a first "communication zone" (e.g., "Bluetooth range" 106), a second "authorization zone" 104, and a third "payment zone" 102. The payment zone 102 is smaller than or equal to (overlapping completely) the authorization zone 104. Put another way, the payment zone 102 is within or coextensive with the authorization zone 104. The payment zone 102 is a subset of the authorization zone 104 with a ratio of the payment zone 102 to the authorization zone 104 ranging from 0.01:1 to 1:1. It is not necessarily a fixed ratio and can vary between different payment accepting units 120, different mobile devices 150, different users, and over time. While the zones 102, 104, 106 are depicted as having a uniform shape, the zones may not necessarily be uniform (or constant over time) in that the shape can vary. For example, the shape of the Bluetooth range 106 may vary depending on environmental conditions such as obstacles in the room and payment accepting unit 120 door/wall materials.

Bluetooth Range 106 (sometimes also herein called the "communication zone"): The outermost range is the Bluetooth range 106 (shown in Figures 1-2). This is the area in which the adapter module 100 is able to broadcast its presence. In most situations, the Bluetooth range 106 is a passive range in that no actual data is exchanged between the mobile device 150 and the adapter module 100. While in the Bluetooth range 106, the mobile device 150 monitors the RSSI (Received Signal Strength Indicator).

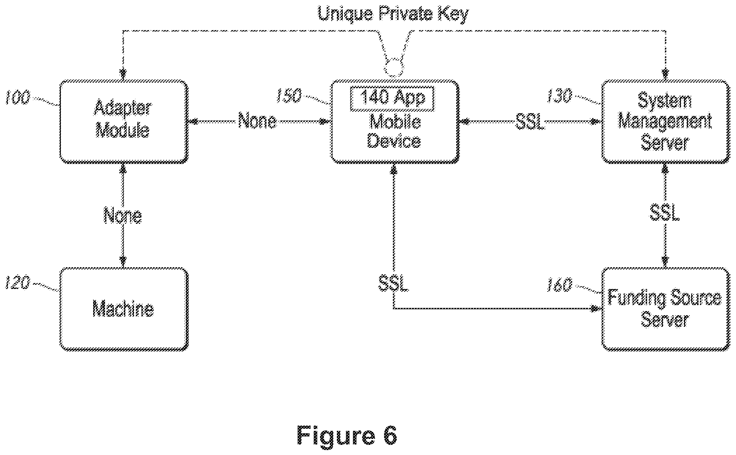

Authorization Zone 104: The middle region is the authorization zone 104 (shown in Figures 1-2). This is a computed area based on the RSSI. As mentioned, the mobile device 150 monitors the RSSI while it is in the Bluetooth range 106. When the RSSI reaches a certain predetermined threshold based on In-Range Heuristics, the mobile device 150 can be considered to be in the authorization zone 104. In the authorization zone 104 the mobile device 150 establishes a connection to the adapter module 100 (e.g., a Bluetooth connection (Figure 5) with SSL protection (Figure 6)) and informs the adapter module 100 of its presence. After a successful handshake with the adapter module 100, the mobile device 150 registers the adapter module 100 and the adapter module 100 requests an authorization to the server 130 via the mobile devices' network connection (e.g., a Wi-Fi or cellular connection (Figure 5) with SSL protection (Figure 6)). It is important to note the mobile device 150 and the adapter module 100 have a non-exclusive relationship at this point. The adapter module 100 may collect registrations for all mobile devices 150 that are within the authorization zone 104.

An authorization occurs in preparation for when the user enters the payment zone 102 (shown in Figures 1-2). An authorization expires in a set period of time (for example, five minutes), so if the mobile device 150 is still in the authorization zone 104 at the time of expiration, the adapter module 100 submits for and receives another authorization. This will continue for a set number of times (for example, the limit may be three times to limit cases of numerous authorizations for a mobile device that may remain in the authorization zone 104 for an extended period of time without completing a transaction). Should authorization fail (for instance if the limit had been reached) prior to the user entering the payment zone 102, the adapter module 100 will request authorization when the mobile device 150 enters the payment zone 102 (which adds a few seconds to the experience).

Payment Zone 102: As a user enters the payment zone 102, the mobile device 150 establishes exclusive control of the adapter module 100. Once established, any other user in the payment zone 102 is put into a "waiting" status.

In the payment zone 102, the payment can be triggered automatically if the payment processing system has and is in hands-free mode. In such instances, the mobile device 150 is running the application 140 in background mode and will send credit to the payment accepting unit 120 without any explicit user interaction. The user completes the transaction on the payment accepting unit 120 in much the same manner as if cash had been inserted into the payment accepting unit 120 to establish credit. After the user completes the transaction (that may include one or more purchases), details of the transaction are preferably returned to the mobile device 150 and server 130 in separate messages. The message to the server 130 is preferably encrypted with the adapter module's 100 private key (Figure 6) to ensure data integrity. As shown in Figure 7, the "private key" coded message (Encrypted VendDetails) is preferably sent via the mobile device 150. The message to the mobile device 150 may be sent solely for the purpose of closing the transaction. The transaction history and balance are updated server-side via the encrypted message sent to the server 130.

The other mode of operation is manual mode. In manual mode, the user launches the mobile device 150 and is able to swipe to send payment to the payment accepting unit 120. The user can also swipe back to cancel the payment. Like in hands-free mode, the purchase transaction is completed on the payment accepting unit 120 in the same manner as if cash were inserted into the payment accepting unit 120. The mobile device 150 is only used to send payment. Selection is made directly on the payment accepting unit 120.

Self-Calibrating Zone Threshold: A key, but optional feature, of the payment processing system is a self-calibrating payment zone RSSI threshold. Because RSSI can vary machine to machine, environment to environment, and device to device, having a fixed threshold at which payment is triggered can be problematic. The approach suggested herein is the creation of a self-calibrating threshold. When the user is interacting with the payment accepting unit 120 (such as when he makes his selection on the payment accepting unit 120), the payment accepting unit 120 notifies the adapter module 100 and the adapter module 100 logs the conditions such as RSSI, type of user mobile device 150, accelerometer data, and other information. It is at this point that it can be ascertained safely that the user is within arm's-length from the payment accepting unit 120 (by necessity the user is arm's-length because he is making some physical interaction with the payment accepting unit 120). This is the only point in the entire transaction in which it can be certain that the user is within arm's-length from the payment accepting unit 120.

Figure 4 shows a simplified set of steps involved when users enter the payment zone 102. Specifically, Figure 4 shows that credit is established 200 (this may have been done in the authorization zone 104, but if not it would be handled in the payment zone 102), that the user makes a selection using the machine 202, that the machine notifies the adapter module of the selection 204, that the adapter module (optionally) logs the RSSI 206, and that the purchase process(es) continues 208. Using the historically logged RSSI data, the adapter module 100 calculates one of several "average" RSSI using various mathematical models. This "average" could be a traditional average, a moving average, a weighted average, a median, or other similar summary function. The adapter module 100 could pre-process the historical data before running the function, such as to eliminate top and bottom data points, suspect data points, etc.

Optionally, during the handshake between the mobile device 150 and the adapter module 100, the information transmitted to the adapter module 100 may include, for example, the model of the mobile device 150. Using the received information pertaining to the mobile device models, the adapter module 100 can create multiple payment thresholds, one for each mobile device model. This allows for variances that may be inherent in different types of Bluetooth radios. An alternative to this method is for the adapter module 100 to broadcast a baseline payment zone threshold, and the mobile device 150 can use an offset from this baseline based on its specific model type. The payment zone thresholds (or baseline offsets) can be unique to specific types of mobile devices (e.g., by manufacturer, operating system, or component parts), models of mobile devices, or individual mobile devices (unique to each user).

In a typical scenario in which the payment zone threshold has been calibrated, the adapter module 100 advertises its presence along with the threshold at which it considers any mobile device 150 to be in the authorization zone 104. This is a one-way communication from adapter module 100 to mobile device 150. Once the mobile device 150 enters the authorization zone 104, there is a handshake that is established between the adapter module 100 and the mobile device 150. During this handshake, the mobile device 150 can share its model information with the adapter module 100, and the adapter module 100 can return the payment zone 102 threshold for that specific model.

Optionally, in addition to calibrating the payment zone threshold, the adapter module 100 can apply the self-calibrating model to the authorization zone 104 to calibrate the authorization zone threshold. As with the payment zone thresholds, the authorization zone thresholds can be unique to specific types of mobile devices, models of mobile devices, or individual mobile devices. In this scenario, the adapter module 100 would broadcast multiple thresholds by device type and the mobile device 150 would determine which threshold to apply (or alternatively broadcast a baseline and the mobile device 150 uses an offset based on its device model). Even in this scenario, the authorization zone 104 is a one-way communication.

Optionally, along with the threshold that is calculated (in the payment and/or the authorization zone(s)), a safety margin can be added to minimize scenarios in which a user is within range, but the mobile-device-to-machine payment processing system does not recognize it because the threshold may not have been reached. For example, if the calculated RSSI for an iPhone™ 5 on machine 4567 is -68 db, the mobile-device-to-machine payment processing system may add a safety margin of -5 db, and establish the threshold at -73 db. So when a user's phone is communicating with the adapter module 100 at an RSSI of -73 db or better, the mobile-device-to-machine payment processing system will allow the mobile device 150 to credit the payment accepting unit 120. The safety margin can be set on the server 130 and downloaded to the adapter module 100, or set on the mobile device 150, or set on the adapter module 100 itself.

Optionally, in the payment zone threshold, the mobile device 150 can use other data to determine when to cancel the exclusive control of the payment accepting unit 120, to identify when the user is moving out of the payment zone 102. External data could include accelerometer data from the mobile device 150. Using that data, the mobile device 150 can determine whether the user is standing relatively still in front of the payment accepting unit 120, or if the user is in motion - effectively walking away from the payment accepting unit 120.

### SIGNAL UNAVAILABILITY ADAPTATION

The mobile-device-to-machine payment processing system described herein uses a mobile device's 150 short-range communication technology (e.g., Bluetooth mechanisms) (shown as short-range communication capability 876 in Figure 21) and a mobile device's 150 long-range communications technology (e.g., cellular and/or Wi-Fi mechanisms) (shown as long-range communication capability 872 in Figure 21). The short-range communication capability 876 communicates with the adapter module's 100 short-range communication technology (e.g., Bluetooth mechanisms) (shown as short-range communication capability 776 in Figure 20). The long-range communication capability 872 communicates with the server's 130 long-range communications technology (e.g., cellular and/or Wi-Fi mechanisms) (shown as long-range communication capability 972 in Figure 22). The mobile device 150 (with a mobile application 140 thereon) acts as a communication bridge between the adapter module 100 (associated with a payment accepting unit 120) and the server 130. This process is described herein and works properly if there is cellular or Wi-Fi coverage within the payment zone 102.

One option if there is no cellular or Wi-Fi coverage within the payment zone 102 is to determine whether there is cellular or Wi-Fi coverage within the authorization zone 104 or the Bluetooth range 106. If there is, then the sizes of the zones 102, 104, 106 could be adapted and the timing could be adapted. For example, if the mobile devices 150 detected problems with the cellular or Wi-Fi coverage within the payment zone 102, the user could carry his mobile device 150 into the other zones (or the mobile device 150 could use short-range communication technology to communicate with other mobile devices 150 within the authorization zone 104 or the Bluetooth range 106) to determine whether the zones have cellular or Wi-Fi coverage. If they do have coverage, communication between the mobile device 150 and the server 130 can be advanced (conducted earlier when the mobile device 150 is further from the machine 120) or delayed (conducted later when the mobile device 150 is further from the machine 120). This can be thought of as changing the size or shapes of the zones 102, 104, 106. The timing would also have to be adjusted so that the authorization of funds (AuthGrant) does not expire before the user has a chance to make a purchase. It also means that balance updates to the server 130 may happen after the user has moved away from the machine 120 and has cellular or Wi-Fi coverage again.

Another option if there is no cellular or Wi-Fi coverage within any of the zones 102, 104, 106 is for the user to obtain authorization while outside of the zones in a place with cellular or Wi-Fi coverage. This may occur, for example, if a user knows that he will be going to a place with a payment accepting unit 120 equipped with an adapter module 100 (perhaps to a favorite payment accepting unit 120) that does not have (or rarely has) cellular or Wi-Fi coverage. A user may also use the mobile application 140 to query payment accepting units 120 in a given range (e.g., within 50 miles) or at a given location (e.g., at a campground or in a particular remote city) to determine whether there is cellular or Wi-Fi coverage within the zones 102, 104, 106. The user can then obtain pre-authorization from the server 130 using the mobile application 140. Again, the timing would also have to be adjusted so that the authorization of funds (AuthGrant) does not expire before the user has a chance to make a purchase. It also means that balance updates to the server 130 may happen after the user has moved away from the machine 120 and has cellular or Wi-Fi coverage again. A mobile-device-to-machine payment system having the ability to implement this option would be able to accept cashless payments without requiring any network connection near the payment accepting unit 120. In some implementations, the mobile-device-to-machine payment processing systems described herein is located in a remote location where no signal is available, therefore, can accept cashless payments.

As an example of a situation in which there might be no cellular or Wi-Fi coverage within any of the zones 102, 104, 106 of a particular payment accepting unit 120, the user (a teenager) may be traveling to a remote location to attend summer camp where there is no cellular or Wi-Fi coverage. The camp may have several payment accepting units 120 (e.g., a machine that creates a dedicated "hot spot" that requires payment for use, vending machines, or machines for renting equipment such as bikes, kayaks, or basketballs). The camp facility might notify parents that the mobile-device-to-machine payment system is available. The parents, while at home, could obtain authorization for a particular amount (that could be doled out a certain amount per day or limited to type of machine or location) to be authorized and "loaded" into the user's mobile device 150 and specify that the authorization will not expire for a certain period or until a certain date. Thereafter, while at camp, the user could use the mobile application 140 on his mobile device 150 in a manner similar to those discussed elsewhere herein. Short-range communications may be used for communications between the adapter modules 100 (associated with the machines 120) and users' mobile devices 150.

One subtle but powerful component of the payment processing system described herein is that it requires a long-range communication capability (e.g., an Internet or cellular network connection) only in the authorization zone 104 and only for the time period required to send the AuthRequest and receive the AuthGrant. Once a valid AuthGrant is received by the mobile device 150, the long-range communication capability (e.g., an Internet or cellular network connection) is not required by either the mobile device 150 or the adapter module 100 in the payment zone 102 as long as the AuthGrant is valid (unexpired). This mechanism allows the system to seamlessly handle authenticated transactions in (temporary) offline mode, with the deferred acknowledgement and transaction messages performing the bookkeeping and cleanup when network connection is regained. The alternatives described above provide a unique way to artificially extend the authorization zone to include any location where the mobile device 150 can communicate with the server 130.

### MULTIPLE USER RESOLUTION

As shown in Figure 2, in one practical scenario, multiple users are in the zones 102, 104, 106. As shown in Figure 2, users 1, 2, and 3 are in the payment zone 102 near the machine 120; users 5 and 6 are shown as positioned between the authorization zone 104 and the Bluetooth range 106; users 4 and 7 are in the Bluetooth range 106, user 10 is positioned on the edge of the Bluetooth range 106; and users 8 and 9 are positioned outside of Bluetooth range 106. In some implementations, the mobile-device-to-machine payment processing system manages and resolves issues pertaining to multiple users.

Users 4 and 7 are within the Bluetooth range 106 and the user 10 is either entering or leaving the Bluetooth range 106. Within the Bluetooth range 106 the users' mobile devices 150 are able to see the adapter module's 100 advertisement. In this zone, the mobile device 150 preferably does not initiate a connection. The adapter module 100 is preferably unaware of the users in the Bluetooth range 106. All the adapter module 100 is doing is advertising its presence to any multitude of users that may be in Bluetooth range 106.

The adapter module 100 begins to log users as the users (and their respective mobile devices 150) enter the authorization zone 104 (shown in Figure 2 as users 5 and 6). At this point, there is a non-exclusive connection initiated by the mobile device 150 to the adapter module 100. It does a handshake (e.g., to exchange information needed to obtain authorization and, optionally, to log information needed for a self-calibrating authorization zone threshold) and the mobile device 150 contacts the server 130 for an authorization (e.g., sending an AuthRequest and receiving an AuthGrant). The adapter module 100 registers all mobile devices 150 that have requested and received AuthGrants. The adapter module 100 continues communicating with any other mobile device 150 that enters the authorization zone 104. After initial contact, the adapter module 100 may provide the mobile device 150 with a deferral delay of when to check back in with the adapter module 100 allowing opportunity for other mobile devices 150 to communicate with the adapter module 100.

If there is only one user in the payment zone 102, a purchase transaction may be performed. If there are multiple users in the payment zone 102, the mobile-device-to-machine payment system must handle the situation.

One optional solution for handling the situation of the multiple users in the payment zone 102 is queuing users in the payment zone 102. Once any mobile device 150 enters the payment zone 102, it establishes exclusivity to a particular mobile device 150 (e.g., in a first-come-first-serve manner). Technically, however, the adapter module 100 is not establishing an exclusive connection to the mobile device 150. The adapter module 100 can still perform a round-robin poll and communicate with and advertise to other mobile devices 150. Instead, the adapter module 100 establishes a queue prioritized by RSSI and time (e.g., who was first and whether the authorization has expired) and it notifies (e.g., alerts) other mobile devices 150 to wait. The earliest valid (unexpired) authorization takes precedence when there is any tie in the RSSI. Otherwise, for example, the strongest average RSSI takes priority. Preferably the queue is not a static measure of the RSSI but an averaged measure over the period of time in the queue. This compensates for a scenario in which a user may be walking around in the queue and then shows up at the payment accepting unit 120 just as the previous user is finishing. If another user was also in the payment zone 102 and stood there the entire time, but may have newer authorization, he could win out.

Anytime that the adapter module 100 cannot determine exactly which user is in the payment zone 102 in front of the payment accepting unit 120, the adapter module 100 will disable hands-free payment. The mobile device 150 will send an alert to the user and he can use swipe to pay (manual mode). All users in payment zone 102 will show "Connected" and the first to swipe payment to the payment accepting unit 120 then locks out other users.

### MULTIPLE MODULE RESOLUTION

In the scenario where there are multiple modules present, determining which payment accepting unit 120 a user is in front of can be a challenge. In some implementations, the mobile-device-to-machine payment processing system described herein allows adapter modules 100 to communicate to other adapter modules 100 in range via Bluetooth. Each user receives authorization grants for specific payment accepting units 120. This means if there are multiple adapter modules 100 within the same authorization zone 104, there will be multiple authorization grants for the user. When the user enters the payment zone 102, it can be difficult to differentiate which payment accepting unit 120 the user is in front of if the payment zones 102 overlap.

To solve this problem, when the user enters the payment zone 102, the adapter modules 100 communicate with each other to determine the RSSI for the particular user (based on the signal from his mobile device 150) to triangulate which adapter module 100 (and the associated payment accepting unit 120) is closer to the user. Optionally, the intermodule communications can restrict the user to establishing an exclusive connection with only one payment accepting unit 120.

Optionally, when the user connects to a payment accepting unit 120, the mobile device 150 can send a communication to the payment accepting unit 120 for momentary display to the user on the display 122, 124 of the payment accepting unit 120. For example, the mobile device 150 can send a communication (e.g., "connected" or "Fred's Mobile Device Connected") to the payment accepting unit's display 122, 124 for a predetermined period of time (e.g., 1-3 seconds) so when the user is in payment zone 102, it is clear which payment accepting unit 120 the user is connected to prior to making a purchase (either in hands-free or manual mode).

In addition, when the user is in manual mode, the mobile device 150 can display (e.g., on the touch screen 152 as shown in Figures 10A-10D) a visual indication of the payment accepting unit 120 (e.g., a picture and/or a payment accepting unit ID of the payment accepting unit 120) for visual confirmation. If the user is in manual mode, the user can manually change the payment accepting unit 120.

### DESCRIPTIVE SCENARIO

Figure 7, Figures 8A-8G, and 9A-9E (as well as other figures) can be used to understand a detailed scenario of the mobile-device-to-machine payment processing system described herein. A flow of communications and steps are loosely described below with reference to these (and other figures). It should be noted that alternative scenarios could include, for example, a modified order of the steps performed.

Prior to vending transactions, a user downloads a mobile application 140 onto his mobile device 150, creates an account, and configures a funding source via, for example, a funding source server 160. A funding source may be, for example, a debit card, a credit card, campus cards, rewards points, bank accounts, payment services (e.g., PayPal™) or other payment option or combination of payment options known or yet to be discovered. The funding sources may be traditional and/or nontraditional payment sources that are integrated into the ecosystem described herein and then used indirectly as a source of funds. Funds from the funding source are preferably held on the server 130 such that when an AuthRequest is received by the server 130, the server 130 can send an AuthGrant authorizing funds for a purchase.

The user can specify one or more "favorite" adapter module(s) 100 (that has a one-to-one relationship to the payment accepting unit 120) that he may visit regularly, such as a vending machine at school or work. Favorite adapter modules 100 appear on a prefiltered list and allow for additional rich features such as hands-free payment.

The payment accepting unit 120 may be equipped with an adapter module 100 that is constantly advertising its availability via Bluetooth (or other "signals," "communications," and/or "transmissions"). This ongoing advertising and scanning for adapter modules is shown in Figure 8A. As shown, the mobile device 150 is continuously scanning for any adapter module 100 within Bluetooth (or other "signal," "communication," and/or "transmission") range. When the user is within range of that adapter module 100, the mobile device 150 tracks and monitors the signal strength until a predetermined "authorization zone" threshold is achieved.

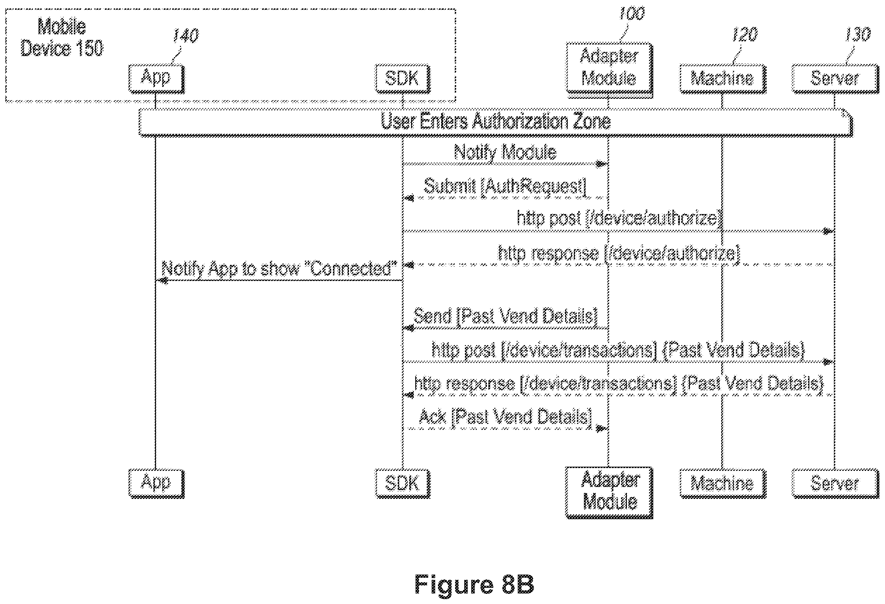

Figures 8B and 9A generally show that when the authorization zone threshold is reached, the mobile device 150 enters the authorization zone (block 302) and registers the adapter module 100. The mobile device 150 connects to the server 130 (block 304). The application 140 on the mobile device 150 creates a request for authorization (AuthRequest) and passes the AuthRequest to the server 130 using appropriate communication technology (e.g., GSM, CDMA, Wi-Fi, or the like) (block 306). The server 130 responds with an authorization grant (AuthGrant) encrypted with the specific adapter module's private key (block 306). This authorization token may minimally include the User identifier (ID), Apparatus ID (for the adapter module 100), authorization amount, and expiration time. The mobile device 150 receives the AuthGrant from the server 130, and retains it until the mobile device 150 is ready to issue payment to an adapter module 100. The mobile device 150 collects all pending AuthGrants that may be one or more depending on how many adapter modules 100 are in-range. Unused AuthGrants that expire are purged from the mobile device 150 and the server 130. It is important to note that the mobile device 150 is unable to read the AuthGrant because it is encrypted with the adapter module's unique private key that is only known to server 130 and adapter module 100. This provides a preferred key element of security in the system as the adapter module 100 only trusts AuthGrants that are issued by the server 130, and the AuthGrants cannot be read or modified by the mobile device 150 or any other party in between the server and the adapter module 100. Additional mobile devices 150 may enter the authorization zone 104 (block 308).

As the user approaches a specific adapter module 100, the user enters the payment zone 102 and an event threshold is triggered based on heuristics performed by the mobile device 150. Blocks 310 and 312 show the loop steps of waiting for a mobile device 150 from the authorization zone 104 to enter the payment zone 102. If the user leaves the authorization zone 104 without entering the payment zone 102, the adapter module 100 returns to advertising its presence (block 300).

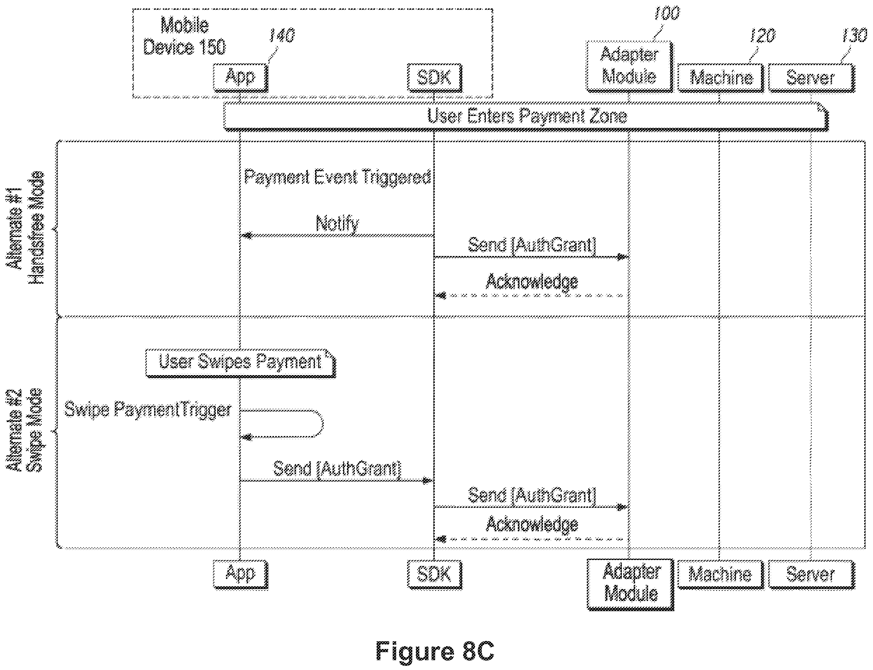

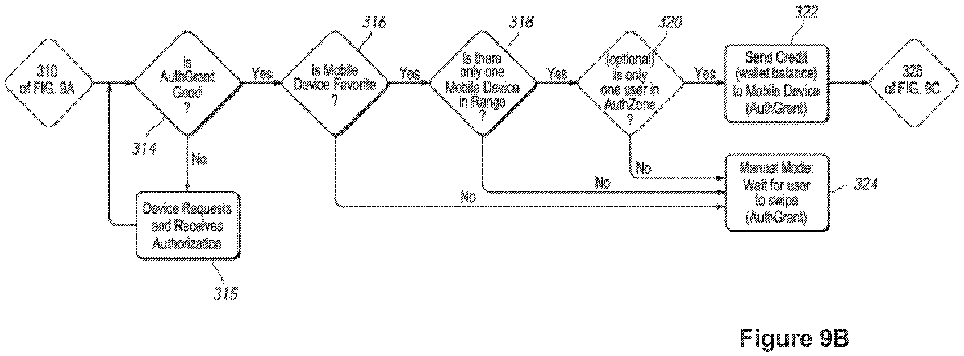

Figures 8C and 9B generally show the user entering the payment zone. The mobile device 150 verifies that it has an unexpired and valid AuthGrant. If the AuthGrant is not good, it may be requested again, repeating the Authorization Request process (block 315). If the AuthGrant is good, the mobile device 150 sends the valid AuthGrant (including the wallet balance (block 322)) to the adapter module 100 to initiate a transaction. The mobile device 150 may issue the AuthGrant automatically without specific user interaction if the hands-free mode is supported (and the device is a favorite (block 318), there is only one device in the payment zone 102 (block 318), and (optionally) there is only one user in the authorization zone 104 (block 320). If any of these factors are not present, the mobile device 150 will prompt and/or wait for the user to begin the transaction manually (block 324).

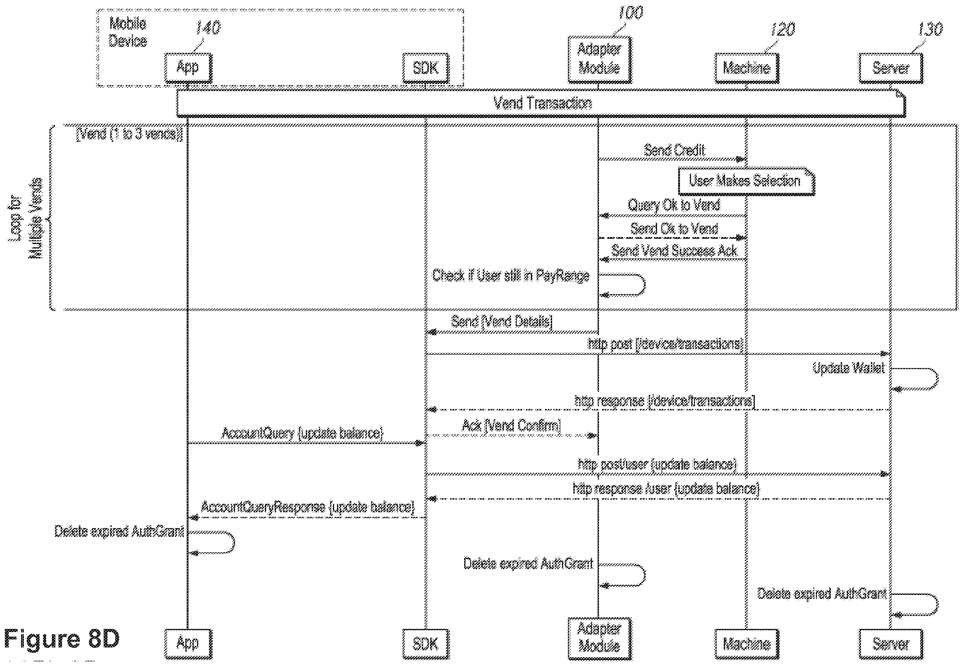

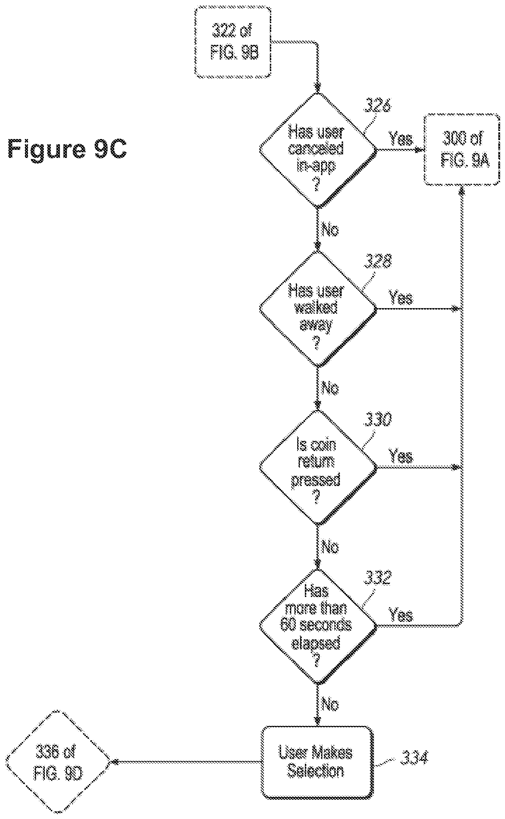

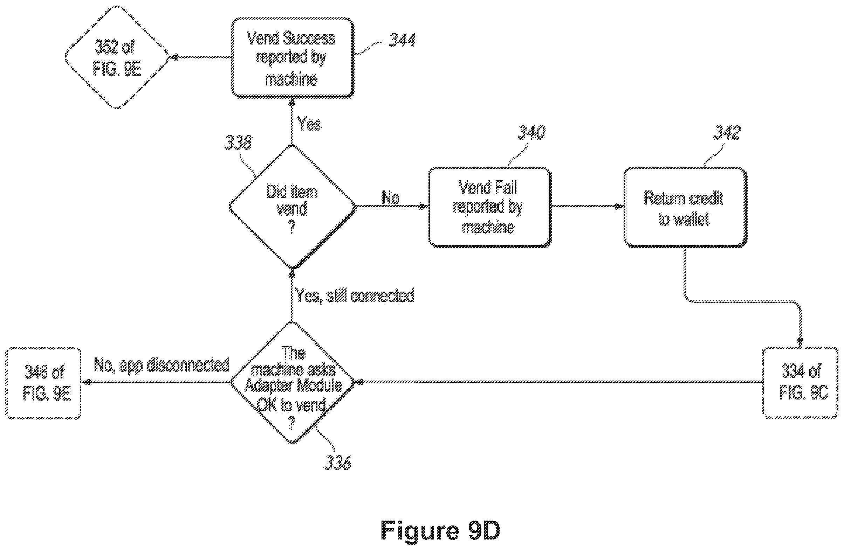

Figures 8D, 9C, and 9D generally show the transaction process. As shown in Figure 9C, the adapter module 100 runs through a series of questions to determine if there are any issues that would prevent vending including: has the user canceled in-app? (block 326), has the user walked away? (block 328), is the coin return pressed? (block 330), has more than a predetermined period of time elapsed? (block 332). If the answer to any of these questions is "yes," the transaction does not proceed. If the answers to all of these questions is "no," the user makes a selection (block 334) on the payment accepting unit 120 in the same or similar manner as compared to if cash or credit were presented to the payment accepting unit 120. If the machine 120 is able to vend (block 336), it attempts to release the product. If the vend fails (block 338) it is reported by the machine (block 340) and a credit is returned to the virtual wallet (block 342). If the vend is successful (block 338) it is reported by the machine (block 344). Put another way, after the transaction is complete, the adapter module 100 returns to the mobile device 150 the details of the transaction as well as an encrypted packet containing the vend details to be sent to the server 130 via the mobile device 150. Optionally, the adapter module 100 can pass additional information not directly related to the transaction such as payment accepting unit health, sales data, error codes, etc.

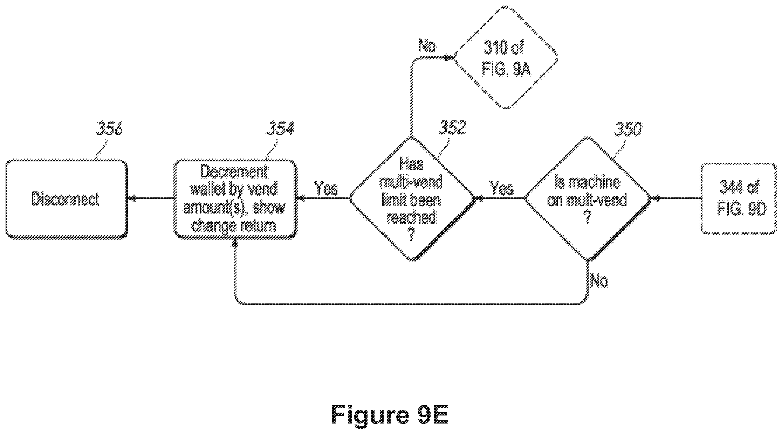

Figures 8D and 9E generally show the multi-vend function. If the machine has enabled multi-vend capabilities (block 350) and the multi-vend limit has not been reached, the process returns to the question of whether the user is in the payment zone (block 310 of Figure 9A). If the machine does not have enabled multi-vend capabilities (block 350) or the multi-vend limit has been reached, the wallet is decremented by the vend amount(s) and "change" is returned to the virtual wallet (block 354) and the process ends (block 356).

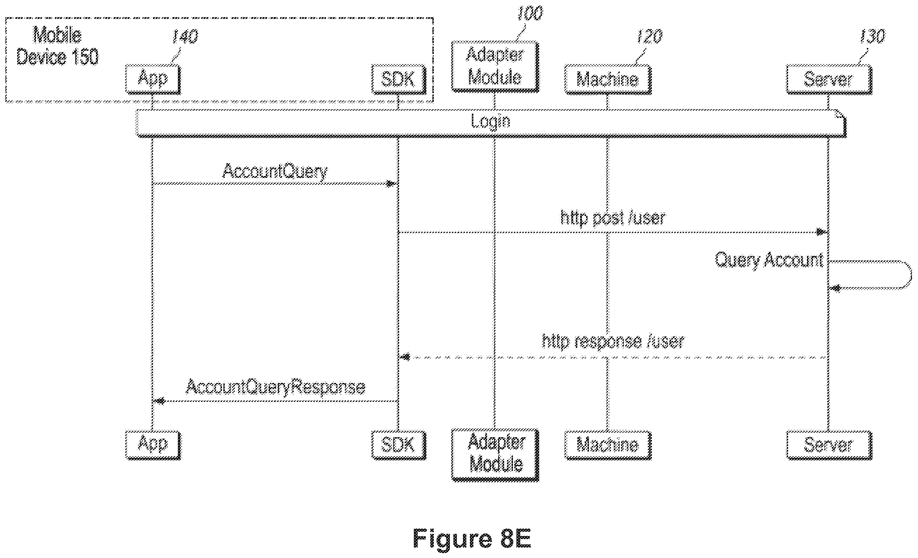

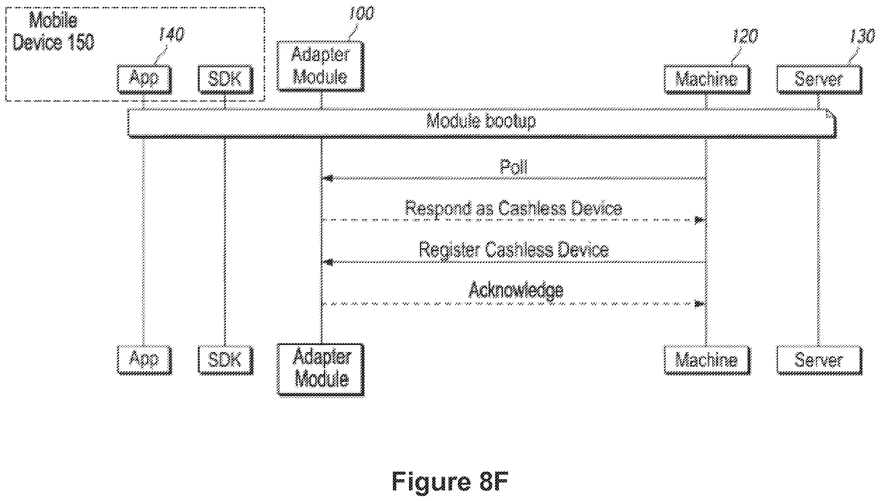

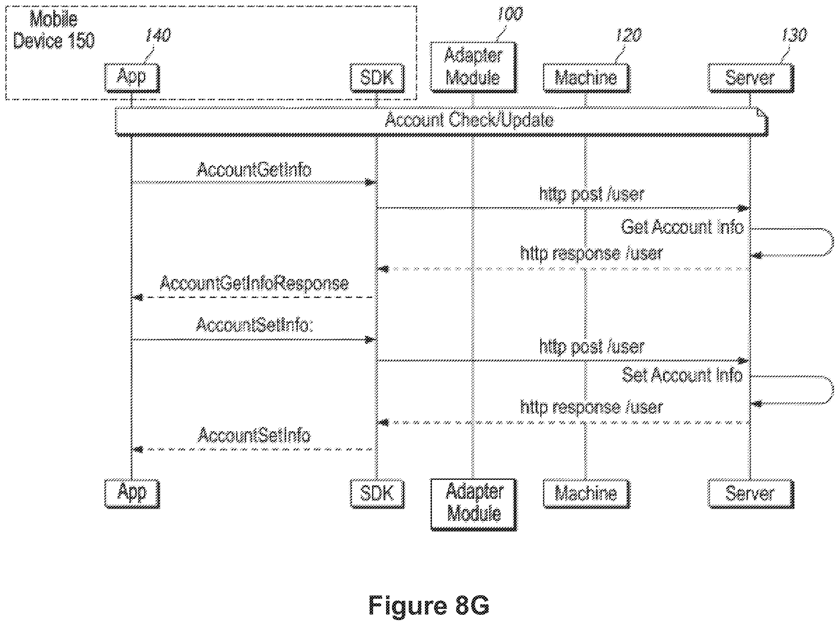

Figure 8E is a schematic flow diagram of an example login process. Figure 8F is a schematic flow diagram of an example boot-up process. Figure 8G is a schematic flow diagram of an example account check/update process.

Several of the figures are flow charts (e.g., Figures 9A-9E) illustrating methods and systems. It will be understood that each block of these flow charts, components of all or some of the blocks of these flow charts, and/or combinations of blocks in these flow charts, may be implemented by software (e.g., coding, software, computer program instructions, software programs, subprograms, or other series of computer-executable or processor-executable instructions), by hardware (e.g., processors, memory), by firmware, and/or a combination of these forms. As an example, in the case of software, computer program instructions (computer-readable program code) may be loaded onto a computer to produce a machine, such that the instructions that execute on the computer create structures for implementing the functions specified in the flow chart block or blocks. These computer program instructions may also be stored in a memory that can direct a computer to function in a particular manner, such that the instructions stored in the memory produce an article of manufacture including instruction structures that implement the function specified in the flow chart block or blocks. The computer program instructions may also be loaded onto a computer to cause a series of operational steps to be performed on or by the computer to produce a computer implemented process such that the instructions that execute on the computer provide steps for implementing the functions specified in the flow chart block or blocks. Accordingly, blocks of the flow charts support combinations of steps, structures, and/or modules for performing the specified functions. It will also be understood that each block of the flow charts, and combinations of blocks in the flow charts, may be divided and/or joined with other blocks of the flow charts without affecting the scope of the invention. This may result, for example, in computer-readable program code being stored in whole on a single memory, or various components of computer-readable program code being stored on more than one memory.

### ADDITIONAL IMPLEMENTATIONS

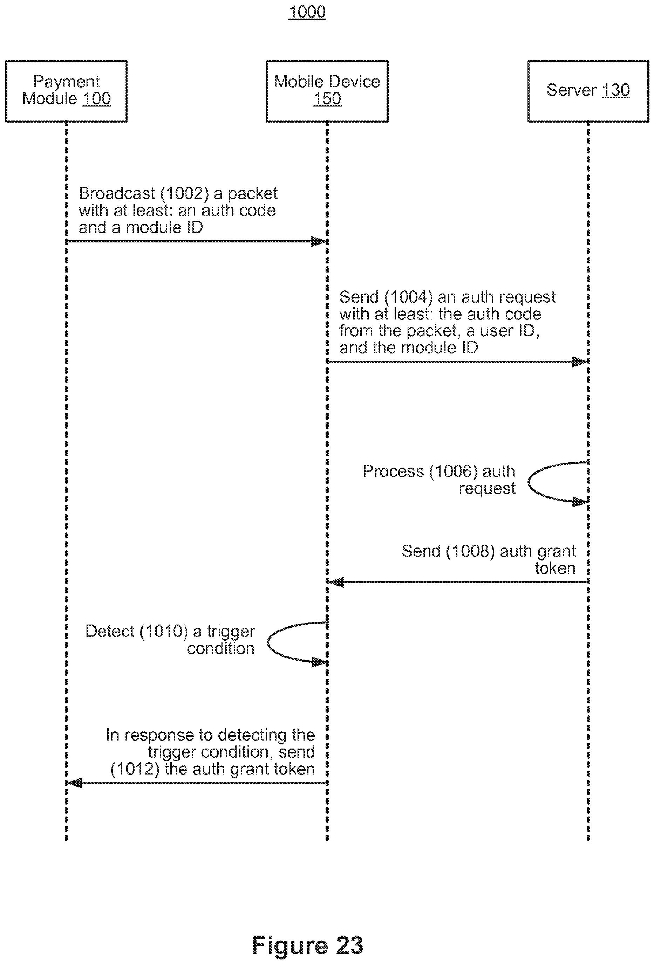

Figure 23 illustrates a schematic flow diagram of a process 1000 of authenticating a user to perform a transaction in the payment processing system in accordance with some implementations. In some implementations, the payment processing system includes one or more payment modules 100 (e.g., each associated with a respective payment accepting unit 120 such an automatic retailing machine for dispensing goods and/or services), one or more mobile devices 150 (e.g., each executing the application 140 for the payment processing system either as a foreground or background process), and the server 130. The server 130 manages the payment processing system and, in some cases, is associated with an entity that supplies, operates, and/or manufactures the one or more payment modules 100. For brevity, the process 1000 will be described with respect to a respective payment module 100 and a respective mobile device 150 in the payment processing system.

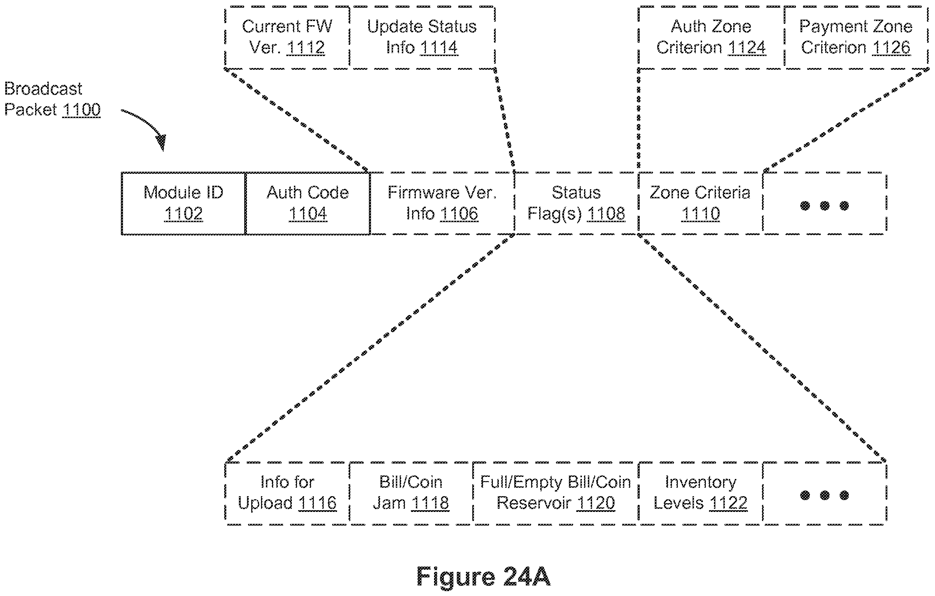

The payment module 100 broadcasts (1002), via a short-range communication capability (e.g., BLE), a packet of information (sometimes also herein called "advertised information"). The packet of information at least includes an authorization code and an identifier associated with the payment module 100 (module ID). In some implementations, the packet of information further includes a firmware version of the payment module 100 and one or more status flags corresponding to one or more states of the payment module 100 and/or the payment accepting unit 120. The information included in the packet broadcast by the payment module 100 is further discussed below with reference to Figure 24A.

In some implementations, the payment module 100 sends out a unique authorization code every X seconds (e.g., 100 ms, 200 ms, 500 ms, etc.). In some implementations, the unique authorization codes are randomly or pseudo-randomly generated numbers. In some implementations, the payment module 100 stores broadcasted authorization codes until a received authorization grant token matches one of the stored authorization codes. In some implementations, the payment module 100 stores broadcasted authorization codes for a predetermined amount of time (e.g., Y minutes) after which time an authorization code expires and is deleted. In some implementations, the authorization code is encrypted with a shared secret key known by the server 130 but unique to the payment module 100. In some implementations, the payment module 100 initializes a random number and then the authorization codes are sequential counts from this random number. In such implementations, the payment module 100 stores the earliest valid (unexpired) counter without a need to store every valid authorization code. In some implementations, the authentication code included in the broadcast packet of information is a hash value of the randomly or pseudo-randomly generated number or the sequential number.

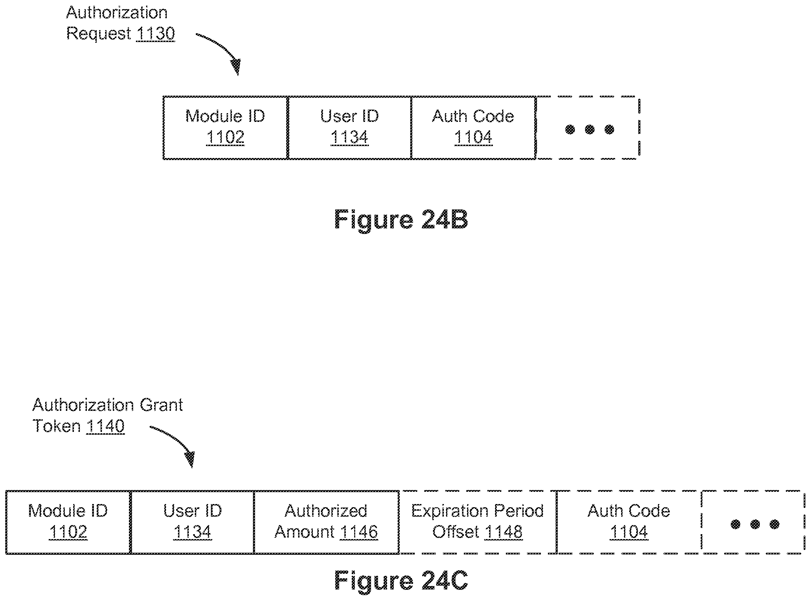

The mobile device 150 receives the broadcasted packet of information, and the mobile device 150 sends (1004), via a long-range communication capability (e.g., GSM, CDMA, Wi-Fi, or the like), an authorization request to the server 130. For example, an application 140 that is associated with the payment processing system is executing as a foreground or background process on the mobile device 150. In this example, the application 140 receives the broadcasted packet of information when the mobile device 150 is within the communication zone of the payment module 100 (i.e., BLE range) and either automatically sends the authorization request to the server 130 or sends the authorization request to the server 130 when the mobile device 150 is within the authorization zone of the payment module 100. In some implementations, the broadcasted packet of information includes a baseline authorization zone threshold (i.e., an authorization zone criterion) indicating a baseline RSSI that the mobile device 150 (or the application 140) is required to observe before being within the authorization zone of the payment module 100. In some implementations, the mobile device 150 (or the application 140) offsets the baseline authorization zone threshold based on the strength and/or reception of the short-range communication capability (e.g., BLE radio/transceiver) of the mobile device 150. In some implementations, the authorization request at least includes the authorization code which was included in the broadcasted packet of information, an identifier associated with the user of the mobile device 150 or the user account under which the user of the mobile device 150 is logged into the application 140 (user ID), and the identifier associated with the payment module 100 (module ID). In some implementations, the authentication code included in authorization request is the hash value in cleartext. The authorization request is further discussed below with reference to Figure 24B.

After receiving the authorization request, the server 130 processes (1006) the authorization request. In some implementations, the server 130 decrypts the authorization code included in the authorization request with the shared secret key corresponding to the payment module 100. In some implementations, the server 130 determines whether the user associated with the user ID in the authorization request has sufficient funds in his/her account for the payment processing system to perform a transaction at the machine 120 that is associated with the payment module 100 corresponding to the module ID in the authorization request.

The server 130 sends (1008), via a long-range communication capability (e.g., GSM, CDMA, Wi-Fi, or the like), an authorization grant token to the mobile device 150. In some implementations, the server 130 does not send the authorization grant token if the authorization code in the authorization request cannot be decrypted with the shared secret key corresponding to the payment module 100 (e.g., the authorization code is corrupted or hacked). In some implementations, the server 130 does not send the authorization grant token if the user associated with the user ID in the authorization request does not have sufficient funds in his/her account. In some implementations, in addition to the authorization grant token, the server 130 sends a message directly to the mobile device 150 which is not encrypted with the shared secret key corresponding to the payment module 100. After receiving the message, the mobile device 150 displays an appropriate message to the user such as insufficient balance or declined authorization. In some implementations, the server 130 sends an authorization grant token for an amount equal to zero; in which case, the payment module 100 interprets this as a declined or failed authorization which can result for any number of reasons including, but not limited to, insufficient balance or credit.

The mobile device 150 receives the authorization grant token, and, subsequently, the mobile device 150 detects (1010) a trigger condition. In some implementations, the mobile device 150 (or the application 140) detects the trigger condition via the hand-free mode (e.g., upon entrance into the payment zone of the payment module 100) or manual mode (e.g., interacting with the user interface of the application 140 to initiate a transaction with the payment accepting unit associated with the payment module 100).

In some implementations, unused authorization grants (e.g., if there was no trigger condition or it expired) are canceled by the mobile device 150 by sending a cancellation message to the server 130 corresponding to the unused authorization grant. In some implementations, the server 130 denies or limits the number of authorization grants sent to the mobile device 150 until it has received transaction information or cancellation of authorization outstanding authorization grants sent to the mobile device 150.

In response to detecting the trigger condition, the mobile device 150 sends (1012), via a short-range communication capability (e.g., BLE), the authorization grant token to the payment module 100. Subsequently, the machine 120 displays credit to the user (e.g., via one of the displays 122 or 124 shown in Figure 19) and the user interacts with the input mechanisms of the machine 120 (e.g., via the buttons 126 or a touch screen display 124 shown in Figure 19) to purchase products and/or services.

Figure 24A illustrates a block diagram of a packet 1100 of information broadcast by the payment module 100 (e.g., in step 1002 of the process 1000 in Figure 23) in accordance with some implementations. In some implementations, the packet 1100 at least includes: module ID 1102 and authorization code 1104. In some implementations, the packet 110 additional includes: a firmware version 1106 and one or more status flags 1108.

In some implementations, the module ID 1102 is a unique identifier corresponding to the payment module 100 (sometimes also herein called the "adapter module 100") that broadcast the packet 1100.

In some implementations, the authorization code 1104 is a hash value in cleartext. In some implementations, the payment module 100 randomly or pseudo-randomly generates a number or determines a sequential number (*See* step 1002 of process 1000 in Figure 23) and performs a predetermined hash function (e.g., SHA-256) on the number to produce the hash value as the authorization code 1104. In some implementations, the authorization code 1104 is a unique code that is encrypted with a secret encryption key corresponding to the payment module 100. The secret encryption key is shared with the server 130, which enables the server 130 to decrypt the authorization code 1104 and encrypt the authorization grant token but not the mobile device 150. In some implementations, the encryption between server 130 and payment module 100 is accomplished by two pairs of public/private keys.

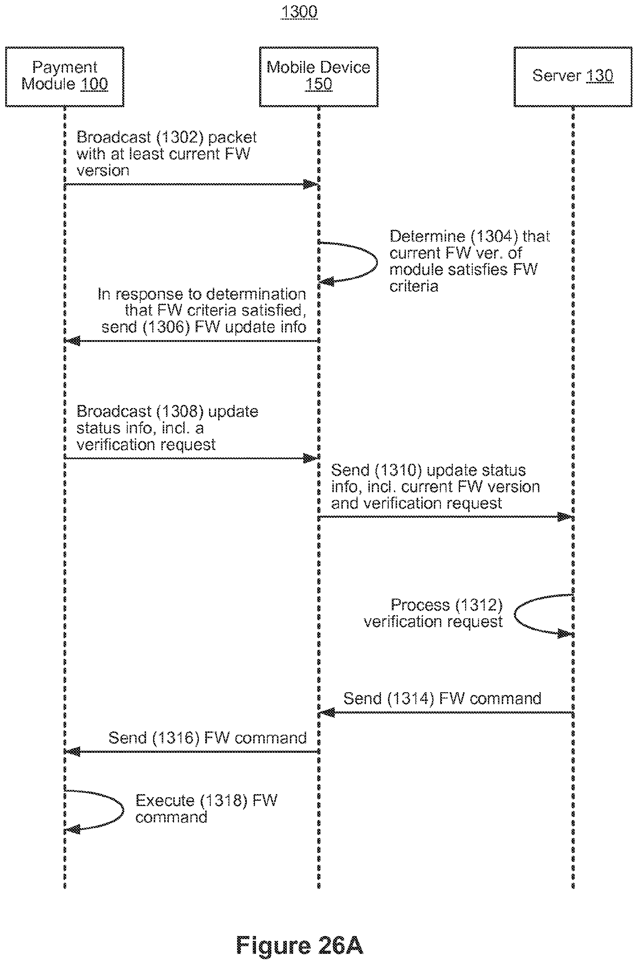

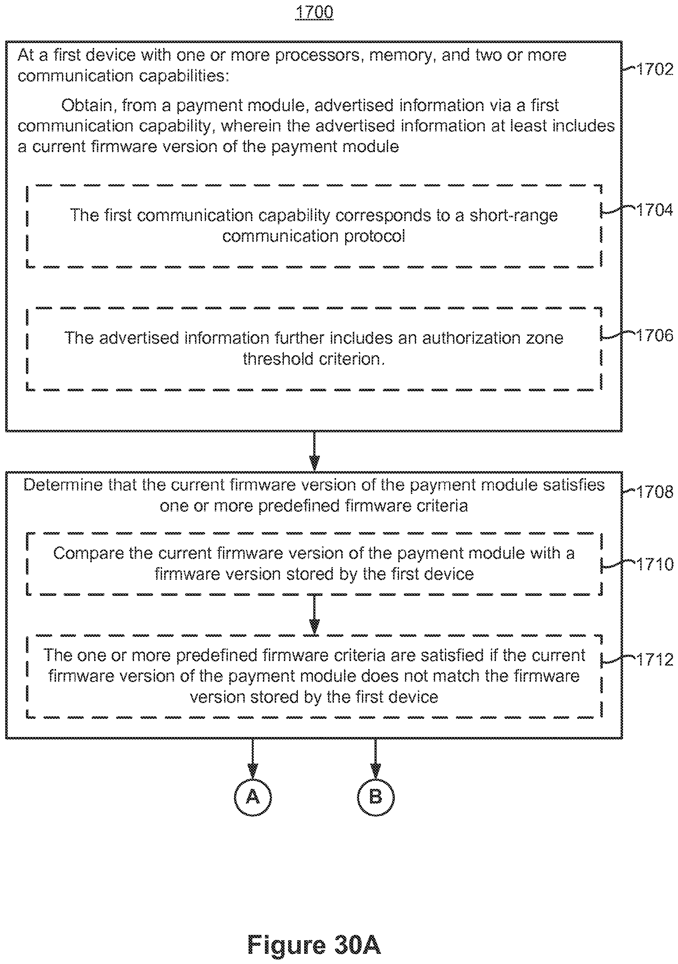

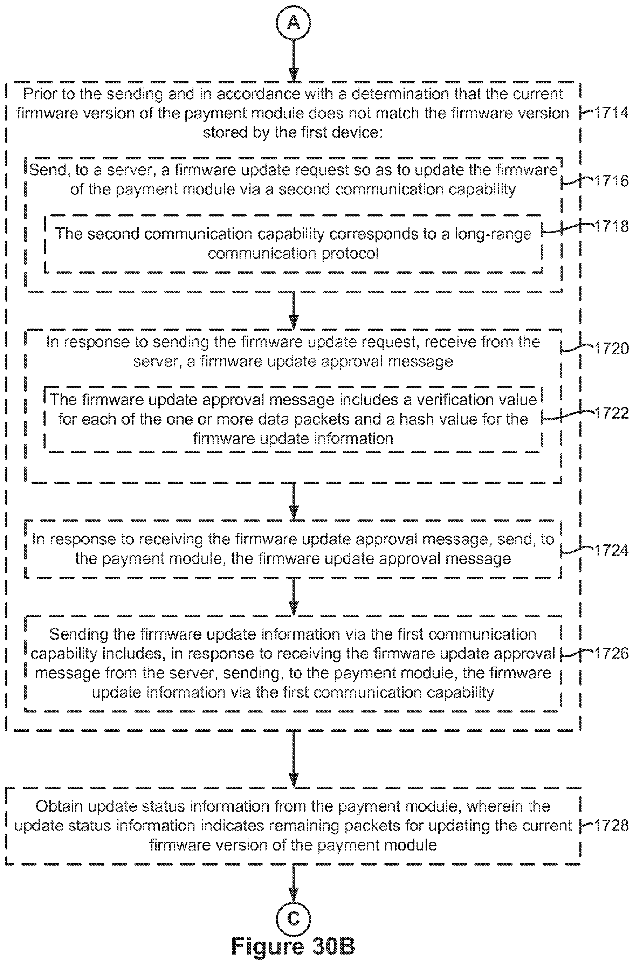

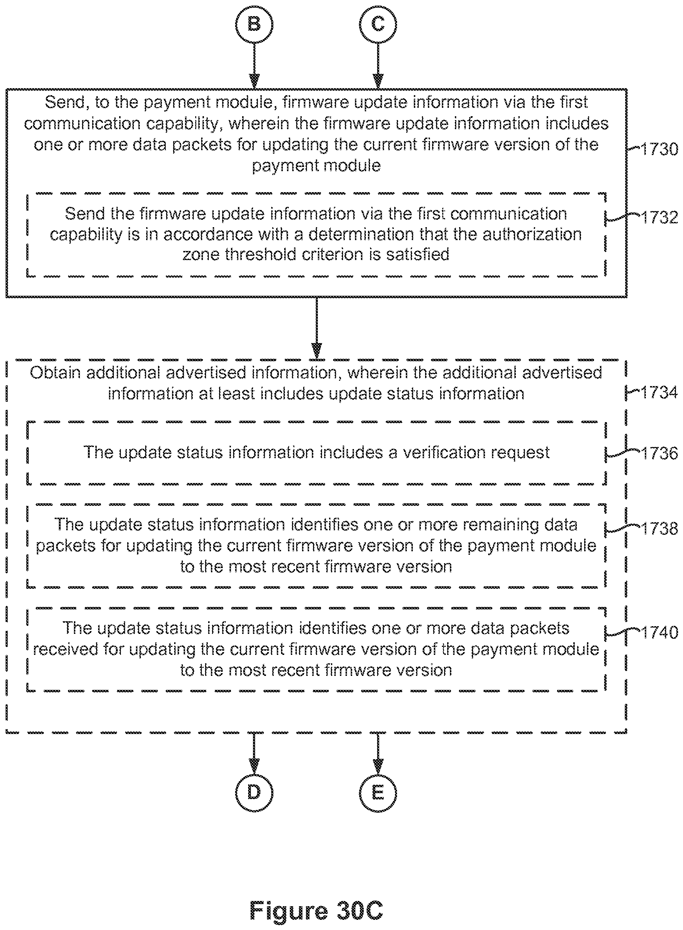

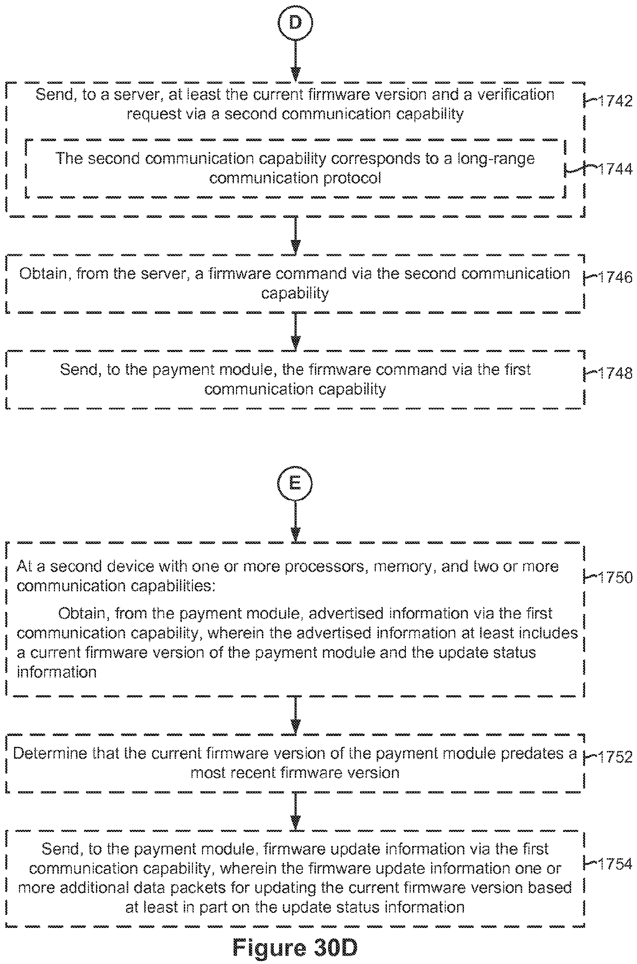

In some implementations, the firmware version information 1106 identifies a current firmware version 1112 of the payment module 100. In some implementations, the firmware version information 1106 also includes update status information 1114 indicating one or more packets received by the payment module 100 to update the firmware or one or more packets needed by the payment module 100 to update the firmware. See Figures 26A-26B and 30A-30D and the accompanying text for further discussion regarding updating the firmware of the payment module 100.

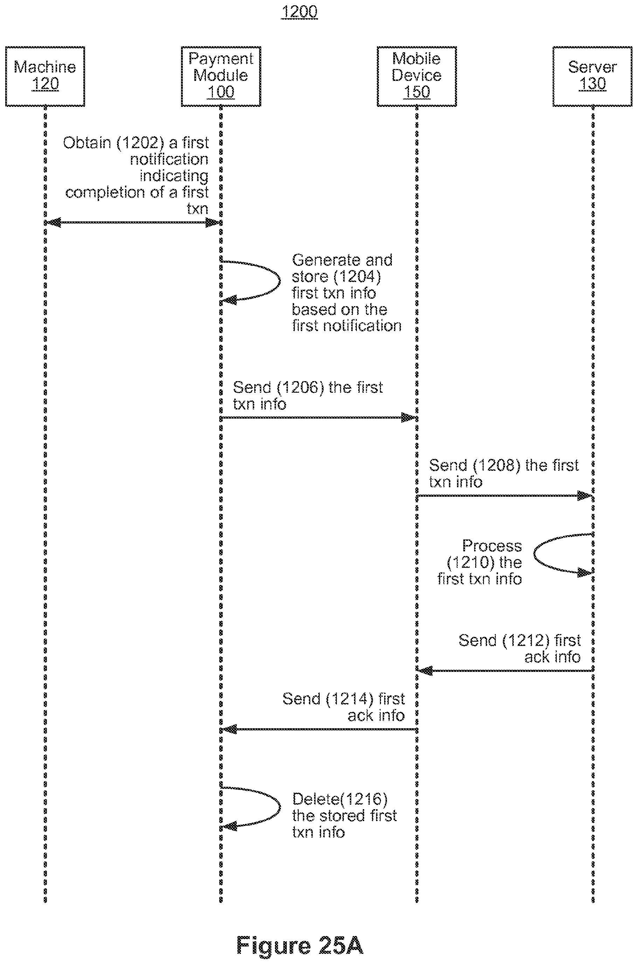

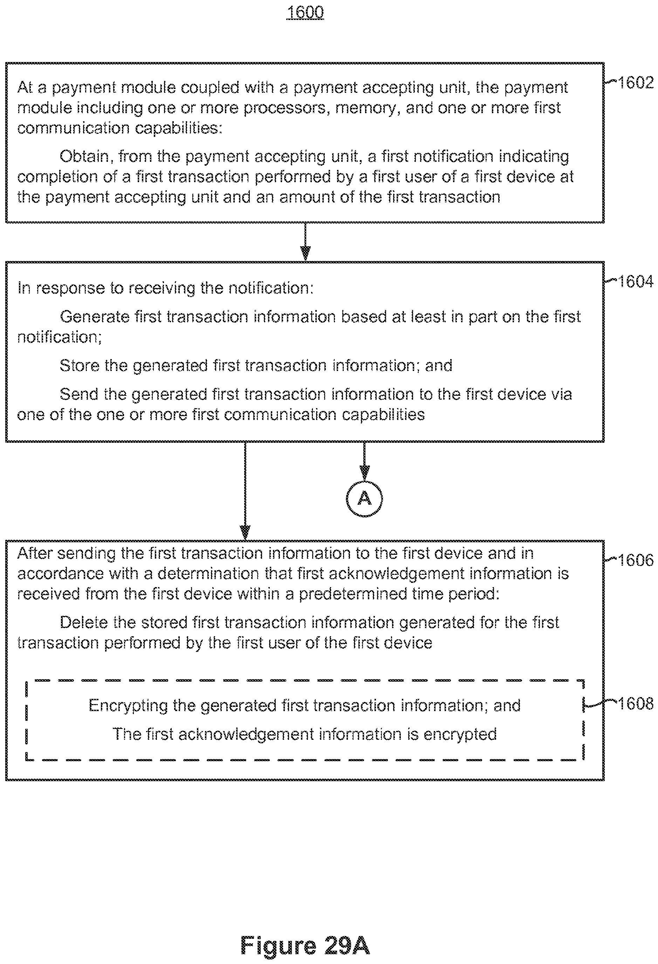

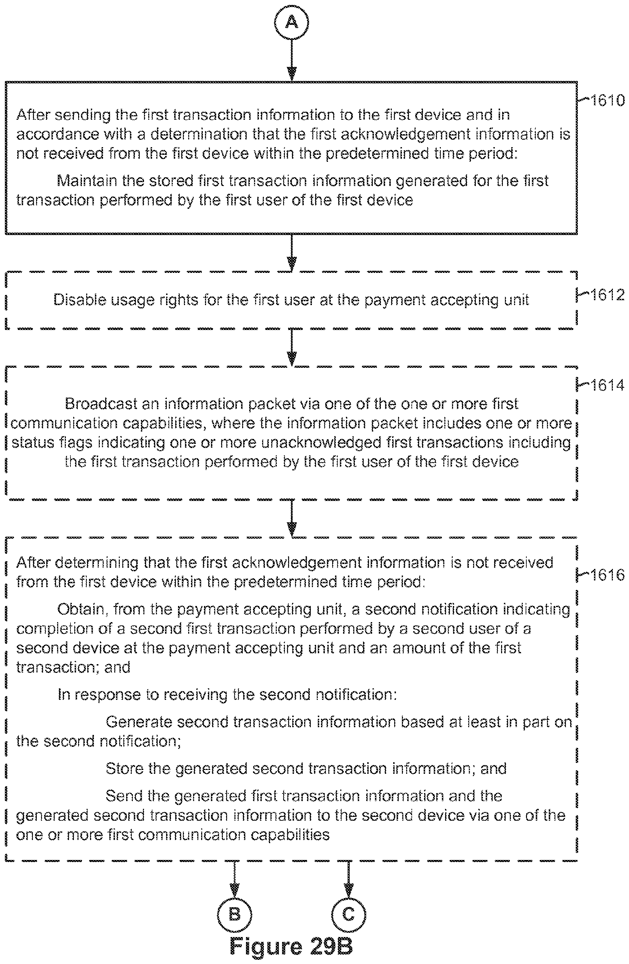

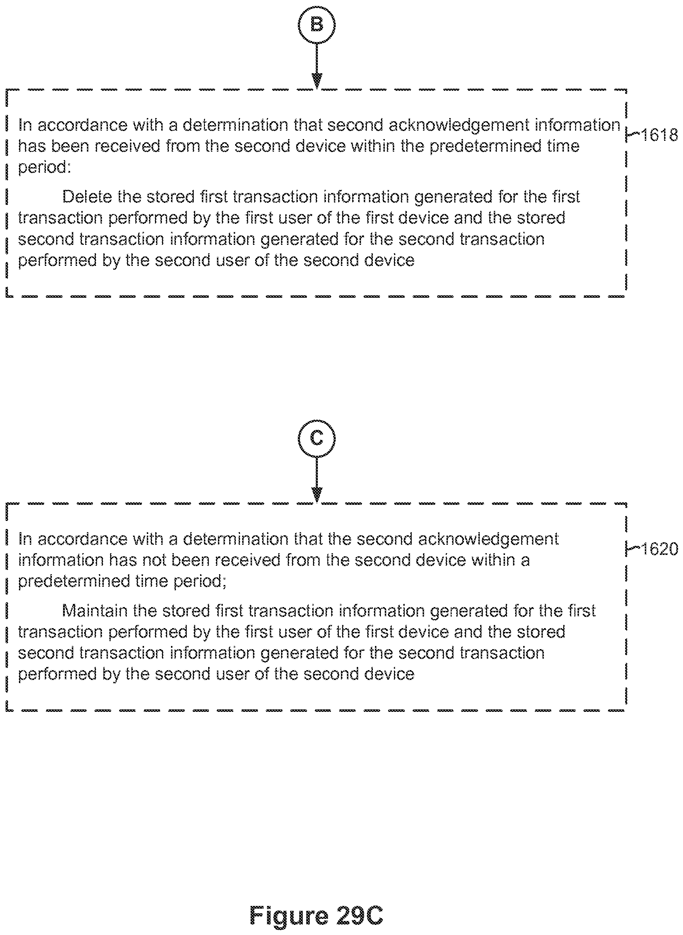

In some implementations, the one or more status flags 1108 indicate a state of the payment module 100 and/or the payment accepting unit 120 associated with the payment module 100. In some implementations, the one or more status flags 1108 indicate a state of the payment module 100 such upload information indicator 1116 indicating that that the payment module 100 has information to be uploaded to the server 130 (e.g., transaction information for one or more interrupted transactions). In some implementations, upload information indicator 1116 triggers the mobile device 150 to connect to payment module 100 immediately (e.g., if it has interrupted transaction information to be uploaded to the server 130). See Figures 25A-25B and 29A-29C and the accompanying text for further discussion regarding interrupted transactions. In some implementations, the one or more status flags 1108 indicate a state of the payment accepting unit 120 including one or more of an error indicator 1118 (e.g., indicating that a bill and/or coin acceptor of the payment accepting unit 120 is experiencing a jam, error code, or malfunction), a currency level indicator 1120 (e.g., indicating that the level of the bill and/or coin acceptor reservoir of the payment accepting unit 120 is full or empty), and/or inventory level(s) indicator 1122 (e.g., indicating that one or more products of the payment accepting unit 120. In some implementations, the one or more status flags 1108 are error codes issued by payment accepting unit 120 over the MDB.

In some implementations, the zone criteria information 1110 specifies an authorization zone criterion 1124 (e.g., a baseline authorization zone threshold indicating a baseline RSSI that the mobile device 150 (or the application 140) is required to observe before being within the authorization zone of the payment module 100) and/or a payment zone criterion 1126 (e.g., a baseline payment zone threshold indicating a baseline RSSI that the mobile device 150 (or the application 140) is required to observe before being within the payment zone of the payment module 100). In some implementations, the baseline authorization zone threshold and the baseline payment zone threshold are default values determined by the server 130 or stored as variables by the application 140, in which case the authorization zone criterion 1124 and payment zone criterion 1126 are offsets to compensate for the strength and/or reception of the short-range communication capability (e.g., BLE radio/transceiver) of the payment module 100. Alternatively, zone criteria information 1110 includes a spread between the baseline authorization zone threshold and the baseline payment zone threshold. Thus, the mobile device 150 (or the application 140) determines the baseline authorization zone threshold and the baseline payment zone threshold based on the spread value and a default value for either the baseline authorization zone threshold or the baseline payment zone threshold. For example, the spread indicates -10 db and the default baseline payment zone threshold is -90 db; thus, the baseline authorization zone threshold is -80 db. Continuing with this example, after determining the baseline authorization zone threshold and the baseline payment zone threshold, the mobile device 150 (or the application 140) may further adjust the authorization zone threshold and/or the payment zone threshold based on the strength and/or reception of its short-range communication capability (i.e., BLE radio/transceiver).

Figure 24B is a block diagram of an authorization request 1130 sent by the mobile device 150 to the server 130 (e.g., in step 1004 of the process 1000 in Figure 23) in accordance with some implementations. In some implementations, the authorization request 1130 at least includes: a module ID 1102, a user ID 1134, and an authorization code 1104.

In some implementations, the module ID 1102 is a unique identifier corresponding to the payment module 100 that broadcast the 1100 that included the authorization code 1104.

In some implementations, the user ID 1134 is an identifier associated with the user of the mobile device 150 sending the authorization request 1130 to the server 130. In some implementations, the user ID 1134 is associated with the user account under which the user of the mobile device 150 is logged into the application 140.

In some implementations, the authorization code 1130 includes the authorization code 1104 included in the packet 1100 of information that was broadcast by the payment module 100.

Figure 24C is a block diagram of an authorization grant token 1140 sent by the server 130 to the mobile device 150 (e.g., in step 1008 of the process 1000 in Figure 23) in accordance with some implementations. In some implementations, in accordance with a determination that the authorization code 1136 included in the authorization request 1130 from the mobile device 150 is valid and that the user associated with the mobile device 150 has sufficient funds in his/her account for the payment processing system, the server 130 generates the authorization grant token 1140. In some implementations, the authorization grant token 1140 at least includes: a module ID 1102, a user ID 1134, an authorized amount 1146, (optionally) an expiration period offset 1148, and (optionally) the authorization code 1104.

In some implementations, the module ID 1102 is a unique identifier corresponding to the payment module 100 that broadcast the packet 1100 that included the authorization code 1104.

In some implementations, the user ID 1134 is an identifier associated with the user of the mobile device 150 that sent the authorization request 1130 to the server 130.

In some implementations, the authorized amount 1146 indicates a maximum amount for which the user of the mobile device 150 is authorized for a transaction using the authorization grant token 1140. For example, the authorized amount 1146 is predefined by the user of the mobile device 150 or by the server 130 based on a daily limit or based on the user's total account balance or based on a risk profile of the user correspond to the user ID 1134.

In some implementations, the expiration period 1148 offset indicates an offset to the amount of time that the payment module 100 holds the authorization grant token 1140 valid for initiation of a transaction with the machine 120 associated with the payment module 100. For example, the expiration period offset 1148 depends on the history and credit of the user of mobile device 150 or a period predefined by the user of mobile device 150.

In some implementations, the authorization grant token 1140 further includes the authorization code 1104 that was included in the authorization request 1130. In some implementations, when the authorization code 1104 is the hash value, the server 130 encrypts the authorization grant token 1140 including the hashed value with the shared secret encryption key associated with payment module 100. Subsequently, when mobile device 150 sends the authorization grant token 1140 to payment module 100 after detecting a trigger condition, the payment module 100 decrypts the authorization grant token 1140 using the secret key known only to server 130 and payment module 100 (which authenticates the message and the authorization grant), and then matches the hash value included in the decrypted authorization grant token 1140 to previously broadcast valid (unexpired) hash values (i.e., auth codes) to determine validity of the (which was known only by payment module 100).

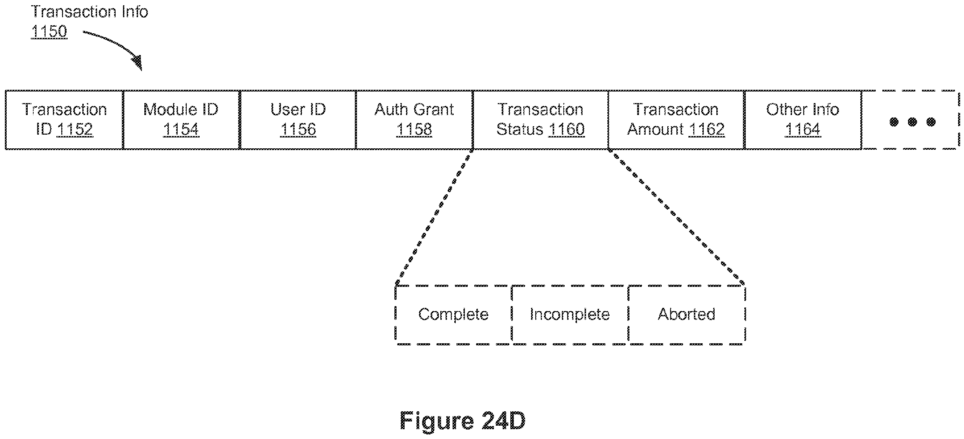

Figure 24D illustrates a block diagram of transaction information 1150 generated by the payment module 100 (e.g., in step 1204 of the process 1200 in Figure 25A) in accordance with some implementations. In some implementations, the transaction information 1150 includes: a transaction ID 1152 for the respective transaction, a module ID 1154, a user ID 1156, (optionally) the authorization code 1158, transaction status information 1160, the transaction amount 1162, and other information 1164.

In some implementations, the transaction ID 1152 is a unique identifier corresponding to the respective transaction. In some implementations, the transaction ID 1152 is encoded based on or associated with the time and/or date on which and the location at which the respective transaction took place.

In some implementations, the module ID 1154 is a unique identifier corresponding to the payment module 100 that performed the respective transaction.

In some implementations, the user ID 1156 is an identifier associated with the user of the mobile device 150 that initiated the respective transaction.

In some implementations, the authorization code 1158 corresponds to the original authorization code (e.g., auth code 1104, Figures 24A-24C) and/or authorization grant token (e.g., auth grant token 1140, Figure 24C) that was used to initiate the respective transaction. In some implementations, the authorization code 1156 is encrypted with a unique encryption key corresponding to the payment module 100.

In some implementations, the transaction status information 1160 includes an indication whether the respective transaction was completed, not-completed, or aborted. For example, the respective transaction is incomplete if a jam occurred at the payment accepting unit 120 and the user did not receive the product associated with the respective transaction. For example, if the user walks away from the payment accepting unit 120 after money was credited for the respective transaction, the respective transaction is aborted. In another example, if respective transaction times out after a predetermined time period because the user failed to select a product at the payment accepting unit 120, the respective transaction is aborted. In another example, if the user actuates a bill or coin return mechanism of the payment accepting unit 120, the respective transaction is aborted.

In some implementations, the transaction amount 1162 indicates the amount of the respective transaction or the amount of each of multiple transactions (e.g., in a multi-vend scenario). In some implementations, the transaction amount 1162 is encrypted with a unique encryption key corresponding to the payment module 100.

In some implementations, the other information 1164 includes other information related to the respective transaction such as the items dispensed by the payment accepting unit 120 and the type of transaction (e.g., coins, bills, credit card, manual mode, hands-free mode, etc.). In some implementations, the other information 1164 includes other information related to the payment module 100 and/or the payment accepting unit 120 associated with the payment module 100. For example, the other information 1164 includes a verification request to the server 130 in order to implement new firmware. See Figures 26A-26B and the accompanying text for further discussion of the verification request. In another example, the other information 1164 includes transaction information from one or more previous interrupted transactions. In another example, the other information 1164 includes transaction information for one or more transactions paid via bills and/or coins. In another example, the other information 1164 includes inventory information as to one or more products of the payment accepting unit 120.

Figure 25A illustrates a schematic flow diagram of a process 1200 of processing acknowledgement information in accordance with some implementations. In some implementations, the payment processing system includes one or more payment modules 100 (e.g., each associated with a respective payment accepting unit 120 such an automatic retailing machine for dispensing goods and/or services), one or more mobile devices 150 (e.g., each executing the application 140 for the payment processing system either as a foreground or background process), and the server 130. The server 130 manages the payment processing system and, in some cases, supplies, operates, and/or manufactures the one or more payment modules 100. For brevity, the process 1200 will be described with respect to a respective payment module 100 associated with a respective payment accepting unit 120 (machine 120) and a respective mobile device 150 in the payment processing system. In the process 1200, the payment module 100 receives first acknowledgment information for a first transaction via the mobile device 150 that initiated the first transaction.

The payment module 100 obtains (1202) a first notification indicating completion of a first transaction from the machine 120. For example, after the process 1000 in Figure 23, the user of the mobile device 150 selects a product to purchase from the machine 120 by interacting with one or more input mechanisms of the machine 120 (e.g., buttons 126 or a touch screen display 124 shown in Figure 19), and the machine 120 dispenses the selected product. Continuing with this example, after the product is dispensed, the transaction is complete and the payment module 100 obtains a notification from the machine of the completed transaction. In some implementations, the notification includes the amount of the transaction and (optionally) machine status information associated with the machine 120 such as inventory information as to one or more products of the payment accepting unit 120 and/or the like.

After obtaining the first notification, the payment module 100 generates (1204) first transaction information based on the first notification, and the payment module 100 stores the first transaction information. In some implementations, the transaction information includes a transaction ID for the first transaction, a module ID corresponding to payment module 100, a user ID corresponding to the mobile device 150, transaction status information indicating that the first transaction is complete, and the transaction amount indicated by the first notification. In some implementations, the payment module 100 retains the authorization code included in the original broadcasted packet and/or the authorization grant token and includes the authorization code in the first transaction information. In some implementations, the authorization code is encrypted with a secret key corresponding to the payment module 100, which is shared with the server 130 but not the mobile device 150. In some implementations, the first transaction information further includes other information such as the machine status information included in the first notification or transaction information corresponding to previous interrupted transaction(s). See Figure 24D and the accompanying text for further discussion regarding transaction information 1150.

The payment module 100 sends (1206), via a short-range communication capability (e.g., BLE), the first transaction information to the mobile device 150.

The mobile device 150 sends (1208), via a long-range communication capability (e.g., GSM, CDMA, Wi-Fi, or the like), the first transaction information to the server 130.

The server 130 processes (1210) the first transaction information. For example, the server 130 debits the account of the user associated with the user ID in the first transaction information in the amount indicated by the first transaction information.

The server 130 sends (1212), via a long-range communication capability (e.g., GSM, CDMA, Wi-Fi, or the like), first acknowledgment information to the mobile device 150. In some implementations, the first acknowledgment information acknowledges that the server 130 received the first transaction information. In some implementations, the first acknowledgment information includes the user ID, the module ID, the transaction ID, and (optionally) the authorization grant included in the transaction information (e.g., auth grant 1158, Figure 24D).

After receiving the first acknowledgement information, the mobile device 150 sends (1214), via a short-range communication capability (e.g., BLE), the first acknowledgment information to the payment module 100.

After receiving the first acknowledgment information, the payment module 100 deletes (1216) the stored first transaction information.

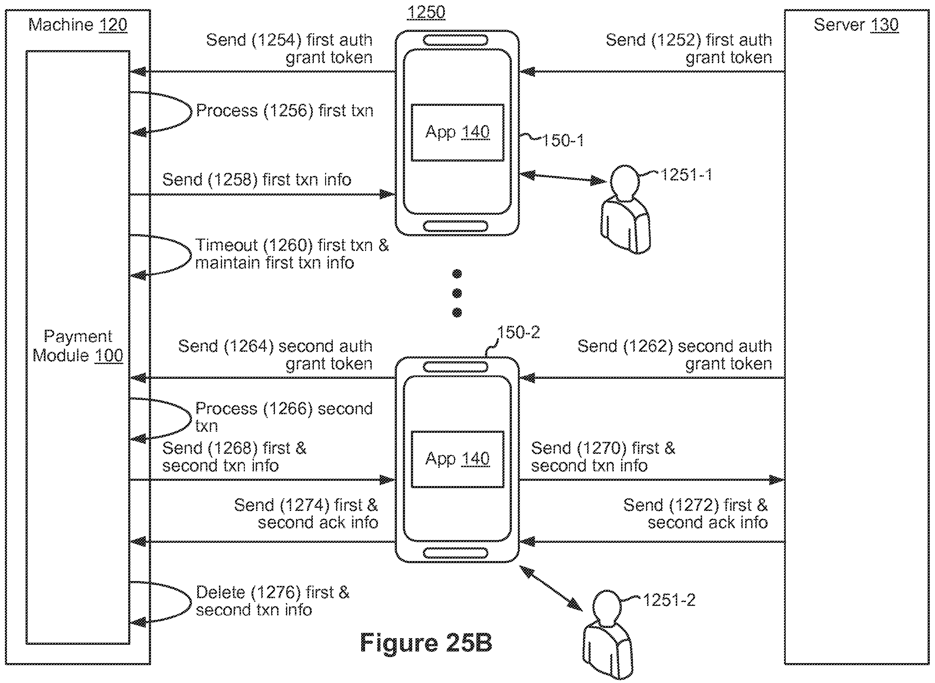

Figure 25B illustrates a schematic flow diagram of a process 1250 of processing interrupted transactions in accordance with some implementations. In some implementations, the payment processing system includes one or more payment modules 100 (e.g., each associated with a respective payment accepting unit 120 such an automatic retailing machine for dispensing goods and/or services), one or more mobile devices 150 (e.g., each executing the application 140 for the payment processing system either as a foreground or background process), and the server 130. The server 130 manages the payment processing system and, in some cases, supplies, operates, and/or manufactures the one or more payment modules 100. For brevity, the process 1250 will be described with respect to a respective payment module 100 associated with a respective payment accepting unit 120 (machine 120) and a respective mobile device 150 in the payment processing system. In the process 1250, the payment module 100 receives first acknowledgment information for a first transaction via a second mobile device 150-2 that did not initiate the first transaction.

After receiving a first authorization request associated with a first authorization code from a first mobile device 150-1, the server 130 sends (1252), via a long-range communication capability (e.g., GSM, CDMA, Wi-Fi, or the like), a first authorization grant token to the first mobile device 150-1 associated with a first user 1251-1.

After receiving the first authorization grant token and in response to detecting a trigger condition (e.g., via the hand-free mode or the manual mode), the first mobile device 150-1 sends (1254), via a short-range communication capability (e.g., BLE), the first authorization grant token to the payment module 100 associated with the machine 120 in order to initiate a first transaction.

The payment module 100 processes (1256) the first transaction associated with the first authorization grant token and generates first transaction information when the first transaction is completed. In some implementations, the first transaction information includes a transaction ID for the first transaction, a module ID corresponding to payment module 100, a user ID corresponding to the first mobile device 150-1, transaction status information indicating that the first transaction is complete, and the transaction amount for the first transaction. The payment module 100 stores the first transaction information with a timestamp indicating the time and date that the first transaction information was generated.

The payment module 100 sends (1258), via a short-range communication capability (e.g., BLE), the first transaction information to the first mobile device 150-1 to send to the server 130 in order to acknowledge the first transaction.

In accordance with a determination that first acknowledgement information is not received for the first transaction within a predefined time period, the payment module 100 times-out (1260) the first transaction and maintains the first transaction information. In some implementations, a transaction times-out when the connection between the mobile device and the payment module is interrupted and transaction information is not acknowledged within a predefined time period.

For example, the connection between the first mobile device 150-1 and the payment module 100 is interrupted when the first user 1251-1 turns off the first mobile device 150-1, the first user 1251-1 turns the first mobile device 150-1 into airplane mode, the first user 1251-1 walks away out of the communication zone (i.e., BLE range) of the payment module 100, the first mobile device 150-1 otherwise loses its long-range communication connection, or the first mobile device 150-1 otherwise loses power. In this example, either the first user 1251-1 maliciously interrupted the connection to prevent the acknowledgement information from being received by the payment module 100 by powering down the first mobile device 150-1, or the connection was involuntarily or unintentionally interrupted by the first mobile device 150-1's battery running out or a losing cellular signal.

In some implementations, the first user 1251-1 is be blocked by the payment module 100 from performing any additional transactions until the payment module 100 receives an acknowledgement from the server 130 via any connection (e.g., from the second user 1251-2). In some implementations, unused authorization grants (e.g., if there was no trigger condition or it expired) are canceled by the first mobile device 150-1 by sending a cancellation message to the server 130 corresponding to the unused authorization grant. In some implementations, the server 130 denies or limits the number of authorization grants sent to the first mobile device 150-1 until it has received transaction information or cancellation of authorization outstanding authorization grants sent to the first mobile device 150-1. In some implementations, server 130 denies approval of, or limit the number of, additional authorization grants from user 1251-1 for transacting with a second payment module (not shown) until the server 130 receives transaction information, cancellation of authorization, or a predefined time period has expired for outstanding authorization grants sent to the first mobile device 150-1 for transacting with a first payment module. In this example, a user may be limited to only 1 authorization grant for the first payment module 100 and no more than 3 outstanding authorization grants in a predetermined number of hours regardless of the number of payment modules the user may be attempting to use.

After receiving a second authorization request associated with a second authorization code from a second mobile device 150-2 subsequent to receiving the first authorization request from the first mobile device 150-1, the server 130 sends (1262), via a long-range communication capability (e.g., GSM, CDMA, Wi-Fi, or the like), a second authorization grant token to the second mobile device 150-2 associated with a second user 1251-2.

After receiving the second authorization grant token and in response to detecting a trigger condition (e.g., via the hand-free mode or the manual mode), the second mobile device 150-2 sends (1264), via a short-range communication capability (e.g., BLE), the second authorization grant token to the payment module 100 associated with the machine 120 in order to initiate a second transaction.

The payment module 100 processes (1266) the second transaction associated with the second authorization grant token and generates second transaction information when the second transaction is completed. In some implementations, the second transaction information includes a transaction ID for the second transaction, a module ID corresponding to payment module 100, a user ID corresponding to the second mobile device 150-2, transaction status information indicating that the second transaction is complete, and the transaction amount for the second transaction. The payment module 100 stores the second transaction information with a timestamp indicating the time and date that the second transaction information was generated.

The payment module 100 sends (1268), via a short-range communication capability (e.g., BLE), the first transaction information associated with the interrupted first transaction and the second transaction information associated with the second transaction to the second mobile device 150-1 to send to the server 130 in order to acknowledge the first and second transactions. In this way, the first transaction information associated with the previous, interrupted first transaction initiated by the first mobile device 150-1 is appended to the second transaction information for the second transaction initiated by the second mobile device 150-2.

The second mobile device 150 sends (1270), via a long-range communication capability (e.g., GSM, CDMA, Wi-Fi, or the like), the first transaction information and the second transaction information to the server 130.

After receiving the first transaction information and the second transaction information, the server 130 processes the first transaction information and the second transaction information. For example, the server 130 debits the account of the first user 1251-1 associated with the user ID for first mobile device 150-1 in the first transaction information in the amount indicated by the first transaction information. Continuing with this example, the server 130 also debits the account of the second user 1251-2 associated with the user ID for second mobile device 150-2 in the second transaction information in the amount indicated in the second transaction information.

The server 130 sends (1272), via a long-range communication capability (e.g., GSM, CDMA, Wi-Fi, or the like), first and second acknowledgment information to the second mobile device 150-2 acknowledging the first and second transactions. In some implementations, the first acknowledgment information includes the user ID of the first mobile device 150-1 that imitated the first transaction, the module ID of the payment module 100 that processed the first transaction, the transaction ID of the first transaction, and (optionally) the authorization code associated with the first transaction. In some implementations, the second acknowledgment information includes the user ID of the second mobile device 150-2 that imitated the second transaction, the module ID of the payment module 100 that processed the second transaction, the transaction ID of the second transaction, and (optionally) the authorization code associated with the second transaction.

After receiving the first and second acknowledgment information, the mobile device 150 sends (1274), via a short-range communication capability (e.g., BLE), the first acknowledgment information to the payment module 100.

After receiving the first and second acknowledgment information, the payment module 100 deletes (1276) the stored first transaction information and also the stored second transaction information. In some implementations, the payment module 100 marks the first and second transaction as complete.

Figure 26A is a schematic flow diagram of a process 1300 of updating firmware of the payment module 100 in the payment processing system in accordance with some implementations. In some implementations, the payment processing system includes one or more payment modules 100 (e.g., each associated with a respective payment accepting unit 120), one or more mobile devices 150 (e.g., each executing the app 140 for the payment processing system either as a foreground or background process), and the server 130. The server 130 manages the payment processing system and, in some cases, supplies, operates, and/or manufactures the one or more payment modules 100. For brevity, the process 1300 will be described with respect to a respective payment module 100 and a respective mobile device 150 in the payment processing system.

The payment module 100 broadcasts (1302), via a short-range communication capability (e.g., BLE), a packet of information (e.g., broadcast packet 1100, Figure 24A). The packet of information at least includes a firmware version (e.g., current firmware version 1112, Figure 24A) of the payment module 100. The information included in the packet broadcasted by the payment module 100 is further discussed herein with reference to Figure 24A.

The mobile device 150 determines (1304) that the current firmware version of the payment module 100 satisfies firmware criteria (e.g., predates a firmware version stored by the mobile device 150). Various other firmware criteria are further discussed below with reference to the method 1700 in Figures 30A-30D.

In accordance with a determination that the firmware criteria are satisfied, the mobile device 150 sends (1306) firmware update information (e.g., data packets corresponding to the firmware of the mobile device 150) to the payment module 100.

The payment module 100 broadcasts (1308) update status information (e.g., update status information 1114 in Figure 24A, identifying remaining data packets needed for the firmware update) included in the advertised information to the one or more mobile devices in the payment processing system (e.g., at least including the respective mobile device 150). Although not illustrated, the process 1300 sometimes includes a second mobile device, which sends firmware update information that includes additional data packets distinct from the data packets sent by the respective mobile device 150.

When all needed data packets have been received by the payment module 100, the update status information includes a verification request, which the mobile device 150 then sends (1310) to the server 130 via a long-range communication capability (e.g., GSM).

The server 130 processes (1312) the verification request. For example, the server 130 processes the verification request by verifying that the received data packets are not corrupt, form a complete set, and correspond to a latest firmware version.

After processing the verification request, the server 130 sends (1314) to the mobile device 150 a firmware command (e.g., implement the firmware update at the payment module 100) via the long-range communication capability, which the mobile device 150 then sends (1316) to the payment module 100 via the short-range communication capability.

The payment module 100 then executes (1318) the firmware command. For example, the payment module implements the firmware update using the received data packets corresponding to a latest firmware version.

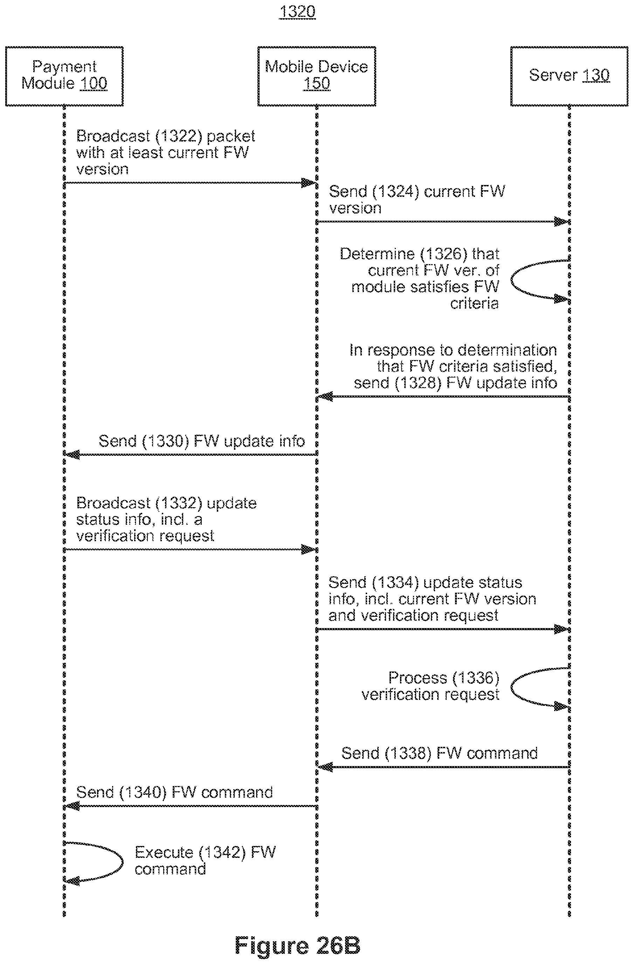

Figure 26B is a schematic flow diagram of a process 1320 of updating firmware of the payment module 100 in the payment processing system in accordance with some implementations. In some implementations, the payment processing system includes one or more payment modules 100 (e.g., each associated with a respective payment accepting unit 120), one or more mobile devices 150 (e.g., each executing the app 140 for the payment processing system either as a foreground or background process), and the server 130. The server 130 manages the payment processing system and, in some cases, supplies, operates, and/or manufactures the one or more payment modules 100. For brevity, the process 1320 will be described with respect to a respective payment module 100 and a respective mobile device 150 in the payment processing system.

The payment module 100 broadcasts (1322), via a short-range communication capability (e.g., BLE), a packet of information (e.g., broadcast packet 1100, Figure 24A). The packet of information at least includes a firmware version (e.g., current firmware version 1112, Figure 24A) of the payment module 100. The information included in the packet broadcasted by the payment module 100 is further discussed herein with reference to Figure 24A.

The mobile device 150 then sends (1324) to the server 130, via a long-range communication capability (e.g., GSM), the packet of information that at least includes the firmware version of the payment module 100.

The server 130 determines (1326) that current firmware version of the payment module 100 satisfies firmware criteria (e.g., predates a firmware version stored by the mobile device 150). Various other firmware criteria are further discussed below with reference to the method 1700 in Figures 30A-30D.

In accordance with a determination that the firmware criteria are satisfied, the server 130 sends (1328) to the mobile device 150 firmware update information (e.g., data packets corresponding to the firmware of the mobile device 150), which the mobile device 150 then sends (1330) to the payment module 100.

The payment module 100 broadcasts (1332) update status information (e.g., identification of remaining data packets needed for the firmware update) included in the advertised information to the one or more mobile devices in the payment processing system (e.g., at least including the respective mobile device 150), which the one or more mobile devices 150 then send (1334) to the server 130. When all needed data packets have been received by the payment module 100, the update status information includes a verification request.

The server 130 processes (1336) the verification request. For example, the server 130 processes the verification request by verifying that the received data packets are not corrupt, form a complete set, and correspond to a latest firmware version.

After processing the verification request, the server 130 sends (1338) to the mobile device 150 a firmware command (e.g., implement the firmware update at the payment module 100) via the long-range communication capability, which the mobile device 150 then sends (1340) to the payment module 100 via the short-range communication capability.

The payment module then executes (1342) the firmware command. For example, the payment module implements the firmware update using the received data packets corresponding to a latest firmware version.

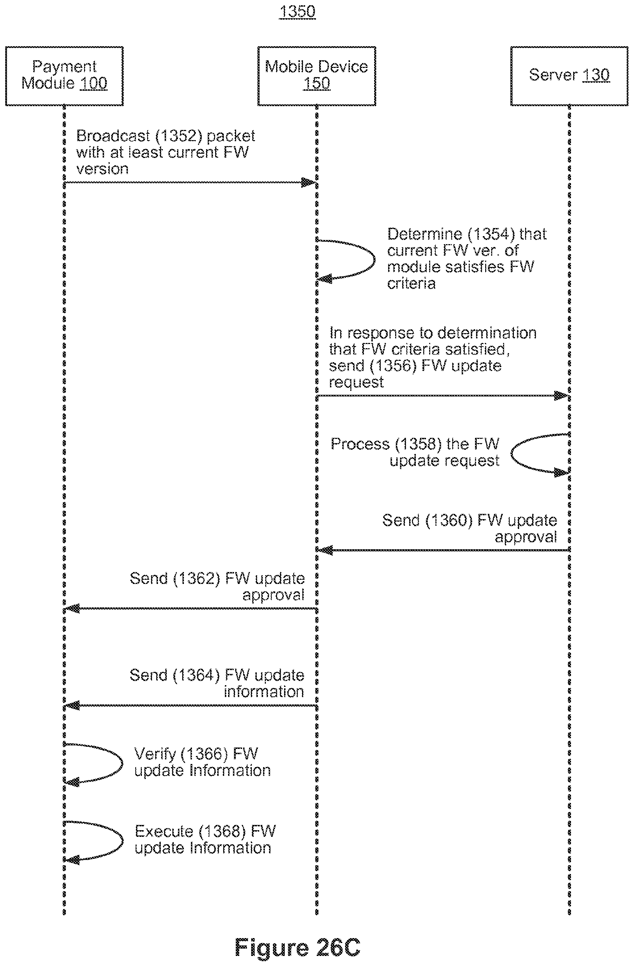

Figure 26C is a schematic flow diagram of a process 1350 of updating firmware of the payment module 100 in the payment processing system in accordance with some implementations. In some implementations, the payment processing system includes one or more payment modules 100 (e.g., each associated with a respective payment accepting unit 120), one or more mobile devices 150 (e.g., each executing the app 140 for the payment processing system either as a foreground or background process), and the server 130. The server 130 manages the payment processing system and, in some cases, supplies, operates, and/or manufactures the one or more payment modules 100. For brevity, the process 1350 will be described with respect to a respective payment module 100 and a respective mobile device 150 in the payment processing system.

The payment module 100 broadcasts (1352), via a short-range communication capability (e.g., BLE), a packet of information (e.g., broadcast packet 1100, Figure 24A). The packet of information at least includes a firmware version (e.g., current firmware version 1112, Figure 24A) of the payment module 100. The information included in the packet broadcast by the payment module 100 is further discussed herein with reference to Figure 24A.

The mobile device 150 determines (1354) that the current firmware version of the payment module 100 satisfies firmware criteria (e.g., predates a firmware version stored by the mobile device 150). Various other firmware criteria are further discussed below with reference to the method 1700 in Figures 30A-30D. In some implementations, the mobile device 150 stores a firmware image for the payment module 100. For example, the firmware image was previously downloaded by the mobile device 150 from the server 130 as part of an update for application 140. In some implementations, the firmware image downloaded by the mobile device 150 is encrypted with a common encryption key known to all payment modules 100 in the payment processing system (as opposed to the unique encryption key corresponding to each payment module 100 in the payment processing system). In some implementations, the firmware image downloaded by the mobile device 150 is encrypted with an encryption key that is later sent as part of the firmware approval message in steps 1360 and 1362, where the firmware approval message is encrypted with a unique encryption key corresponding to the payment module 100.

In accordance with a determination that the firmware criteria are satisfied, the mobile device 150 sends (1356), via a second communication capability (e.g., GSM, CDMA, Wi-Fi, or the like), a firmware update request (e.g., a request for permission to update the firmware of the payment module 100) to the server 130. In some implementations, the firmware update request includes a module ID corresponding to the payment module 100, a user ID associated with a user of the mobile device 150, the current firmware version 1112 of the payment module 100, and the firmware version stored by the mobile device 150.

The server 130 processes (1358) the firmware update request. The server 130 determines whether to permit or decline the firmware update request. If the server 130 permits the firmware update request, the mobile device 150 updates the firmware version of the payment module 100 with the firmware version stored by the mobile device. For example, the server 130 declines the firmware update request if the firmware version stored by the mobile device 150 is out of date (i.e., a firmware version C, distinct from a firmware version A of the payment module 100 and a firmware version B stored by the mobile device 150, is the latest firmware image). In another example, the server 130 declines the firmware update request if the firmware version stored by the mobile device 150 (e.g., firmware version B) is determined to be faulty and/or blacklisted, even if a latest firmware (e.g., firmware version C, distinct from firmware version A and firmware version B) is not yet available.

In accordance with a determination that the firmware version stored by the mobile device 150 is approved by the server 130, the server 130 sends (1360) to the mobile device 150, via the second communication capability, a firmware update approval message (e.g., permission to update the firmware of the payment module 100), which the mobile device 150 then sends (1362) to the payment module 100 via the short-range communication capability. In some implementations, in accordance with a determination that the server 130 permits the firmware update request, the server 130 responds to the application 140 of the mobile device 150 with an affirmative firmware update approval message (e.g., approval to update firmware of payment module 100) to be sent to the payment module 100. In some implementations, the firmware update approval message contains one or more verification values (e.g., a list of checksum values for each 4 KB block of encrypted firmware image stored by the mobile device 150) and a hash value (e.g., SHA-256 hash of the complete, decrypted firmware image) for data packets corresponding to the approved firmware update version. Furthermore, in some implementations, the firmware update approval message includes a firmware decryption key (e.g., for decrypting received data packets corresponding to the approved firmware update version). In some implementations, the firmware update approval message is encrypted using a unique encryption key corresponding to the payment module 100.

In some implementations, if the payment module 100 is already updating its firmware when it receives the firmware update approval message (e.g., a process which may have been started by a different mobile device 150 at an earlier time), then the payment module 100 simply verifies the validity of the firmware update approval message and resumes the firmware update. However, if the payment module 100 was not already updating its firmware, it will verify the validity of the firmware update approval message, store to the memory 760 (Figure 20) (e.g., EEPROM) the one or more verification values and the hash value (e.g., list of checksums and a SHA-256 hash), and erase the firmware-update area of the memory 760 (e.g., where the one or data packets for the firmware update will be stored). In these cases, the payment module 100 subsequently receives firmware update formation (e.g., one or more data packets) from the mobile device 150 which are stored in the firmware-update area of the memory 760. Furthermore, in some implementations, if the payment module 100 already has a stored firmware update to the specified firmware version ready to be processed, but it has not yet rebooted to install it, the firmware update request is ignored.

After the server 130 approves the firmware update request, the mobile device 150 sends (1364) to the payment module 100, via the short-range communication capability, firmware update information (e.g., data packets corresponding to the firmware stored by the mobile device 150). As long as the payment module 100 is connected to the mobile device 150, the payment module 100 will identify one or more data blocks (i.e., corresponding to the approved firmware update version) that are still needed, which are sent by the mobile device 150 as the one or more data packets. In some implementations, after receiving the firmware update approval message, the payment module 100 sends to the mobile device 150 update status information identifying and requesting one or more data blocks still needed for the firmware update (e.g., a specific 256 B block/chunk of firmware). Additionally and/or alternatively, the packet of information (e.g., broadcast packet 1100, Figure 24A) broadcast by the payment module 100 includes information identifying one or more data blocks still needed by the payment module 100 for the firmware update or one or more data blocks already received by the payment module 100. After receipt of the one or more data packets, the firmware update information is stored by the payment module 100 into memory (e.g., the memory 760, Figure 20).

The payment module 100 verifies (1366) the firmware update information. In some implementations, each time a data packet is received from the mobile device 150 corresponding to a complete data block (e.g., a 4 KB block) of the firmware update, the payment module 100 will compare a generated verification value (e.g., a checksum of the 4 KB block) against a corresponding verification value for the block that was included in the update approval message (e.g., a checksum from the list included in the firmware update approval message). If the verification values do not match, the corresponding data block is erased, and the update process resumes from that point (e.g., the particular 4 KB block that did not pass verification).

After verifying the firmware update information, the payment module 100 executes (1368) the firmware update information. After all data blocks have been received by the payment module 100, and their verification values (e.g., checksums) have been successfully verified, in some implementations, the payment module 100 sets an internal flag indicating that it should reboot itself when it determines it is a safe time to do so. In some implementations, a safe time for rebooting is based on the current time of day (e.g., 2:00 AM), or observed activity of the payment accepting unit 120 (e.g., when no user has connected in the past 10 minutes).

In some implementations, when the payment module 100 decides to reboot, it sets an install-firmware flag in memory (e.g., EEPROM) and resets itself. Upon reboot of the payment module 100, a bootloader observes the set install-firmware flag and executes an associated firmware installation handler. In some implementations, the firmware installation handler double checks all of the block checksums of the firmware update information (e.g., a firmware update image). If the checksums do not match, an error has occurred (e.g., corrupted data) and the update is aborted, with the currently installed firmware then booting up. If the checksums do match, however, the bootloader erases the currently installed firmware and then decrypts the firmware update information (e.g., a firmware update image) into the installed firmware area of memory (e.g., memory 760, Figure 20).

After the firmware update information has been decrypted, the bootloader computes a hash value (e.g., a SHA-256 hash) of the firmware update information (e.g., of a firmware update image) and compares it to the hash value received from the server 130 that was included in the update approval message. If the hash values do not match, an error has occurred, causing the bootloader to erase the installed firmware and re-install a default (i.e., gold master) firmware image, as that is the only image available to install at that point. Finally, the bootloader loads and runs the installed firmware (either the updated firmware version or the gold master).

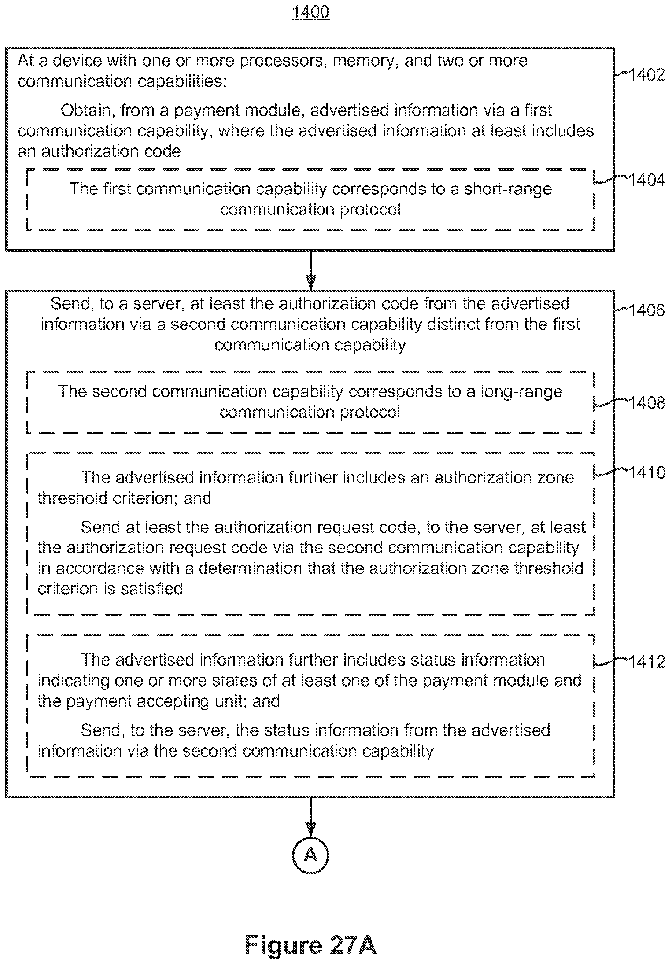

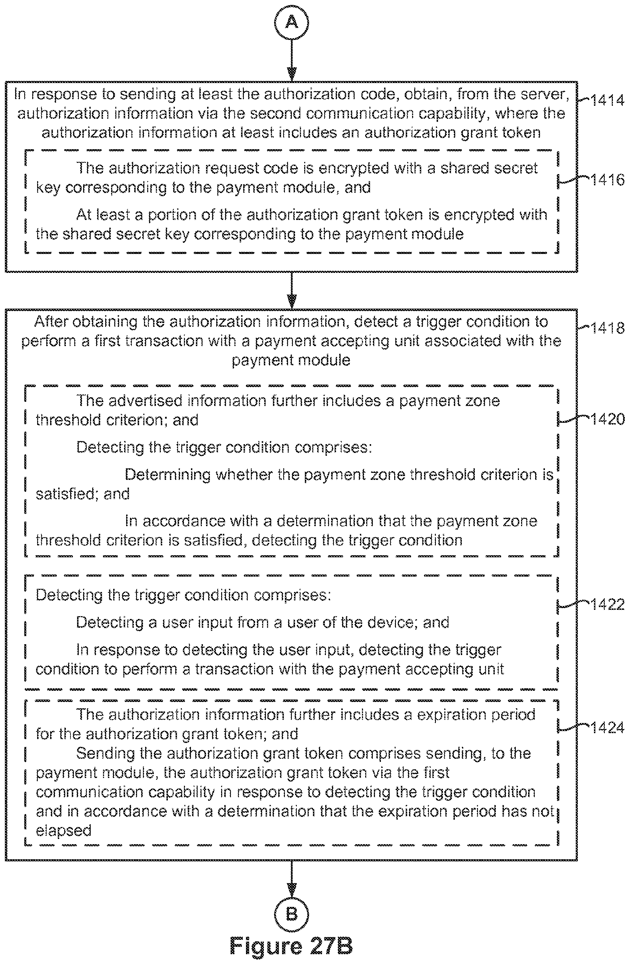

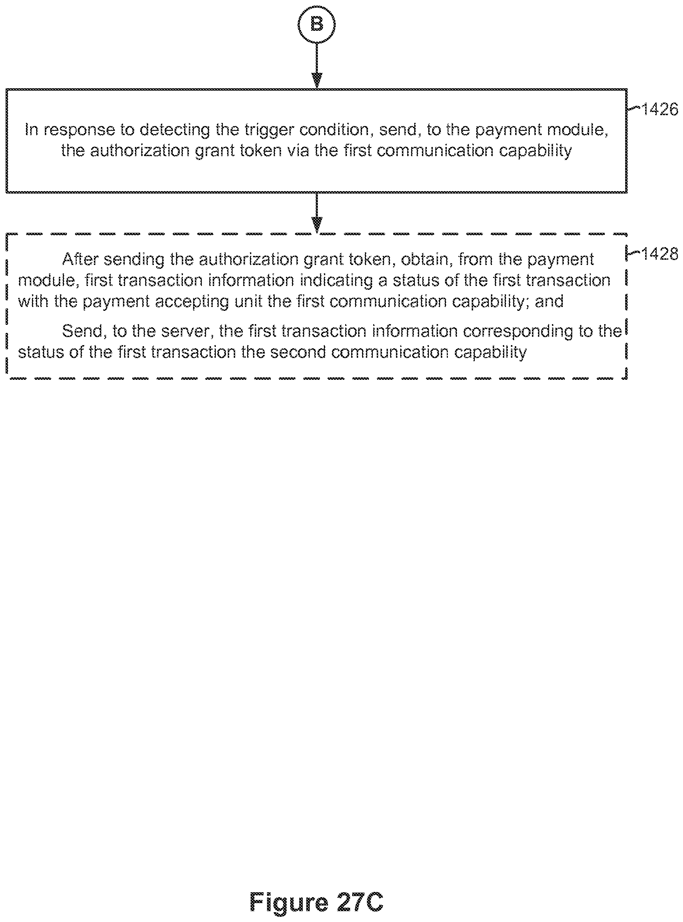

Figures 27A-27C illustrate a flowchart diagram of a method 1400 of payment processing in accordance with some implementations. In some implementations, the method 1400 is performed by a device with one or more processors, memory, and two or more communication capabilities. For example, in some implementations, the method 1400 is performed by the mobile device 150 (Figures 5 and 21) or a component thereof (e.g., application 140). In some implementations, the method 1400 is governed by instructions that are stored in a non-transitory computer readable storage medium (e.g., the memory 860, Figure 21) and the instructions are executed by one or more processors (e.g., the processing unit 840, Figure 21) of the device. Optional operations are indicated by dashed lines (e.g., boxes with dashed-line borders).

The device obtains (1402), from a payment module, advertised information via a first communication capability, where the advertised information at least includes an authorization code. In some implementations, the payment module 100 broadcasts/advertises a packet of information (i.e., the advertised information such as the packet 1100, Figure 24A) via one or more short-range communication protocols such as BLE, NFC, and/or the like (i.e., a non-persistent communication channel). As such, the payment module 100 is not tied up in handshakes with each mobile device 150 within its communication zone. In some implementations, the application 140 associated with the payment processing system, which is executed on the mobile device 150 (e.g., a mobile phone), receives the packet when the mobile device 150 is within the communication zone (i.e., BLE range) of the payment module 100.

In some implementations, the advertised information is a packet with a module identifier (ID) associated with the payment module 100, an authorization code, the payment module 100's current firmware version, and a plurality of status flags associated with a state of the payment accepting unit 120 and/or the payment module 100. For example, Figure 24A illustrates the packet 1100 of information that is broadcast by the payment module 100. In some implementations, the authorization code is a cleartext hash value. In some implementations, the authorization code is encrypted with a unique encryption key corresponding to the payment module 100. In some implementations, the packet also includes customized or baseline thresholds for the authorization and payment zones (e.g., RSSI values such as -80 db and -90 db, respectively). In some implementations, the packet also includes a request (e.g., a status flag) for mobile device 150 to connect to it immediately so as to upload information to the server 130 (e.g., transaction information for one or more interrupted transaction). In some implementations, the payment module 100 broadcasts the advertised information every X second with a unique authorization code.

In some implementations, the first communication capability corresponds (1404) to a short-range communication protocol. For example, the first communication capability of the mobile device 150 is a radio/transceiver means for communicating via one or more short-range communication protocols such as BLE, NFC, and/or the like (i.e., a non-persistent communication channel).

The device sends (1406), to a server, at least the authorization code from the advertised information via a second communication capability distinct from the first communication capability. In some implementations, the mobile device 150 sends an authorization request to the server 130 that at least includes the authorization code from the obtained advertised information, the user ID corresponding to the user of the mobile device 150, and the module ID corresponding to the payment module 100. For example, see authorization request 1130 in Figure 24B.

In some implementations, the second communication capability corresponds (1408) to a long-range communication protocol. For example, the second communication capability of the mobile device 150 is a radio/transceiver means for communicating via one or more long-range communication protocols such as Wi-Fi, CDMA, GSM, and/or the like (i.e., a non-persistent communication channel).

In some implementations, the advertised information further includes (1410) an authorization zone threshold criterion, and the device sends at least the authorization request code comprises sending, to the server, at least the authorization request code via the second communication capability in accordance with a determination that the authorization zone threshold criterion is satisfied. In some implementations, the advertised information includes a baseline authorization zone threshold (i.e., an authorization zone criterion) indicating a baseline RSSI that the mobile device 150 (or the application 140) is required to observe before being within the authorization zone of the payment module 100. In some implementations, the mobile device 150 (or the application 140) offsets the baseline authorization zone threshold based on the strength and/or reception of the short-range communication capability (e.g., BLE radio/transceiver) of the mobile device 150. In some implementations, the mobile device 150 forwards the authorization code to the server 130 when the authorization zone criterion is satisfied (i.e., the mobile device 150 observes an RSSI equal to or exceeding the baseline authorization zone threshold). For example, baseline authorization zone threshold for a payment module associated with module ID 0xA23 is -70 db. Continuing with this example, the mobile device 150 (or the application 140) offsets the baseline authorization zone threshold by -5 db because the mobile device 150's BLE radio/transceiver is weak. Continuing with this example, when the mobile device 150 observes an RSSI equal to or exceeding -75 db from payment module 100 associated with module ID 0xA23, the mobile device 150 forwards the authorization code to the server 130.

In some implementations, the advertised information further includes status information indicating one or more states of at least one of the payment module and the payment accepting unit, and the device sends (1412), to the server, the status information from the advertised information via the second communication capability. Figure 24A, for example, shows the packet 1100 with one or more status flags 1108. For example, the one or more status flags 1108 included in the packet 1100 are encoded with a predetermined code known by the server 130. In some implementations, the status information indicates that the payment module 100 has information to be uploaded to the server (e.g., transaction information for one or more interrupted transactions). In some implementations, the status information indicates information for the attention of the payment accepting machine 120's operator. For example, when the payment accepting unit 120 is a vending machine, the status information indicates that a particular item is low or out of stock. In another example, the status information indicates that the payment accepting unit 120 is experiencing a bill and/or coin jam. In another example, the status information indicates that the payment accepting unit 120's bill and/or coin reservoir is empty, nearly empty, full, or nearly full.

In response to sending at least the authorization code, the device obtains (1414), from the server, authorization information via the second communication capability, where the authorization information at least includes an authorization grant token. Figure 24B, for example, shows the authorization grant token 1140. In some implementations, the mobile device 150 receives the authorization grant token when the authorization code is valid and the first user has sufficient funds in his/her account for the payment processing system to perform a transaction at the payment accepting unit 120. In some implementations, the authorization grant token or a portion thereof is encrypted with the encryption key corresponding to the payment module 100. In some implementations, the authorization grant token includes an authorized amount, an expiration offset period, a user ID associated with the user of the mobile device 150, and a module ID associated with the payment module 100. For example, the expiration offset period depends on the first user's history and credit or a period predefined by the first user. For example, the authorized amount is predefined by the first user, based on a daily limit, based on the first user's total balance, or based on a risk profile associated with the user identified by the user ID. In some implementations, the authorization grant token or a portion thereof (e.g., the authorized amount or the auth code) is encrypted with an encryption key corresponding to the payment module 100 identified by the module ID.

In some implementations, the authorization request code is (1416) encrypted with a shared secret key corresponding to the payment module, and at least a portion of the authorization grant token is encrypted with the shared secret key corresponding to the payment module. For example, at least the authorized amount or the authorization code included in the authorization grant token is encrypted with the shared secret key. In some implementations, the shared secret key is known by the payment module 100 and the server 130. For example, the server 130 manages transactions for a plurality of payment modules and the server 130 stores a table of encryption keys for each of the payment modules. In this example, the server 130 selects an encryption key that corresponds to the respective payment module 100 and encrypts the authorized amount with the selected encryption key. In some implementations, the shared secret key is one of a public or private key in an asymmetrical cryptography scheme. Thus, in the above example, the mobile device 150 is an un-trusted party in the payment processing system; thus, the mobile device 150 cannot decrypt the authorization code or at least a portion of the authorization grant token.

After obtaining the authorization information, the device detects (1418) a trigger condition to perform a first transaction with a payment accepting unit (e.g., an automatic retailing machine such as a vending machine for dispensing goods and/or services) associated with the payment module. In the hands-free mode, the trigger condition is detected when the mobile device 150 enters the payment zone of the payment module 100 which occurs upon satisfaction of a payment zone criterion. In the manual mode, trigger condition is detected when the user of the mobile device 150 interacts with the user interface of the application 140 for the payment processing system while the application 140 is executed in as a foreground process on the mobile device 150.

In some implementations, the advertised information further includes (1420) a payment zone threshold criterion, and the device the trigger condition by: determining whether the payment zone threshold criterion is satisfied; and, in accordance with a determination that the payment zone threshold criterion is satisfied, detecting the trigger condition. In some implementations, the advertised information includes payment zone threshold criterion indicating a baseline RSSI that the mobile device 150 (or the application 140) is required to observe before being within the payment zone of payment module 100. In some implementations, the payment zone threshold criterion is a default RSSI value (e.g., -80 db) and the advertised information includes an offset (e.g., -5 db) to account for the strength and/or reception quality of the short-range radio/transceiver (e.g., BLE) of the payment module 100. In some implementations, the trigger condition is detected when the mobile device 150 enters the payment zone of the payment module 100 which occurs upon satisfaction of a payment zone criterion. For example, when the RSSI observed by the mobile device 150 from the payment module 100 exceeds a predetermined payment zone threshold the payment zone threshold criterion is satisfied. In some implementations, the mobile device 150 provides an indication on the user interface of the application 140 for the payment processing system indicating whether the user is within the payment zone of payment module 100 and/or how close he/she is to the payment zone of payment module 100.

In some implementations, the device detects (1422) the trigger condition by: detecting a user input from a user of the device; and, in response to detecting the user input, detecting the trigger condition to perform a transaction with the payment accepting unit. For example, while the application 140 associated with the payment processing system is executed as a foreground process on the mobile device 150, the user of the mobile device interacts with the user interface of the application 140 to initiate a transaction with the payment accepting unit 120. In this example, the user performs a touch gesture with the touch screen of the mobile device 150, vocally commands the application 150 to initiate the transaction, or the like. Continuing with this example, after detecting the user interaction, the mobile device 150 (or the application 140) sends the payment module 100 the authorization grant token and the user is credited with the amount authorized in the authorization grant token in order to select goods and/or services provided by payment accepting unit 120 for purchase with the credit.

In some implementations, the authorization information further includes (1424) an expiration period for the authorization grant token, and the device sends, to the payment module, the authorization grant token via the first communication capability in response to detecting the trigger condition and in accordance with a determination that the expiration period has not elapsed. In some implementations, after detecting the trigger condition, the mobile device (or the application 140) determines whether an expiration period indicated by the authorization grant token has elapsed before sending the authorization grant token to the payment module 100. In some implementations, after determining that an expired authorization grant token is expired, the mobile device (or the application 140) determines automatically deletes the expired authorization grant token and requests a replacement authorization grant token by sending, to the server 130, the authorization request code included in current advertised information broadcasted by the payment module 100.

In response to detecting the trigger condition, the device sends (1426), to the payment module, the authorization grant token via the first communication capability. Continuing with the example in operation 1422, after detecting the user interaction, the mobile device 150 (or the application 140) sends the payment module 100 the authorization grant token and the user is credited with the amount authorized in the authorization grant token in order to select goods and/or services provided by payment accepting unit 120 for purchase with the credit.

For example, when the payment module 100 broadcasts the packet of information, if authorization code 12345 was issued in the packet (e.g., a new authorization code is issued every 100 ms), and a user uses that code to make a payment (when it comes back to the payment module 100 in the authorization grant token), the payment module 100 knows that authorization code 12345 has been used. Continuing with this example, if another subsequent user attempts to make a payment using the same authorization code 12345, the payment module 100 does not allow the subsequent user to use authorization code 12345 in order to prevent replay attacks. Additionally, in some implementations, the advertised authorization code expires after M minutes (e.g., 3, 5, 10, etc. minutes). In some implementations, the authorization code is a unique randomly or pseudo-randomly generated number that is stored by the payment module for M minutes after the authorization code is advertised, at which time it expires. In some implementations, the advertised authorization codes are unique incremental numbers that are advertised every X seconds.

The payment module 100 determines whether an authorization code in an authorization grant token is valid by identifying a current advertised authorization code and determining whether the advertised authorization is newer than the oldest valid authorization code based on the current advertised authorization code, the advertisement frequency (e.g., every X seconds), and the expiration period (e.g., M minutes).

In some implementations, after sending the authorization grant token, the device obtains (1428), from the payment module, first transaction information indicating a status of the first transaction with the payment accepting unit the first communication capability, and the device sends, to the server, the first transaction information corresponding to the status of the first transaction the second communication capability. In some implementations, the first transaction information indicates the status of the transaction initiated with an authorization grant token such as a complete, incomplete, or aborted transaction. For example, the first transaction is incomplete when the payment accepting unit 120 experiences a malfunction (e.g., a vending mechanism jams and the user of the mobile device 150 fails to receive a selected product) or the first transaction times-out by the user of the mobile device 150 waiting Z seconds without selecting goods and/or services from the payment accepting unit 120. For example, the first transaction is aborted when the user of the mobile device 150 actuates the coin return of the payment accepting unit 120 or walks away from the payment accepting unit 120 without selecting goods and/or service. In some implementations, the first transaction information includes the amount of the first transaction, current inventory state of products in payment accepting unit 120, other machine status information, and the like.

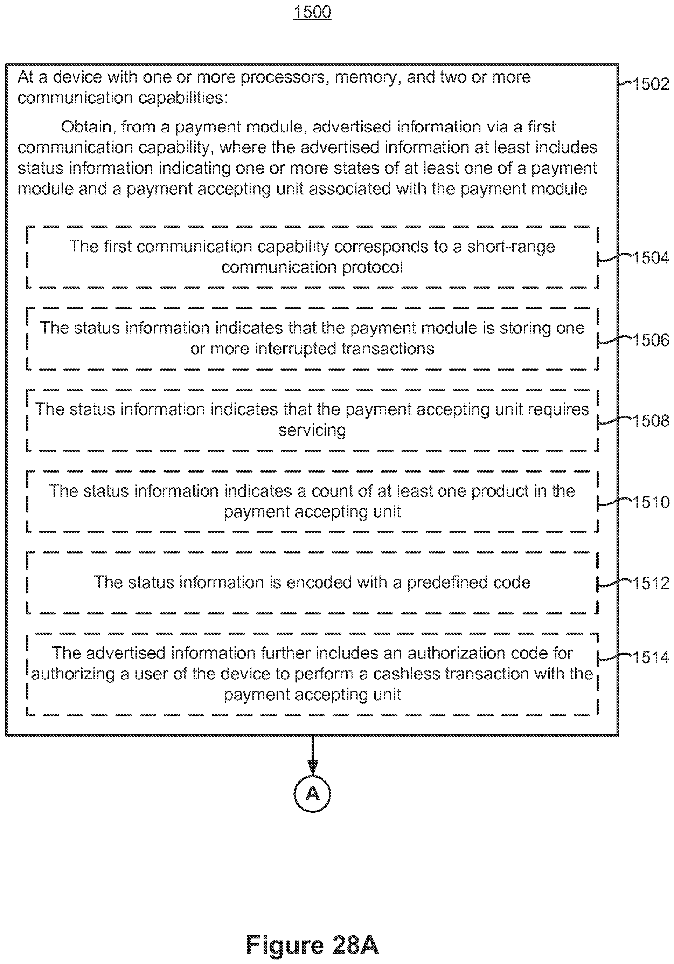

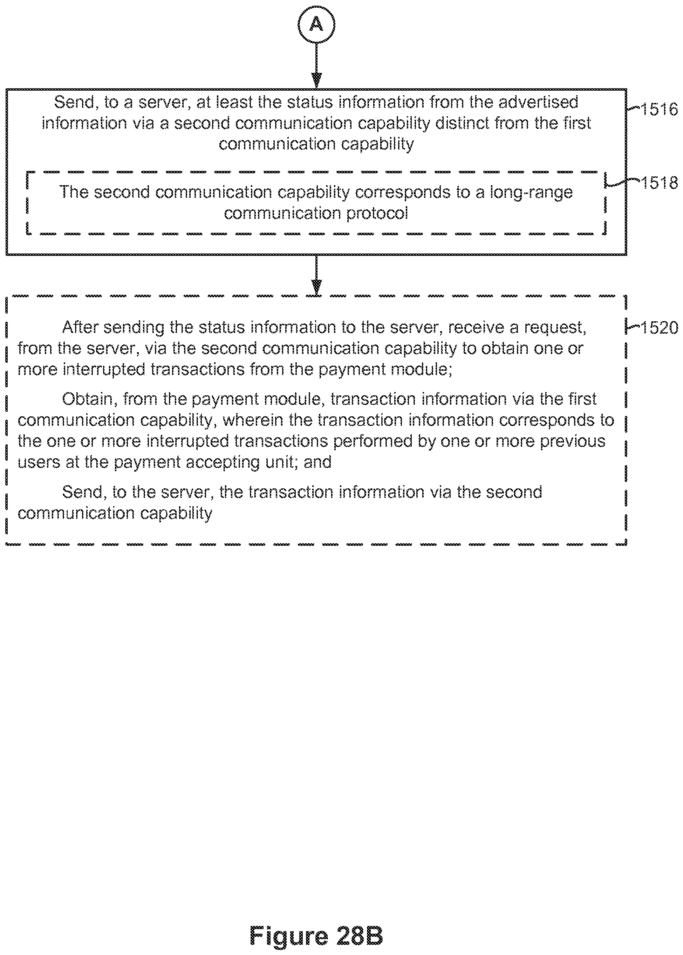

It should be understood that the particular order in which the operations in Figures 27A-27C have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 1500 in Figures 28A-28B, the method 1600 in Figures 29A-29C, the and method 1700 in Figures 30A-30D) are also applicable in an analogous manner to the method 1400 described above with respect to Figures 27A-27C.

Figures 28A-28B illustrate a flowchart diagram of a method 1500 of transmitting machine status information in accordance with some implementations. In some implementations, the method 1500 is performed by a device with one or more processors, memory, and two or more communication capabilities. For example, in some implementations, the method 1500 is performed by the mobile device 150 (Figures 5 and 21) or a component thereof (e.g., application 140). In some implementations, the method 1500 is governed by instructions that are stored in a non-transitory computer readable storage medium (e.g., the memory 860, Figure 21) and the instructions are executed by one or more processors (e.g., the processing unit 840, Figure 21) of the device. Optional operations are indicated by dashed lines (e.g., boxes with dashed-line borders).

The device obtains (1502), from a payment module, advertised information via a first communication capability, where the advertised information at least includes status information indicating one or more states of at least one of a payment module and a payment accepting unit associated with the payment module. For example, in some implementations, the payment module 100 broadcasts the packet 1100 (Figure 24A) which includes the one or more status flags 1108.

In some implementations, the first communication capability corresponds (1504) to a short-range communication protocol. As described above, short-range communication protocols include BLE, NFC, and/or other protocols utilizing non-persistent communication channels.

In some implementations, the status information indicates (1506) that the payment module is storing one or more interrupted transactions. As described in greater detail below with respect to Figures 29A-29C, in some implementations, interrupted transactions (sometimes referred to as "incomplete transactions") arise from the loss of a connection (e.g., the mobile device 150 has no cellular reception) or power. In some implementations, for example, the status flags 1108 (e.g., in packet 1100, Figure 24A) include upload information indicator 1116, which indicates that the payment module is storing one or more interrupted transactions, and/or also includes transaction information (e.g., transaction information 1150, Figure 24D) corresponding to the one or more incomplete transactions (e.g., an amount of the first transaction, a user ID, etc.). In some implementations, upload information indicator 1116 triggers the mobile device 150 to connect to payment module 100 immediately (e.g., if it has interrupted transaction information to be uploaded to the server 130). Alternatively, as described in greater detail below, the transaction information 1150 is generated and sent separately from the status flags 1108.

In some implementations, the status information indicates (1508) that the payment accepting unit requires servicing. For example, the status flags 1108 (e.g., in packet 1100, Figure 24A) include the bill/coin jam indicator 1118, which indicates that a blockage is detected in the payment feeding mechanism (e.g., bill or coin jam). Furthermore, in some implementations, the status flags 1108 (e.g., in packet 1100, Figure 24A) include the full bill/coin reservoir indicator 1120, which indicates that currency stored in the payment accepting unit requires collection by an operator of the machine. In some implementations, the status information indicates that the payment accepting unit requires servicing after a predefined period of time has elapsed since a prior servicing. In an example, the payment module 100 is configured to send status information indicating that the payment accepting unit 120 requires servicing after one month has elapsed since a last servicing.

In some implementations, the status information indicates (1510) a count of at least one product in the payment accepting unit. For example, the status flags 1108 (e.g., in packet 1100, Figure 24A) includes the inventory levels indicator 1122, which indicates that the remaining inventory of an item (e.g., an inventory levels indicator 1122 having a value of 1 indicates one corresponding item remaining for a particular product).

In some implementations, the status information is (1512) encoded with a predefined code. In some implementations, the status information is encrypted and/or encoded with a predefined code and/or key. For example, the status flags 1108 (e.g., in packet 1100, Figure 24A) include 4 Bytes of information which is encoded according to a predefined encoding scheme known by the server 130 which indicates a plurality of states of the payment module and/or the payment accepting unit 120 associated with the payment module 100.

In some implementations, the advertised information further includes (1514) an authorization code for authorizing a user of the device to perform a cashless transaction with the payment accepting unit. Authorization codes are described in greater detail above with respect to Figures 24C and 27A-27C and the accompanying text.

The device sends (1516), to a server, at least the status information from the advertised information via a second communication capability distinct from the first communication capability. For example, in step 1004 of method 1000 in Figure 23, the mobile device 150 sends an authorization request to the server 130 that includes the authorization code included in the broadcasted packet, the user ID associated with the mobile device 150, the module ID associated with the payment module 100, and also the status information.

In some implementations, the second communication capability corresponds (1518) to a long-range communication protocol. For example, in some implementations, the long-range communication protocol is one of GSM, Wi-Fi, CDMA, LTE, and/or the like.

In some implementations, after sending the status information to the server, the device receives (1520) a request, from the server, via the second communication capability to obtain one or more interrupted transactions from the payment module; obtains, from the payment module, transaction information via the first communication capability, where the transaction information corresponds to the one or more interrupted transactions performed by one or more previous users at the payment accepting unit; and sends, to the server, the transaction information via the second communication capability. In some implementations, in response to the status flags indicating one or more interrupted transactions, the server 130 requests that the mobile device 150 connect to the payment module 100 to upload the one or more interrupted transactions. This may occur even when the user of the mobile device 150 does not initiate a transaction with the payment module 100. In some implementations, the mobile device 150 obtains the transaction information upon entering an authorization zone (e.g., the authorization zone 104). See Figures 29A-29C and the accompanying text for further discussion of interrupted transactions. For example, interrupted transactions arise from the loss of a network connection (e.g., the mobile device 150 has no cellular reception) or power.

It should be understood that the particular order in which the operations in Figures 28A-28B have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 1400 in Figures 27A-27C, the method 1600 in Figures 29A-29C, and the method 1700 in Figures 30A-30D) are also applicable in an analogous manner to the method 1500 described above with respect to Figures 28A-28B.

Figures 29A-29C illustrate a flowchart diagram of a method 1600 of pay payment processing acknowledgment in accordance with some implementations. In some implementations, the method 1600 is performed by a payment module with one or more processors, memory, and one or more first communication capabilities, which is coupled with a payment accepting unit (e.g., the payment accepting unit 120 (sometimes also herein called "machine 120") (Figures 5 and 19) such as a vending machine or kiosk for dispensing goods and/or services). For example, in some implementations, the method 1600 is performed by the adapter module 100, (Figures 5 and 20). In some implementations, the method 1600 is governed by instructions that are stored in a non-transitory computer readable storage medium (e.g., the memory 760, Figure 20) and the instructions are executed by one or more processors (e.g., the processing unit 750, Figure 20) of the payment module. Optional operations are indicated by dashed lines (e.g., boxes with dashed-line borders).

The payment module obtains (1602), from the payment accepting unit, a first notification indicating completion of a first transaction performed by a first user of a first device at the payment accepting unit and an amount of the first transaction. For example, in step 1202 of the process 1200 in Figure 25A, the payment module 100 obtains a first notification from the payment accepting unit 120 after a first transaction is completed at the payment accepting unit 120.

In response to receiving the notification, the payment module (1604): generates first transaction information based at least in part on the first notification; stores the generated first transaction information; and sends the generated first transaction information to the first device via one of the one or more first communication capabilities. In some implementations, the payment module 100 generates the transaction information 1150 (Figure 24D) which includes the transaction ID 1152 (e.g., which sequentially increases after each completed transaction), the module ID 1154 (e.g., a unique ID for the payment module 100), the user ID 1156 (e.g., a unique user ID of the mobile device 150 such as a MAC address), the authorization grant 1158, the transaction status 1160 (e.g., complete, incomplete, or aborted), the transaction amount 1162 (e.g., $1.00), and/or other information 1164. The other information 1164 includes, in some implementations, information included in the packet 1100 (Figure 24A), such as one or more status flags 1108 indicating a state of the payment accepting unit, and/or other information pertaining to the payment accepting unit, the first device, the first transaction, and/or the first user. In some implementations, the first transaction information is also stored until reception of an acknowledgement from the first device (e.g., the mobile device 150). The transaction information 1150, for example, is stored in the memory 760 (Figure 20) of the payment module 100.

In some implementations, the one or more first communication capabilities correspond to a short-range communication protocol. As described above, short-range communication protocols include BLE, NFC, and/or other protocols utilizing non-persistent communication channels.

In some implementations, the first device forwards the first transaction information to a server (e.g., the server 130) via a second communication capability (e.g., a long-range communication protocol such as CDMA, GSM, Wi-Fi, or the like), and the server 130 debits the account of the first user of the first device based on the amount of the first transaction, which is indicated in the first transaction information. In some implementations, the server 130 sends encrypted acknowledgment information via the second communication capability to the first device, and the first device forwards the encrypted acknowledgment information to the payment module via the first communication capability.

After sending the first transaction information to the first device and in accordance with a determination that first acknowledgement information is received from the first device within a predetermined time period, the payment module deletes (1606) the stored first transaction information generated for the first transaction performed by the first user of the first device. In some implementations, the payment module 100 marks the first and second transaction as complete (in addition to or instead of deleting the first and second transaction information). For example, when the predetermined time period is 30 seconds, the payment module 100 deletes the first transaction information stored in the memory 760 (Figure 20) if the first acknowledgment information is received within 30 seconds of sending the first transaction information. For example, the payment module 100 determines whether the first acknowledgement information is received within a predetermined time period by comparing a timestamp of the stored first transaction information and the current time when (or if) the first acknowledgement is received.

In some implementations, the payment module encrypts (1608) the generated first transaction information, and the first acknowledgement information is encrypted. For example, the first transaction information is encrypted with a key corresponding to the payment module 100, and the first acknowledgement information is encrypted with a key selected by the server 130 that corresponds to the payment module 100. In this example, the keys are distinct, the same, or mutually known.

After sending the first transaction information to the first device and in accordance with a determination that the first acknowledgement information is not received from the first device within the predetermined time period, the payment module maintains (1610) the stored first transaction information generated for the first transaction performed by the first user of the first device. In one example, an acknowledgement is not received because the first device (e.g., the mobile device 150) loses power. In another example, the first device loses its long-range communication connection to the server 130, and is therefore unable to forward the first transaction information to a server for debiting the first user's account, or receiving an acknowledgement from the server 130. In another example, the user of the first device maliciously severs the long-range communication connection to interrupt the transaction information from being sent to the server 130, or to interrupt the acknowledgement information from being received by the payment module 100. In some implementations, if the payment module 100 does not receive the acknowledgment information within the predetermined time period, or if the acknowledgment information cannot be decrypted (e.g., it has been fraudulently modified or accessed), the payment module 100 maintains the first transaction information (e.g., keeps transactions information 1150 stored in the memory 760, Figure 20) and attempts to send the first transaction information to the server 130 via another device (e.g., a second mobile device 150). For example, as discussed in greater detail below, the payment module leverages a subsequent second transaction involving a second device, and the first transaction information is sent to the second device with second transaction information that corresponds to a second transaction initiated by the user of the second device.

In some implementations, in accordance with the determination that the first acknowledgement information is not received from the first device within a predetermined time period, the payment module disables (1612) usage rights for the first user at the payment accepting unit. For example, the first user or user ID associated with the first device is suspended from performing cashless transactions, and further authorization grant tokens received from the first user or user ID are ignored by the payment module 100. Thus, for example, the first user cannot initiate another transaction cashless transaction with the payment module 100. In some implementations, the server 130 and/or payment module 100 records a history of incomplete transactions. In some implementations, the server 130 and/or payment module 100 blacklists the user only after a predefined number of incomplete transactions (e.g., 20 incomplete transactions), accounting for incomplete transactions that arise from non-malicious actions, such as a loss of cellular connection or power.

In some implementations, in accordance with the determination that the first acknowledgement information is not received from the first device within the predetermined time period, the payment module broadcasts (1614) an information packet via one of the one or more first communication capabilities, where the information packet includes one or more status flags indicating one or more unacknowledged first transactions including the first transaction performed by the first user of the first device. For example, the payment module 100 broadcasts packets (e.g., the packet 1100, Figure 24A) which include the status flags 1108 that indicate (e.g., upload information indicator 1116) that the payment module 100 has information that needs to be uploaded to the server 130 (e.g., transaction information for the interrupted/unacknowledged first transaction). Alternatively, in some implementations, the transaction information 1150 (Figure 24D) corresponding to an incomplete transaction is appended to the advertised information instead of merely setting the upload information indicator 1116 in the broadcast advertised information.

In some implementations, after determining that the first acknowledgement information is not received from the first device within the predetermined time period, the payment module obtains (1616), from the payment accepting unit, a second notification indicating completion of a second first transaction performed by a second user of a second device at the payment accepting unit and an amount of the first transaction. In response to receiving the second notification, the payment module 100 generates second transaction information based at least in part on the second notification, stores the generated second transaction information, and sends the generated first transaction information and the generated second transaction information to the second device via one of the one or more first communication capabilities. Thus, the payment module 100 leverages the subsequent second transaction by sending the first transaction information with the second transaction information. In some implementations, when the second user enters an authorization zone (e.g., authorization zone 104, Figure 1), transaction information corresponding to the first user's incomplete first transaction is transmitted to the second device.

In some implementations, in accordance with a determination that second acknowledgement information is received from the second device within the predetermined time period, the payment modules deletes (1618) the stored first transaction information generated for the first transaction performed by the first user of the first device and the stored second transaction information generated for the second transaction performed by the second user of the second device. For example, in step 1272 of the process 1250 in Figure 25B, after receiving the first transaction information and the second transaction information, the server 130 sends acknowledgement information to the payment module 100 via the second device 150-2, which acknowledges reception of the first transaction information and the second transaction information. Continuing with this example, in step 1276 of the process 1250 in Figure 25B, after receiving the acknowledgement information, the payment module 100 deletes the first transaction information and the second transaction information.

In some implementations, in accordance with a determination that the second acknowledgement information is not received from the second device within a predetermined time period, the payment module maintains (1620) the stored first transaction information generated for the first transaction performed by the first user of the first device and the stored second transaction information generated for the second transaction performed by the second user of the second device. In some further implementations, the payment module 100 leverages a subsequent transaction involving a third device, and both the first and second transaction information are sent to the third device with third transaction information that corresponds to a third transaction initiated by the user of the third device.

It should be understood that the particular order in which the operations in Figures 29A-29C have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 1400 in Figures 27A-27C, the method 1500 in Figures 28A-28B, and the method 1700 in Figures 30A-30D) are also applicable in an analogous manner to the method 1600 described above with respect to Figures 29A-29C.

Figures 30A-30D illustrate a flowchart diagram of a method 1700 of updating firmware of the payment module in the payment processing system .

In some implementations, the method 1700 is performed by a device (e.g., the mobile device 150) with one or more processors, memory, and two or more communication capabilities. In some implementations, the method 1700 is governed by instructions that are stored in a non-transitory computer readable storage medium (e.g., the memory 860, Figure 21) and the instructions are executed by one or more processors of the mobile device 150 (e.g., the processing unit 850, Figure 21). Optional operations are indicated by dashed lines (e.g., boxes with dashed-line borders).

As noted above, in some circumstances, a payment module (e.g., the payment module 100, Figure 26A) in a payment processing system cannot establish a direct communications channel to a server (e.g., the server 130, Figure 26A), and is therefore unable to directly receive firmware updates from the server. In these cases, as described below, if the firmware of the payment module is determined to satisfy certain criteria (e.g., firmware version is out-of-date), one or more devices (e.g., the mobile device 150) will send data packets to the payment module for updating the payment module's firmware. The device serves as a communications bridge between the payment module and the server, whereby the device obtains a verification request from the payment module, which the device then sends to the server for processing (e.g., the server 130 verifies that the data packets are non-corrupted and complete). After processing the verification request, the server sends a firmware command to the device, which the device then sends to the payment module for execution.

A device (e.g., the mobile device 150) obtains (1702), from a payment module (e.g., the payment module 100), advertised information via a first communication capability, where the advertised information at least includes a current firmware version of the payment module. In some implementations, the current firmware version corresponds to a timestamp (e.g., February 5, 2014), while in other implementations, the current firmware version is denoted by a version number (e.g., v1.4). Advertised information is described in greater detail herein with respect to Figure 24A.

In some implementations, the first communication capability corresponds (1704) to a short-range communication protocol. As described above, short-range communication protocols include BLE, NFC, and/or other protocols utilizing non-persistent communication channels.

The device determines (1708) that the current firmware version of the payment module satisfies one or more predefined firmware criteria.

In some implementations, the current firmware version of the payment module is compared (1710) with a firmware version stored by the device, and the one or more predefined firmware criteria are satisfied (1712) if the current firmware version of the payment module does not match the firmware version stored by the device. In some implementations, the device obtains an indication (e.g., from the server 130, Figure 26A) that the firmware version it stores is the latest firmware version. In some implementations, the latest firmware version is determined from a timestamp associated with the firmware. Alternatively, in some implementations, it is presumed that the firmware version stored by the device is the latest version.

In some implementations, the predefined firmware criteria are satisfied if the current firmware version of the payment module predates the firmware version stored by the device (e.g., the firmware of payment module 100 has a timestamp of February 5, 2014, compared to the firmware of mobile device 150 which has a timestamp of April 4, 2014), or has a version number less than the firmware version stored by the device (e.g., firmware v1.4 of the payment module 100 compared to firmware v1.5 of the mobile device 150, where the firmware version numbers are assigned in monotonically ascending order by the server 130). In other implementations, the predefined firmware criteria are satisfied if the current firmware version of the payment module is newer than the firmware version stored by the device. This arises, for example, if a firmware rollback procedure is initiated, where the newer firmware version of the payment module is overwritten with an older firmware version of the device.

Alternatively, in some implementations, the device receives, from a server, the determination that the current firmware version of the payment module satisfies one or more predefined firmware criteria. In these implementations, for example, the device sends the current firmware version of the payment module to the server (e.g., the server 130, Figure 26A) via a second communication capability (e.g., GSM), where the server determines (e.g., by comparing the current firmware version of the payment module and a latest version of the firmware) if the current firmware version satisfies predefined firmware criteria (as described in greater detail above).

In some implementations, prior to sending firmware update information and in accordance with a determination that the current firmware version of the payment module does not match the firmware version stored by the first device (1714), the device sends (1716), to a server, a firmware update request so as to update the firmware of the payment module via a second communication capability. In some implementations, the second communication capability corresponds (1718) to a long-range communication protocol. For example, in some implementations, the long-range communication protocol is one of GSM, Wi-Fi, CDMA, LTE, and/or the like.

In some implementations, in response to sending the firmware update request, the device receives (1720) from the server, a firmware update approval message, and in response to receiving the firmware update approval message, the device sends (1724), to the payment module, the firmware update approval message. In some implementations, as described in greater detail with respect to Figure 26C, the server (e.g., server 130) permits or declines the firmware update request for any of a number of reasons (e.g., firmware stored by the mobile device 150 is out of date).

Furthermore, in some implementations, firmware update approval message includes (1722) a verification value for each of the one or more data packets and a hash value for the firmware update information. A more in-depth discussion is provided in the corresponding description for Figure 26C, with respect to the ways in which the payment module 100 uses the verification value and hash value for verifying and executing the firmware update information (e.g., one or more data packets corresponding to a latest firmware version).

In some implementations, sending the firmware update information via the first communication capability includes (1726), in response to receiving the firmware update approval message from the server, sending, to the payment module, the firmware update information via the first communication capability.

In some implementations, the device obtains (1728) update status information from the payment module, wherein the update status information indicates remaining packets for updating the current firmware version of the payment module. As described in greater detail with respect to Figure 26C, in some implementations, the update status information indicating remaining packets (e.g., packets 50-100) for updating the current firmware version is sent by the payment module 100 after receiving a firmware update approval message, while in other implementations, the update status information is included in broadcasted packet 1100 that is broadcast by the payment module 100. Alternatively and/or additionally, the update status information indicates one or more data packets received for updating the current firmware version of the payment module to the most recent firmware version. Furthermore, in some implementations, the update status information identifies the firmware version to which the remaining and/or received data packets correspond. Furthermore, in some implementations, sending the firmware update information via the first communication capability is based on the update status information.

In accordance with a determination that the current firmware version of the payment module satisfies one or more predefined firmware criteria, the device sends (1730), to the payment module, firmware update information via the first communication capability, where the firmware update information includes one or more data packets for updating the current firmware version of the payment module. In some implementations, the firmware update information is stored by the device, and was included in a latest update to the application 140 associated with the payment processing system. In some implementations, the firmware update information is obtained from a server (e.g., the server 130, Figure 26A) via a second communication capability (e.g., GSM), and sent to the payment module via the first communication capability.

In some implementations, advertised information further includes (1706) an authorization zone threshold criterion, and the device determines (1732) that the authorization zone threshold criterion is satisfied. For example, in some implementations, the device starts transmitting data packets to update the payment module firmware upon entering the authorization zone (e.g., the authorization zone 140, Figure 1) of the payment module. In some implementations, once the device has started transmitting data packets, if the device later leaves the authorization zone, the device continues to transmit data packets as long as the device remains with the communication zone of the payment module (e.g., BLE range), or, alternatively, the device ceases transmission of data packets.

In some implementations, the device obtains (1734) additional advertised information, where the additional advertised information at least includes update status information. In some implementations, the additional advertised information further includes a new authorization code and/or status flags. In some implementations, the update status information identifies (1738) one or more remaining data packets (e.g., packets 50-100) for updating the current firmware version of the payment module to the most recent firmware version. Alternatively and/or additionally, the update status information identifies (1740) one or more data packets received for updating the current firmware version of the payment module to the most recent firmware version. Furthermore, in some implementations, the update status information identifies the firmware version to which the remaining and/or received data packets correspond. Optionally, the update status information is included in transaction information (e.g., the transaction information 1150, after completing a transaction).

In some implementations, the update status information includes (1736) a verification request. For example, a verification request is generated and included in update status information when the payment module 100 has received all data packets necessary for completing the firmware update. A verification request is generally associated with a request to implement the received data packets in order to update the firmware of the payment module 100. In some implementations, a verification request is a request for a server (e.g., the server 130, Figure 26A) to determine if any received data packets are corrupted, if the received data packets form a complete set sufficient to initiate a firmware update, and/or if the received data packets correspond to a latest firmware version. A verification request is a checksum performed by the payment module on the received data packets for the firmware update according to a predefined checksum algorithm. Furthermore, in some implementations, the verification request is sent to the server with transaction status information (e.g., transaction information 1150, Figure 24D) after a user completes a transaction (e.g., the step 1260 in process 1250 of Figure 25B).

In some implementations in which the device obtains additional advertised information including a verification request, the device sends (1742), to a server, at least the current firmware version and a verification request via a second communication capability. In some implementations, the second communication capability corresponds (1744) to a long-range communication protocol (e.g., GSM, Wi-Fi, CDMA, LTE, and/or the like). In some implementations, the verification request is sent by the payment module directly to the server via a secure communications channel (e.g., an encrypted channel).

Furthermore, in some implementations, the device obtains (1746), from the server, a firmware command via the second communication capability, and sends (1748), to the payment module, the firmware command via the first communication capability. The server processes the verification request prior to issuing a firmware command to the device to send to the payment module. As described above, in some implementations, the server determines if any received data packets are corrupt (e.g., by using a checksum), if the received data packets form a complete set sufficient to initiate a firmware update, and/or if the received data packets correspond to a latest firmware version. In some implementations, unless some or all of these aforementioned conditions (e.g., corrupted data packets, complete set, etc.) are not satisfied, the server issues an approval code and/or a firmware command to initiate an update of the payment module's firmware. The server determines whether a checksum included in the verification request matches a checksum value determined by the server for the firmware update indicated by the verification request (e.g., a version number). For example, if the checksum included in the verification request does not match the server's checksum, the server issues a firmware command to not implement the firmware update and to delete the data packets corresponding to the firmware update associated with the verification request was sent. In this example, the checksums may not match if one or more of the data packets for the firmware update are corrupted or have been altered.

In some implementations, the firmware command is a rollback command (e.g., ignore firmware update and keep current firmware version of the payment module 100), a delete command (e.g., deleting either all or a portion of the data packets for the firmware update), or an initialization command (e.g., initializing the firmware update in the payment module 100). If the server determines, in some implementations, that the received data packets do not correspond to a latest firmware version (e.g., the firmware update information stored by the device corresponds to firmware v1.4, compared to a latest firmware v1.5), the server will send, to the device or directly to the payment module, firmware update information including one or more data packets corresponding to a latest firmware version. This may occur, for example, if the mobile device 150 itself is not storing the latest firmware. In some implementations, the firmware command is encrypted with an encryption key that corresponds to the payment module (e.g., a shared secret key or a public key in an asymmetric cryptography scheme).

In some implementations, a second device with one or more processors, memory, and two or more communication capabilities, obtain (1750), from the payment module, advertised information via the first communication capability, where the advertised information at least includes a current firmware version of the payment module and the update status information. The second device determines (1752) whether the current firmware version of the payment module predates a most recent firmware version. In accordance with a determination that the current firmware version of the payment module satisfies one or more predefined firmware criteria, the second device sends (1754), to the payment module, firmware update information via the first communication capability, where the firmware update information one or more additional data packets for updating the current firmware version based at least in part on the update status information. Thus, in some implementations, multiple devices send to the payment module portions of a complete set of data packets needed for a firmware update, where the data packets sent by one device are distinct from the data packets sent by another device. In one example, when a firmware update includes data packets 1 through 100, a first device (e.g. the mobile device 150) sends data packets 1 through 50 to the payment module 100, and a second device (a different mobile device 150, not shown) sends data packets 50 through 100.

It should be understood that the particular order in which the operations in Figures 30A-30D have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 1400 in Figures 27A-27C, the method 1500 in Figures 28A-28B, and the method 1600 in Figures 29A-29C) are also applicable in an analogous manner to the method 1600 described above with respect to Figures 30A-30D.

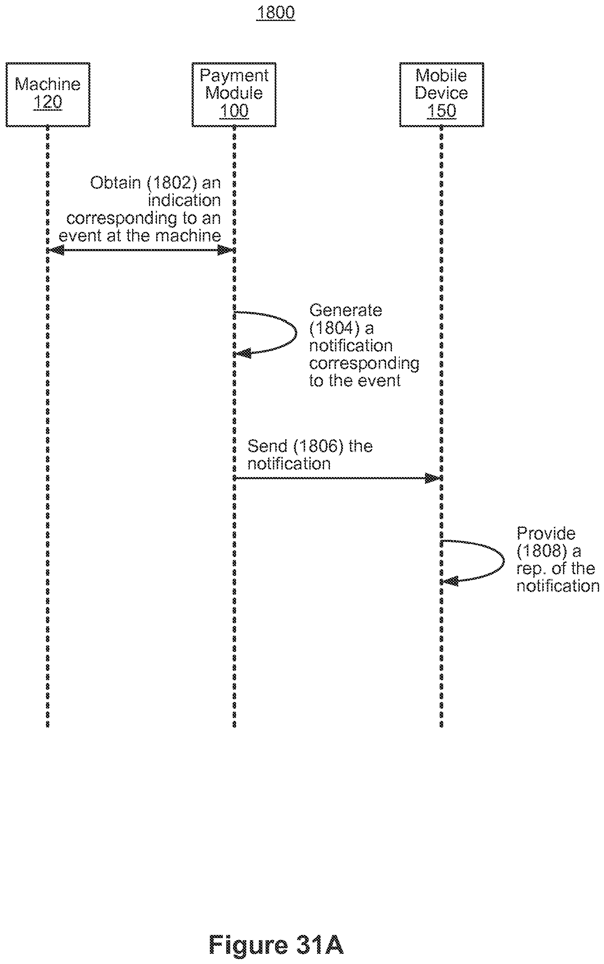

Figure 31A illustrates a schematic flow diagram of a process 1800 for providing a representation of a machine event at a mobile device in accordance with some implementations. In some implementations, the payment processing system includes one or more payment modules 100 (e.g., each associated with a respective payment accepting unit 120 such an automatic retailing machine for dispensing goods and/or services), one or more mobile devices 150 (e.g., each executing the application 140 for the payment processing system either as a foreground or background process), and the server 130. The server 130 manages the payment processing system and, in some cases, supplies, operates, and/or manufactures the one or more payment modules 100. For brevity, the process 1800 will be described with respect to a respective payment module 100 associated with a respective payment accepting unit 120 (sometimes also herein called the "machine 120") and a respective mobile device 150 in the payment processing system.

In some implementations, the process 1800 occurs after the mobile device 150 sends the AuthGrant in Figure 8C. In some implementations, the process 1800 occurs after the mobile device 150 sends the authorization grant to the payment module 100 in operation 1012 of process 1000 in Figure 23.

The payment module 100 obtains (1802) an indication corresponding to an event at the machine 120. For example, after the process 1000 in Figure 23, the user of the mobile device 150 selects a product to purchase from the machine 120 by interacting with one or more input mechanisms of the machine 120 (e.g., buttons 126 or a touch screen display 124 shown in Figure 19), and the machine 120 dispenses the selected product. Continuing with this example, after the product is dispensed, the transaction is complete and the payment module 100 obtains an indication from the machine of the completed transaction. In some implementations, the indication includes the amount of the transaction and (optionally) machine status information associated with the machine 120 such as inventory information as to one or more products of the payment accepting unit 120 and/or the like. In some implementations, the indication includes status information indicating that the transaction was aborted (e.g., via actuation of a coin return mechanism at the machine 120) or that there was an error with the transaction (e.g., a vending jam or other malfunction with the machine 120).

After obtaining the indication corresponding to completion of the first transaction, the payment module 100 generates (1804) a notification corresponding to the event at the machine 120.

The payment module 100 sends (1806), via a short-range communication capability (e.g., BLE), the notification to the mobile device 150. In some implementations, in addition to the notification corresponding to the event at machine 120, the payment module 100 sends a promotion or advertisement to the mobile device 150 that is targeted to the user of the mobile device 150 based on the transaction or the user ID included in the AuthGrant or authorization grant token that initiated the transaction. In some implementations, in addition to the notification corresponding to the event at machine 120, the payment module 100 sends a pseudo randomly selected promotion or advertisement to the mobile device 150 that is selected from a set of promotions or advertisements stored by the payment module 100. For example, the promotion is a coupon for a free soda following the purchase of ten sodas from the machine 120 by the user of the mobile device 150. For example, the promotion is a random 50% off coupon or free soda coupon. For example, the transaction corresponds to a vended soda and the advertisement corresponds to a new soda from the same company that produces the vended soda.

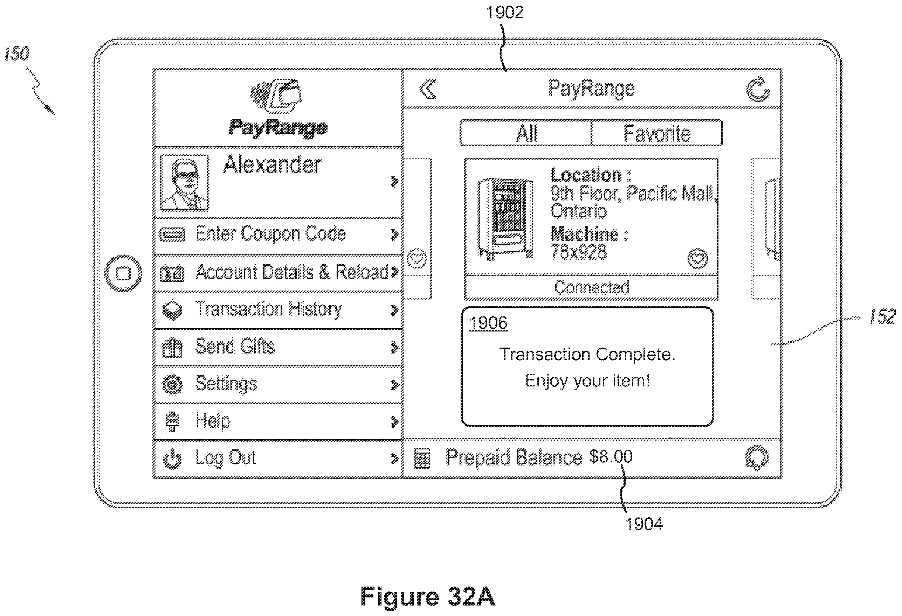

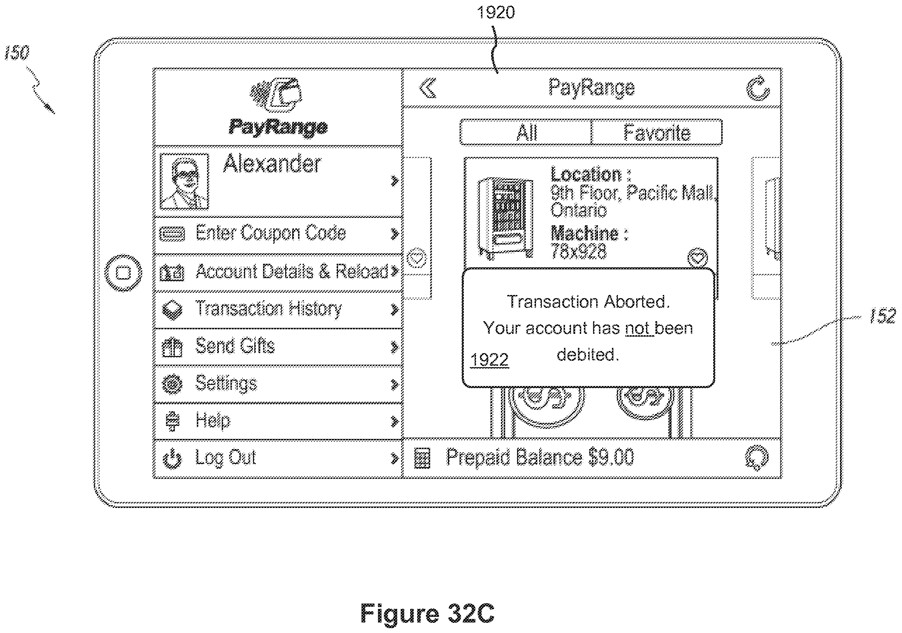

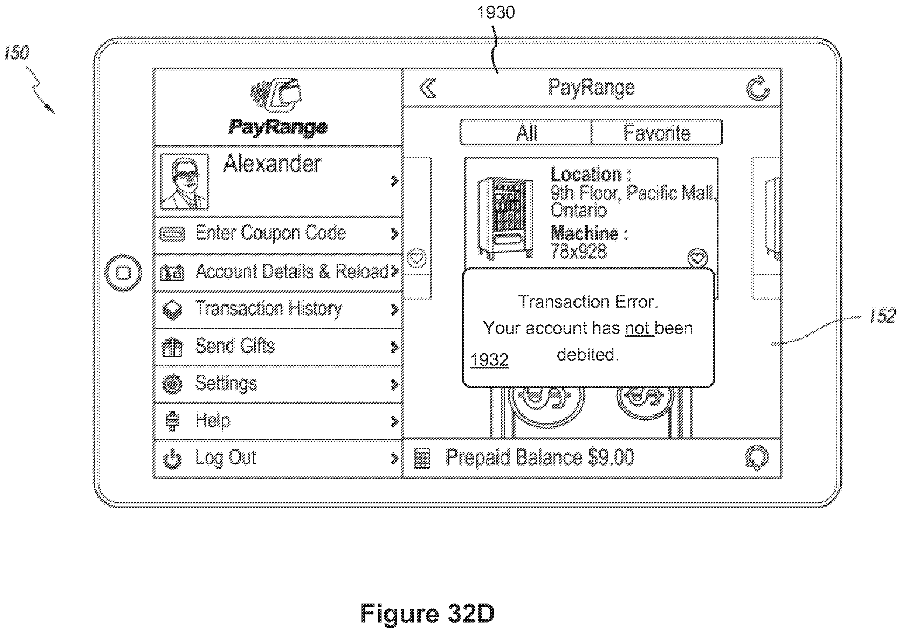

The mobile device 150 provides (1808) a representation of the notification. For example, in Figure 32A, the mobile device 150 displays user interface 1902 on touch screen 152 with a message 1906 that indicates that the first transaction is complete. For example, in Figure 32C, the mobile device 150 displays user interface 1920 on touch screen 152 with a message 1922 that indicates that the transaction was aborted. For example, in Figure 32D, the mobile device 150 displays user interface 1930 on touch screen 152 with a message 1932 that indicates that there was an error with the transaction. For example, the mobile device 150 also displays a representation of the promotion of advertisement on the user interface for the application 140.

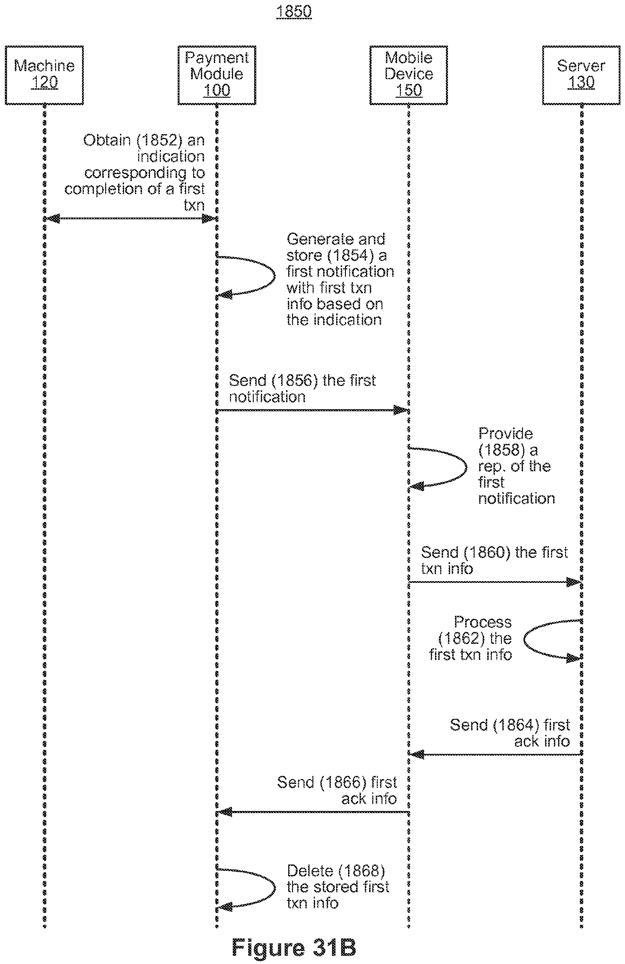

Figure 31B illustrates a schematic flow diagram of a process 1850 for processing acknowledgement information in accordance with some implementations. In some implementations, the payment processing system includes one or more payment modules 100 (e.g., each associated with a respective payment accepting unit 120 such an automatic retailing machine for dispensing goods and/or services), one or more mobile devices 150 (e.g., each executing the application 140 for the payment processing system either as a foreground or background process), and the server 130. The server 130 manages the payment processing system and, in some cases, supplies, operates, and/or manufactures the one or more payment modules 100. For brevity, the process 1850 will be described with respect to a respective payment module 100 associated with a respective payment accepting unit 120 (machine 120) and a respective mobile device 150 in the payment processing system.

In some implementations, the process 1850 occurs after the mobile device 150 sends the AuthGrant in Figure 8C. In some implementations, the process 1850 occurs after the mobile device 150 sends the authorization grant to the payment module 100 in operation 1012 of process 1000 in Figure 23.

The payment module 100 obtains (1852) an indication corresponding to completion of a first transaction from the machine 120. For example, after the process 1000 in Figure 23, the user of the mobile device 150 selects a product to purchase from the machine 120 by interacting with one or more input mechanisms of the machine 120 (e.g., buttons 126 or a touch screen display 124 shown in Figure 19), and the machine 120 dispenses the selected product. Continuing with this example, after the product is dispensed, the transaction is complete and the payment module 100 obtains an indication from the machine of the completed transaction. In some implementations, the indication includes the amount of the transaction and (optionally) machine status information associated with the machine 120 such as inventory information as to one or more products of the payment accepting unit 120 and/or the like.

After obtaining the indication corresponding to completion of the first transaction, the payment module 100 generates (1854) a first notification with first transaction information based on the indication, and the payment module 100 stores the first transaction information. In some implementations, the first transaction information includes a transaction ID for the first transaction, a module ID corresponding to payment module 100, a user ID corresponding to the mobile device 150, transaction status information indicating that the first transaction is complete, and the transaction amount indicated by the indication. In some implementations, the payment module 100 retains the authorization code included in the original broadcasted packet and/or the authorization grant token and includes the authorization code in the first transaction information. In some implementations, the authorization code is encrypted with a secret key corresponding to the payment module 100, which is shared with the server 130 but not the mobile device 150. In some implementations, the first transaction information further includes other information such as the machine status information included in the first notification or transaction information corresponding to previous interrupted transaction(s). See Figure 24D and the accompanying text for further discussion regarding transaction information 1150.

The payment module 100 sends (1856), via a short-range communication capability (e.g., BLE), the first notification with first transaction information to the mobile device 150. In some implementations, in addition to first transaction information corresponding to completion of the first transaction at machine 120, the first notification includes a promotion or advertisement to the mobile device 150 that is targeted to the user of the mobile device 150 based on the transaction or the user ID included in the AuthGrant or authorization grant token that initiated the transaction. In some implementations, in addition to first transaction information corresponding to completion of the first transaction at machine 120, the first notification includes a pseudo randomly selected promotion or advertisement to the mobile device 150 that is selected from a set of promotions or advertisements stored by the payment module 100. For example, the promotion is a coupon for a free soda following the purchase of ten sodas from the machine 120 by the user of the mobile device 150. For example, the promotion is a random 50% off coupon or free soda coupon. For example, the transaction corresponds to a vended soda and the advertisement corresponds to a new soda from the same company that produces the vended soda.

The mobile device 150 provides (1858) a representation of the first notification. For example, in Figure 32A, the mobile device 150 displays user interface 1902 on touch screen 152 with a message 1906 that indicates that the first transaction is complete. For example, the mobile device 150 also displays a representation of the promotion of advertisement on the user interface for the application 140.

The mobile device 150 sends (1860), via a long-range communication capability (e.g., GSM, CDMA, Wi-Fi, or the like), the first transaction information to the server 130.

The server 130 processes (1862) the first transaction information. For example, the server 130 debits the account of the user associated with the user ID in the first transaction information in the amount indicated by the first transaction information.

The server 130 sends (1864), via a long-range communication capability (e.g., GSM, CDMA, Wi-Fi, or the like), first acknowledgment information to the mobile device 150. In some implementations, the first acknowledgment information acknowledges that the server 130 received the first transaction information. In some implementations, the first acknowledgment information includes the user ID, the module ID, the transaction ID, and (optionally) the authorization grant included in the transaction information (e.g., auth grant 1158, Figure 24D).

After receiving the first acknowledgement information, the mobile device 150 sends (1866), via a short-range communication capability (e.g., BLE), the first acknowledgment information to the payment module 100.

After receiving the first acknowledgment information, the payment module 100 deletes (1868) the stored first transaction information.

Attention is now directed towards implementations of user interfaces and associated processes that may be implemented on the mobile device 150 with zero or more speakers, zero or more microphones, and a display. For example, the display is a touch screen (sometimes also herein called a "touch screen display") enabled to receive one or more contacts and display information (e.g., media content, websites and web pages thereof, user interface for the application 140, and/or user interfaces for applications). Figures 32A-32D illustrate example user interfaces for providing a representation of a machine event at a mobile device in accordance with some implementations.

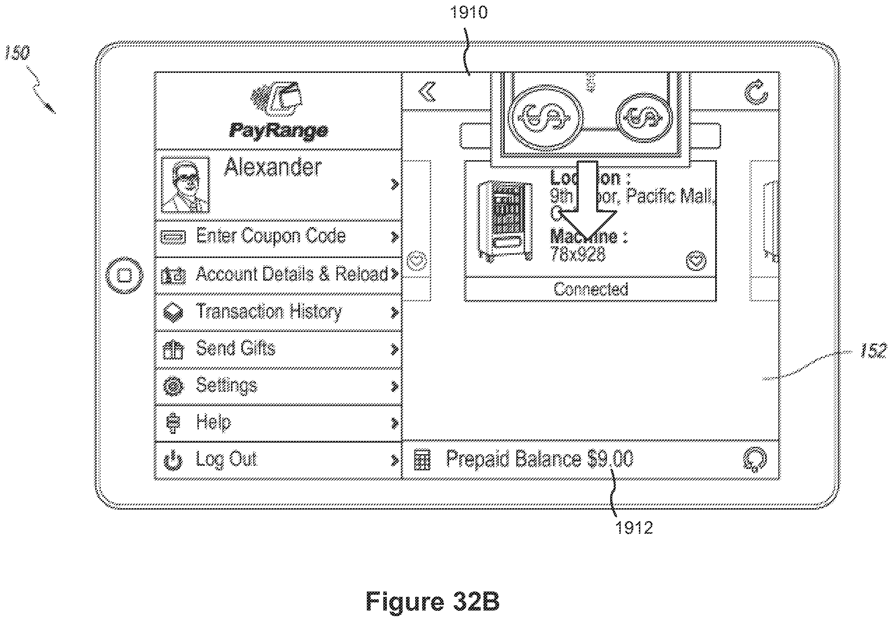

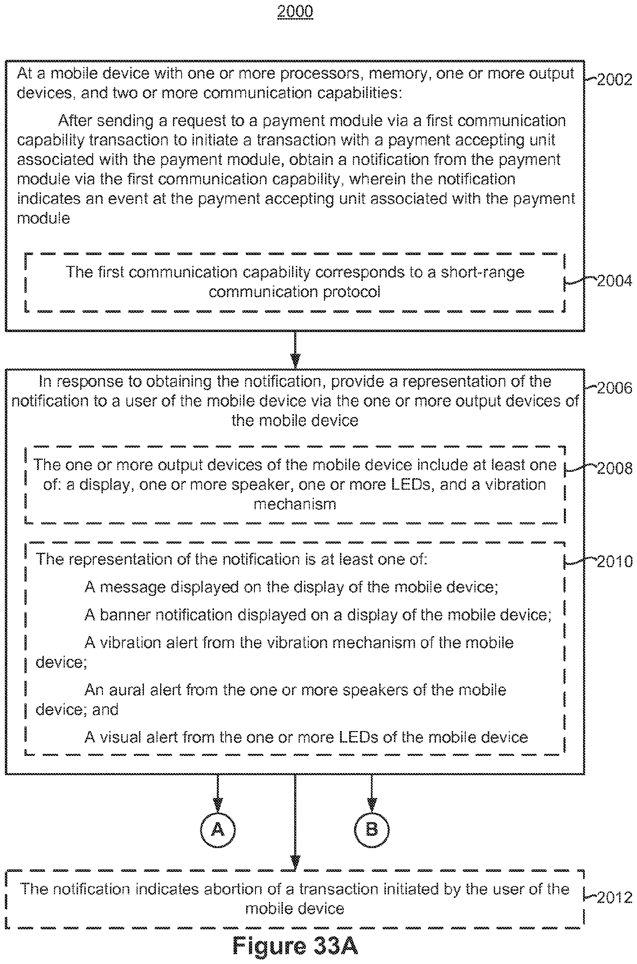

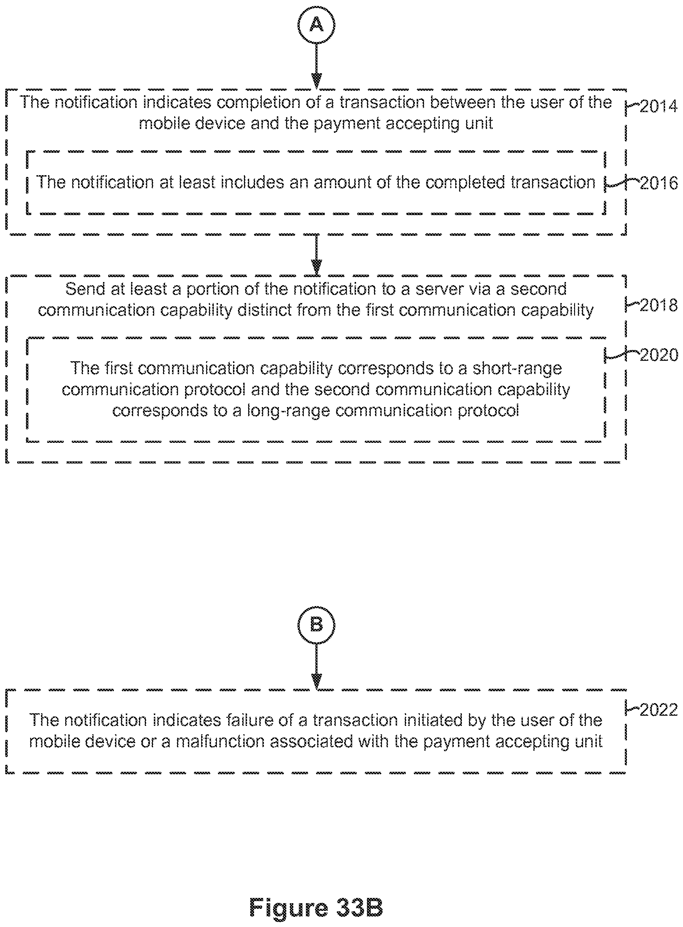

Figures 32A-32D show user interfaces displayed on mobile device 150 (e.g., a mobile phone); however, one skilled in the art will appreciate that the user interfaces shown in Figures 32A-32D may be implemented on other similar computing devices. The user interfaces in Figures 32-32D are used to illustrate the processes described herein, including the process described with respect to Figures 31A-31B and 33A-33B.

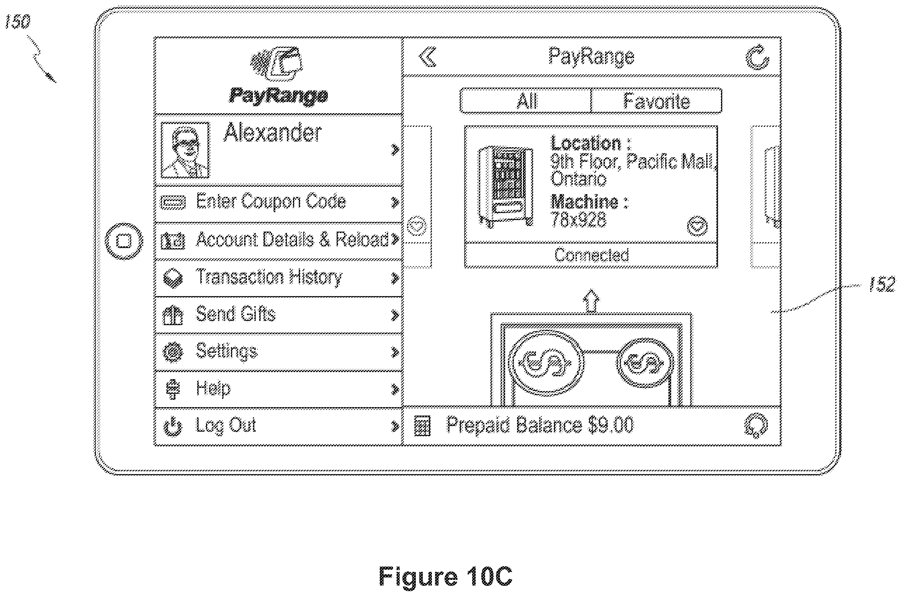

For example, a user of the mobile device 150 approaches a machine 120 (e.g., vending machine 78x928 as shown in Figures 10A-10D) and executes application 140 on the mobile device 150 so as to perform an electronic transaction with the machine 120. For example, with reference to Figures 10C-10D, the user of the mobile device 150 initiates a transaction with the machine 120 (e.g., vending machine 78x928) by performing a swipe gesture at a location corresponding to the representation of the dollar bill (e.g., a substantially vertical swipe gesture from a location corresponding to the representation of the dollar bill to the top edge of the mobile device 150).

Figure 32A illustrates the mobile device 150 displaying a user interface 1902 of the application 140 on touch screen 152 after the user of the mobile device 150 initiates and performs a transaction with the machine 120. In Figure 32A, the user interface 1902 includes prepaid balance 1904 which indicates that $1.00 has been deducted from the prepaid balance after performing a transaction with the machine 120 as compared to the prepaid balance in Figure 10C-10D (i.e., $9.00 in Figures 10C-10D and $8.00 in Figure 32A). In Figure 32A, the user interface 1902 also includes a message 1906 indicating that the transaction with the machine 120 is complete.

Figure 32B illustrates the mobile device 150 displaying a user interface 1910 of the application 140 on touch screen 152 after the user of the mobile device 150 initiates a transaction with the machine 120 and an error with the transaction occurs or the transaction is aborted. In Figure 32B, the user interface 1910 shows the representation of the dollar bill sliding onto the touch screen 152 (e.g., in a substantially top to bottom manner). In Figure 32B, the interface 1910 includes prepaid balance 1912 which indicates that no money has been deducted from the prepaid balance after performing a transaction with the machine 120 as compared to the prepaid balance in Figure 10C-10D (i.e., $9.00 in Figures 10C-10D and $9.00 in Figure 32B).

Figure 32C illustrates the mobile device 150 displaying a user interface 1920 of the application 140 on touch screen 152 after the representation of the dollar bill slides onto the touch screen 152 in Figure 32B due to the transaction being aborted. For example, the user aborts the transaction by actuating a coin return mechanism of the machine 120. In another example, the user aborts the transaction by selection an abort affordance on the interface of the application 140 (not shown). In Figure 32C, the user interface 1920 includes a message 1922 indicating that the transaction with the machine 120 was aborted and that the user's account was not debited for the aborted transaction.

Figure 32D illustrates the mobile device 150 displaying a user interface 1930 of the application 140 on touch screen 152 after the representation of the dollar bill slides onto the touch screen 152 in Figure 32B due to the occurrence of an error with the transaction. For example, a malfunction with the machine 120 (e.g., a vending jam or stuck item) causes the error to occur. In Figure 32D, the user interface 1930 is associated with the application 140 executed on the mobile device 150. In Figure 32D, the user interface 1930 includes a message 1932 indicating that an error occurred during the transaction with the machine 120 and that the user's account was not debited for the transaction.

Figures 33A-33B illustrate a flowchart diagram of a method 2000 of presenting representations of payment accepting unit events in accordance with some implementations. In some implementations, the method 2000 is performed by a device with one or more processors, memory, one or more output devices, and two or more communication capabilities. For example, in some implementations, the method 2000 is performed by the mobile device 150 (Figures 5 and 21) or a component thereof (e.g., the application 140). In some implementations, the method 2000 is governed by instructions that are stored in a non-transitory computer readable storage medium (e.g., the memory 860, Figure 21) and the instructions are executed by one or more processors (e.g., the processing unit 850, Figure 21) of the device. Optional operations are indicated by dashed lines (e.g., boxes with dashed-line borders).

After sending a request to a payment module via a first communication capability transaction to initiate a transaction with a payment accepting unit (e.g., an offline-payment operated machine such as a vending machine or kiosk) associated with the payment module, the mobile device obtains (2002) a notification from the payment module via the first communication capability, where the notification indicates an event at the payment accepting unit associated with the payment module. In some implementations, method 2000 occurs after the mobile device 150 sends the AuthGrant in Figure 8C. In some implementations, method 2000 occurs after the mobile device 150 sends the authorization grant to the payment module 100 in operation 1012 of process 1000 in Figure 23. Operation 1806 of Figure 31A, for example, shows the mobile device 150 receiving a notification sent by the payment module 100 (e.g., the adapter module 100, Figures 5 and 20) sent via the first communication capability (e.g., a short-range communication technology/protocol such as BLE). The notification indicates an event at the payment accepting unit (e.g., the payment accepting unit 120, Figures 5 and 19) (sometimes also herein called "machine 120") associated with the payment module 100.

In some implementations, the first communication capability corresponds (2004) to a short-range communication protocol. As described above, the short-range communication protocols include BLE, NFC, and/or other protocols utilizing non-persistent communication channels.

In response to obtaining the notification, the mobile device provides (2006) a representation of the notification to a user of the mobile device via the one or more output devices of the mobile device. For example, in Figure 32A, the mobile device 150 displays user interface 1902 on touch screen 152 with a message 1906 that indicates that the first transaction is complete. For example, in Figure 32C, the mobile device 150 displays user interface 1920 on touch screen 152 with a message 1922 that indicates that the transaction was aborted. For example, in Figure 32D, the mobile device 150 displays user interface 1930 on touch screen 152 with a message 1932 that indicates that there was an error with the transaction.

In some implementations, the one or more output devices of the mobile device include (2008) at least one of: a display, one or more speakers, one or more LEDs, and a vibration mechanism. For example, the mobile device 150 includes one or more of a display (e.g., the touch screen 152, Figures 10A-10D), one or more speakers, one or more LEDs, and a vibration mechanism.

In some implementations, the representation of the notification is at least one of (2010): a message displayed on the display of the mobile device; a banner notification displayed on a display of the mobile device; a vibration alert from the vibration mechanism of the mobile device; an aural alert from the one or more speakers of the mobile device; and a visual alert from the one or more LEDs of the mobile device. For example, in Figures 32B-32D, the representation of the notification includes messages 1906, 1922, and 1932 displayed on the touch screen 152 of the mobile device 150. In another example, the representation of the notification is a predefined sequence of vibrations provided by the vibration mechanism of the mobile device 150. In another example, the representation of the notification is a predefined sequence of tones provided by the one or more speakers of the mobile device 150. In another example, the representation of the notification is a predefined sequence of blinking LEDs of the mobile device 150.

In some implementations, the notification indicates (2012) abortion of a transaction initiated by the user of the mobile device. In Figure 32C, for example, the user interface 1920 includes the message 1922 indicating that the transaction has been aborted. For example, the user aborts the transaction by actuating a coin return mechanism of the machine 120. In another example, the user aborts the transaction by selection an abort affordance on the interface of the application 140 (not shown).

In some implementations, the notification indicates (2014) completion of a transaction between the user of the mobile device and the payment accepting unit. In Figure 32A, for example, the user interface 1902 includes the message 1906 indicating that completion of the transaction with the machine 120 initiated by the user of the mobile device 150.

In some implementations, the notification indicating completion of the transaction at least includes (2016) an amount of the completed transaction. In Figure 32A, for example, the user interface 1902 includes prepaid balance 1904 which indicates that $1.00 has been deducted from the prepaid balance after performing a transaction with the machine 120 as compared to the prepaid balance in Figure 10C-10D (i.e., $9.00 in Figures 10C-10D and $8.00 in Figure 32A).

In some implementations, the mobile device sends (2018) at least a portion of the notification to a server via a second communication capability distinct from the first communication capability. Operation 1860 of Figure 31B, for example, shows the mobile device 150 sending first transaction information to the server 130 for a completed transaction via the second communication capability (e.g., a long-range communication protocols such as Wi-Fi, CDMA, GSM, and/or the like). For example, the first transaction information at least includes the amount of the first completed transaction.

In some implementations, the first communication capability corresponds (2020) to a short-range communication protocol and the second communication capability corresponds to a long-range communication protocol. For example, the first communication capability of the mobile device 150 is a radio/transceiver means for communicating via one or more short-range communication protocols such as BLE, NFC, and/or the like (i.e., a non-persistent communication channel). For example, the second communication capability of the mobile device 150 is a radio/transceiver means for communicating via one or more long-range communication protocols such as Wi-Fi, CDMA, GSM, and/or the like.

In some implementations, the notification indicates (2022) failure of a transaction initiated by the user of the mobile device or a malfunction associated with the payment accepting unit. In Figure 32D, for example, the user interface 1930 includes the message 1932 indicating that there was an error with the transaction. For example, the transaction fails due to a vending jam or other malfunction. In another example, the payment accepting unit experiences a malfunction due to an open door or the like. In some implementations, at least a portion of the failure/malfunction notification is sent to the sever 130 and an alert is subsequently sent to the operator of the payment accepting unit (e.g., the machine 120) by the server 130.

It should be understood that the particular order in which the operations in Figures 33A-33B have been described is merely for example purposes and is not intended to indicate that the described order is the only order in which the operations could be performed. One of ordinary skill in the art would recognize various ways to reorder the operations described herein. Additionally, it should be noted that details of other processes described herein with respect to other methods described herein are also applicable in an analogous manner to the method 2000 described above with respect to Figures 33A-33B.

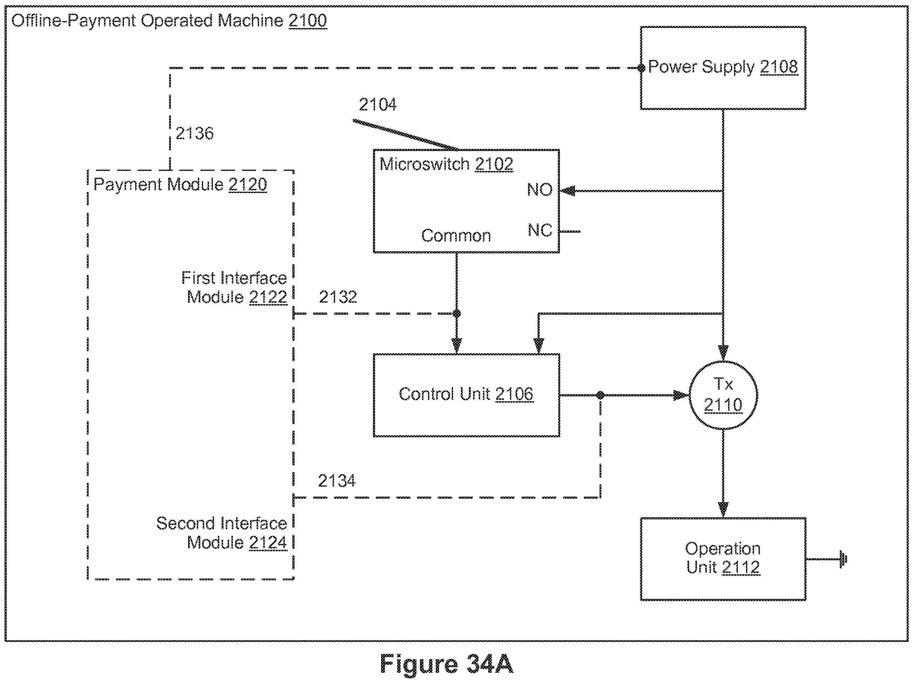

Figure 34A illustrates a block diagram of an offline-payment operated machine 2100 in accordance with some implementations. For example, the offline-payment operated machine 2100 (e.g., a form of the machine 120) is an electro-mechanical machine capable of accepting currency (e.g., coins), which is not connected to any networks (e.g., telephone, cellular, or Wi-Fi). For example, the offline-payment operated machine 2100 is a washer or dryer at a laundromat, a parking meter, a car wash payment kiosk, or other offline-payment operated machine that dispenses goods and/or services.

In Figure 34A, the offline-payment operated machine 2100 includes a microswitch 2102, a control unit 2106, a power supply 2108, a transistor 2110, and an operation unit 2112. The components of the offline-payment operated machine 2100 in Figure 34A are examples and one of skill in the art will appreciate that various other components may be included in or excluded from the offline-payment operated machine 2100.

In Figure 34A, the microswitch 2102 is a leveraged microswitch with lever 2104. For example, the microswitch 2102 is a CHERRY BRAND™ microswitch with a normally open terminal ("NO"), a normally closed terminal ("NC"), and a common terminal. For example, the lever 2104 is incorporated into a coin slot of the offline-payment operated machine 2100 and is depressed whenever a coin slides down the coin slot into a coin reservoir of the offline-payment operated machine 2100 (not shown). For example, when the lever 2104 is depressed and the microswitch 2102 is wired in the NO configuration as shown in Figure 34A, the switch is closed. Continuing with this example, when the switch is closed, control unit 2106 receives a pulse (i.e., a payment acceptance signal) from the common terminal of the microswitch 2102 indicating depression of the lever 2104 from the reception of a US quarter (i.e., $0.25) or coin of another value.

In some implementations, when the control unit 2106 receives a preset sequence of payment acceptance signals indicative of a preset number of coins being received by the microswitch 2102, the control unit 2106 initiates the operation of the offline-payment operated machine 2100. For example, after receiving the preset sequence of payment acceptance signals (e.g., three pulses indicating reception of three US quarters), the control unit 2106 initiates operation of the offline-payment operated machine 2100 by applying current to the gate of the transistor 2110 which allows current to flow from the power supply 2108 to operation unit 2112. For example, the operation unit 2112 is a motor of a dryer which begins spinning once current flows from the power supply 2108.

In Figure 34A, payment module 2120 (e.g., a form of the adapter module 100, Figures 5 and 20) is configured to be installed in the offline-payment operated machine 2100 so as to retrofit the offline-payment operated machine 2100 to be able to accept electronic payments. In some implementations, the payment module 2120 includes all or some of the components included adapter module 100 in Figure 20 such as processing unit 750, memory 760, a security unit 755, and a communications unit 770. In some implementations, the payment module 2120 also includes a first interface module 2122, a second interface module 2124, and a lead 2136 for drawing power from power supply 2108 of the offline-payment operated machine 2100.

In Figure 34A, the first interface module 2122 is configured to sample payment acceptance signals from the microswitch 2102 (e.g., a coin receiving switch) via lead 2132 of the offline-payment operated machine 2100. For example, the payment acceptance signals are indicative of a coin being received by the microswitch 2102 which depress lever 2104. In Figure 34A, the second interface module 2124 is configured to sample control signals from the control unit 2106 of the offline-payment operated machine 2100 via lead 2134 that initiate an operation of the offline-payment operated machine (e.g., the application of current to the gate of the transistor 2110) in response to receiving a preset sequence of payment acceptance signals from the microswitch 2102 (e.g., the coin receiving switch) indicative of the preset number of coins.

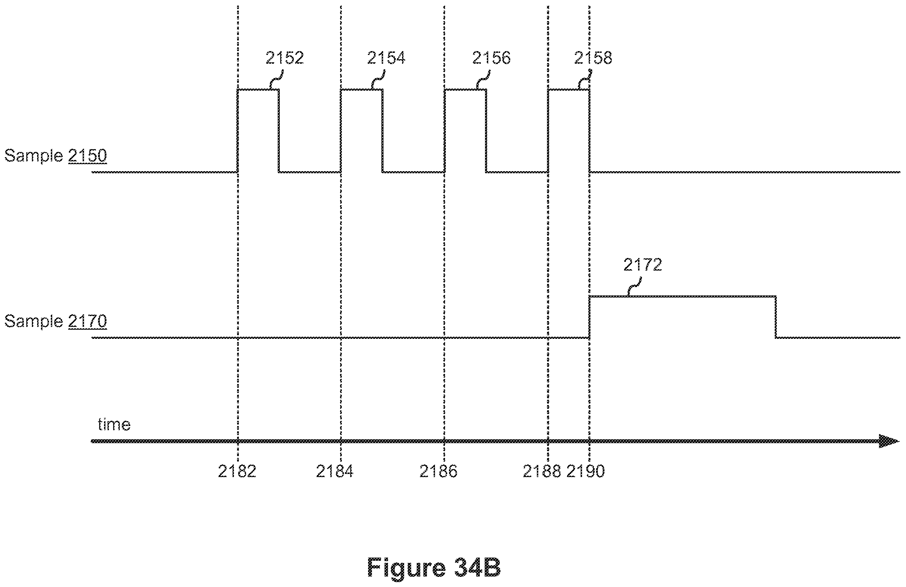

Figure 34B illustrates signals sampled by the payment module 2120 in accordance with some implementations. In Figure 34B, sample 2150 represents a preset sequence of payment acceptance signals sampled by the first interface module 2122 via lead 2132 that are sent from the microswitch 2102 to the control unit 2106. For example, the preset sequence of payment acceptance signals indicative of the preset number of coins include pulses (i.e., payment acceptance signals) 2152, 2154, 2156, and 2158. For example, the leading edges of pulses 2152, 2154, 2156, and 2158 at times 2182, 2184, 2186, and 2188 indicate reception of a coin by microswitch 2102 which causes the switch to close when wired in the NO configuration as shown in Figure 34A. In Figure 34B, sample 2170 represents a control signal sampled by the second interface module 2124 via lead 2134 that is sent from the control unit 2106 to transistor 2110. In Figure 34B, the sample 2170 includes a pulse 2172 that is sent from the control unit 2106 to transistor 2110 at time 2190 after receiving the preset sequence of payment acceptance signals from the microswitch 2102 (i.e., pulses 2152, 2154, 2156, and 2158).

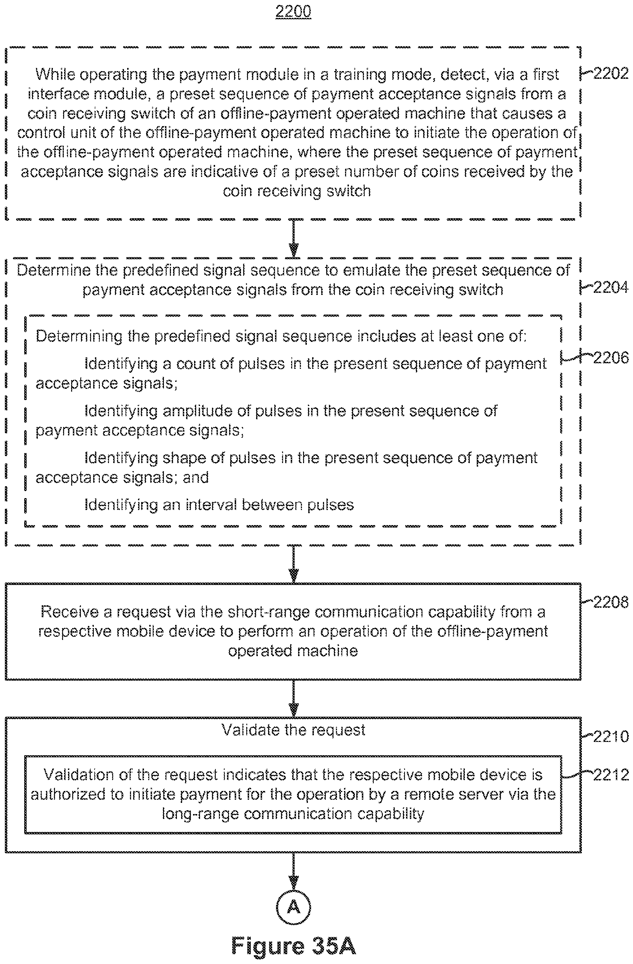

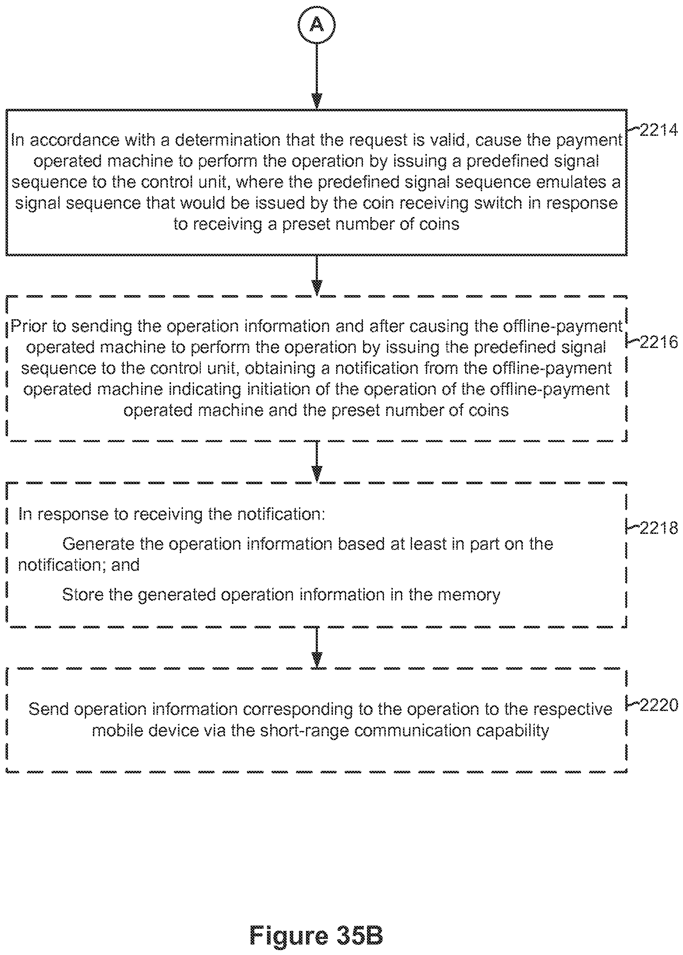

Figures 35A-35B illustrate a flowchart diagram of a method of retrofitting an offline-payment operated machine to accept electronic payments in accordance with some implementations. In some implementations, the method 2200 is performed by a payment module with one or more processors and memory. In some implementations, the payment module also includes a short-range communication capability corresponding to a short-range communication protocol (e.g., a non-persistent communication channel such as BLE, NFC, and/or the like), where the short-range communication capability is configured to communicate with one or more mobile devices, where each of the one or more mobile devices is configured with a complimentary short-range communication capability and a long-range communication capability corresponding to a long-range communication protocol (e.g., Wi-Fi, CDMA, GSM, and/or the like).

In some implementations, the payment module is coupled with an offline-payment operated machine (e.g., the payment accepting unit 120, Figures 5 and 19 (sometimes also herein called "machine 120"), or the offline-payment operated machine 2100, Figure 34A) such as dryer or washer in a laundromat, a parking meter, a car wash payment kiosk, or the like. In some implementations, the offline-payment operated machine includes a coin receiving switch (e.g., the microswitch 2102, Figure 34A) and a control unit (e.g., the control unit 2106, Figure 34A). In some implementations, the payment module further includes: (A) a first interface module (e.g., the first interface module 2122, Figure 34A) configured to sample payment acceptance signals from the coin receiving switch of the offline-payment operated machine, where the signals are indicative of a coin being received by the coin receiving switch; and (B) a second interface module (e.g., the second interface module 2124, Figure 34A) configured to sample control signals from the control unit of the offline-payment operated machine that initiate an operation of the offline-payment operated machine in response to receiving a preset sequence of payment acceptance signals from the coin receiving switch indicative of the preset number of coins. By sampling and storing these signals, the payment module 2120 is able to simulate operation of a respective coin receiving switch in response to receiving the correct/preset number of coins so as to trigger operation of the offline-payment operated machine in response to completion of an electronic payment.

For example, in some implementations, the method 2200 is performed by the adapter module 100 (Figures 5 and 20) or payment module 2120 (Figure 34A). In some implementations, the method 2200 is governed by instructions that are stored in a non-transitory computer readable storage medium (e.g., the memory 760, Figure 20) and the instructions are executed by one or more processors (e.g., the processing unit 750, Figure 20) of the payment module. Optional operations are indicated by dashed lines (e.g., boxes with dashed-line borders).

In some implementations, the payment module detects (2202), via the first interface module, a preset sequence of payment acceptance signals from the coin receiving switch that causes the control unit to initiate the operation of the offline-payment operated machine, where the preset sequence of payment acceptance signals are indicative of a preset number of coins received by the coin receiving switch. For example, with reference to Figures 34A-34B, the first interface module 2122 of the payment module 2120 samples payment acceptance signals via lead 2132 from the microswitch 2102 to the control unit 2106. For example, each of the payment acceptance signals is indicative of reception of a coin by the microswitch 2102. Continuing with this example, the second interface module 2124 of the payment module 2120 samples control signals via lead 2134 from the control unit 2106 to the transistor 2110. The payment module 2120 detects a preset sequence of payment acceptance signals from the microswitch 2102 that causes the control unit 2106 to apply a current to the gate of the transistor 2110 (e.g., the control signals). For example, the preset sequence of payment acceptance signals is indicative of a preset number of coins received by the microswitch 2102 to cause operation of the offline-payment operated machine 2100. For example, the application of current to the gate of the transistor 2110 allows current to flow from the power supply 2108 to the operation unit 2112 so that the operation. For example, the operation unit 2112 is a motor of a dryer which begins spinning once current flows from the power supply 2108.

In some implementations, the payment module determines (2204) the predefined signal sequence to emulate the preset sequence of payment acceptance signals from the coin receiving switch. In some implementations, after detecting the preset sequence of payment acceptance signals that causes the control unit 2106 to initiate the operation of the offline-payment operated machine 2100, the payment module 2120 determines a predefined signal sequence to emulate the preset sequence of payment acceptance signals. In some implementations, the money value associated with each pulse in the preset sequence of payment acceptance signals from the microswitch 2102, indicative of the preset number of coins to initiate the operation of the offline-payment operated machine 2100, is a default currency (e.g., USD) and amount (e.g., $0.25) set in the firmware of the payment module 2120. In some implementations, the money value associated with the each pulse in the preset sequence of payment acceptance signals from the microswitch 2102, indicative of the preset number of coins to initiate the operation of the offline-payment operated machine 2100, is set by the server 130 and can be changed remotely by using the mobile device 150 as a communications bridge to send information indicating the value of a pulse from the server 130 to the mobile device 150 via the second communication capability (e.g., GSM, CDMA, or Wi-Fi) and forwarding the information from the mobile device to the payment module 2120 via the first communication capability (e.g., BLE). For instance, in most cases, each pulse is US $0.25.

In some implementations, determining the predefined signal sequence includes (2206) at least one of: identifying a count of pulses in the present sequence of payment acceptance signals; identifying amplitude of pulses in the present sequence of payment acceptance signals; identifying shape of pulses in the present sequence of payment acceptance signals; and identifying an interval between pulses. In some implementations, after detecting the preset sequence of payment acceptance signals (e.g., the sample 2150, Figure 34B), the payment module 2120 determines a predefined signal sequence to emulate the preset sequence of payment acceptance signals by identifying a count of pulses in the preset sequence of payment acceptance signals, an interval between pulses in the preset sequence of payment acceptance signals, the shape of pulses in the preset sequence of payment acceptance signals, and an amplitude of pulses in the preset sequence of payment acceptance signals.

The payment module receives (2208) a request via the short-range communication capability from a respective mobile device to perform an operation of the offline-payment operated machine. For example, with reference to Figure 8C, the payment module 2120 (Figure 34A) receives the AuthGrant from the mobile device 150 via the short-range communication capability (e.g., BLE) indicating that the user of the mobile device 150 wishes to perform the operation of the offline-payment operated machine 2100 (Figure 34A). For example with reference to operation 1012 in Figure 23, the payment module 2120 (Figure 34A) receives an authorization grant token from the mobile device 150 via the short-range communication capability (e.g., BLE) indicating that the user of the mobile device 150 wishes to perform the operation of the offline-payment operated machine 2100 (Figure 34A).

The payment module validates (2210) the request. Validation of the request indicates (2212) that the respective mobile device is authorized to initiate payment for the operation by a remote server via the long-range communication capability. In some implementations, the payment module 2120 validates the request from the mobile device 150 by determining whether the AuthGrant or the authorization grant token includes a valid authorization code.

In accordance with a determination that the request is valid, the payment module causes (2214) the payment operated machine to perform the operation by issuing a predefined signal sequence to the control unit, where the predefined signal sequence emulates a signal sequence that would be issued by the coin receiving switch in response to receiving a preset number of coins. For example, with reference to Figure 34B, the payment module 2120 issues a predefined signal sequence with first interface module 2122 to the control unit 2106 that emulates sample 2150 in Figure 34B. Continuing with this example, in response to receiving the predefined signal sequence from the payment module 2120 control unit 2106 causes initiation of the operation of the offline-payment operated machine 2100 by applying current to the gate of the transistor 2110 which allows current to flow from the power supply 2108 to operation unit 2112. In some implementations, the control unit 2106 causes initiation of the operation by setting a timer to an amount of time corresponding to the preset number of coins whereby current flows to the gate of the transistor 2110 for the set amount of time. For example, the preset number of coins is a number of a coins required to run the offline-payment operated machine 2100 by for a default amount of time and subsequent coins may be added to extend the amount of time that the offline-payment operated machine 2100 by will run. In some implementations, the preset number of coins is a number of a coins required to cause the offline-payment operated machine 2100 to dispense a purchased item, such as laundry detergent.

Alternatively, in some implementations, in accordance with a determination that the request is valid, the offline-payment operated machine 2100 displays credit to the user (e.g., via one of the displays 122 or 124 shown in Figure 19) and the user interacts with the input mechanisms of the offline-payment operated machine 2100 (e.g., via the buttons 126 or a touch screen display 124 shown in Figure 19) to perform the operation of the machine. For example, if the offline-payment operated machine 2100 is a dryer, the user of the mobile device 150 selects the appropriate spin cycle via input mechanisms of the dryer, and when the user of the mobile device 150 selects a start/run input mechanism of the dryer, control unit 1506 of the dryer causes initiation of the operation of the dryer (e.g., starting a motor that corresponds to operation unit 2112 in Figure 34A).

In some implementations, prior to sending the operation information and after causing the offline-payment operated machine to perform the operation by issuing the predefined signal sequence to the control unit, the payment module obtains (2216) a notification from the offline-payment operated machine indicating initiation of the operation of the offline-payment operated machine and the preset number of coins. For example, after issuing the preset signal sequence to control unit 2106, the payment module 2120 (Figure 34A) obtains a notification indicating that the control unit 2106 sent control signals to initiate operation of the offline-payment operated machine 2100 in response to receiving the predefined signal sequence. For example, the notification is obtained by the second interface module 2124 (e.g., the sample 2170, Figure 34B) sampling controls signals sent by control unit 2106 (e.g., application of current to the gate of the transistor 2110 which allows current to flow from the power supply 2108 to operation unit 2112).

In response to receiving the notification, the payment module (2218): generates the operation information based at least in part on the notification; and stores the generated operation information in the memory. For example, after obtaining the notification, the payment module 2120 (Figure 34A) generates operation information corresponding to performance of the operation and the preset number of coins associated with the predefined signal sequence (e.g., the amount required to initiate operation of the offline-payment operated machine 2100) and stores the operation information in memory local to the payment module 2120 (e.g., the memory 760, Figure 20).

In some implementations, the payment module sends (2220) operation information corresponding to the operation to the respective mobile device via the short-range communication capability. For example, after operation 2218, the payment module 2120 (Figure 34A) sends the operation information to the mobile device 150 via the first communication capability of the mobile device 150 such as a radio/transceiver means for communicating via one or more short-range communication protocols such as BLE, NFC, and/or the like (i.e., a non-persistent communication channel)

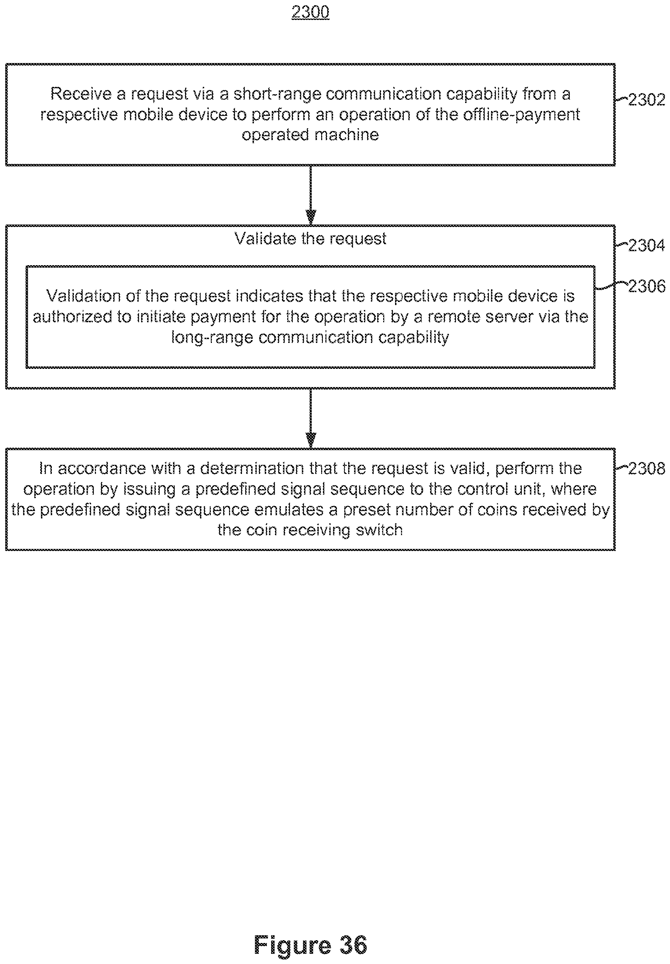

It should be understood that the particular order in which the operations in Figures 35A-35B have been described is merely for example purposes and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 2300 in Figure 36) are also applicable in an analogous manner to the method 2200 described above with respect to Figures 35A-35B.

Figure 36 illustrates a flowchart diagram of a method 2300 of enabling a payment operated machine to accept electronic payments in accordance with some implementations. In some implementations, the method 2300 is performed by an offline-payment operated machine (e.g., the payment accepting unit 120, Figures 5 and 19 (sometimes also herein called "machine 120"), or the offline-payment operated machine 2100, Figure 34A) such as dryer or washer in a laundromat, a parking meter, a car wash payment kiosk, or the like.

In some implementations, the offline-payment operated machine includes a control unit (e.g., the control unit 2106, Figure 34A), memory, and a coin receiving switch (e.g., the microswitch 2102, Figure 34A). In some implementations, the offline-payment operated machine also includes a short-range communication capability corresponding to a short-range communication protocol (e.g., a non-persistent communication channel such as BLE, NFC, and/or the like), where the short-range communication capability is configured to communicate with one or more mobile devices, where each of the one or more mobile devices is configured with a complimentary short-range communication capability and a long-range communication capability corresponding to a long-range communication protocol (e.g., Wi-Fi, CDMA, GSM, and/or the like). For example, in some implementations, the method 2300 is performed by the machine 120, (Figures 5 and 19). In some implementations, the method 2300 is governed by instructions that are stored in a non-transitory computer readable storage medium and the instructions are executed by the control unit of the offline-payment operated machine.

The offline-payment operated machine receives (2302) a request via a short-range communication capability from a respective mobile device to perform an operation of the offline-payment operated machine. For example, with reference to Figure 8C, the payment module 2120 (Figure 34A) receives the AuthGrant from the mobile device 150 via the short-range communication capability (e.g., BLE) indicating that the user of the mobile device 150 wishes to perform the operation of the offline-payment operated machine 2100 (Figure 34A). For example with reference to operation 1012 in Figure 23, the payment module 2120 (Figure 34A) receives an authorization grant token from the mobile device 150 via the short-range communication capability (e.g., BLE) indicating that the user of the mobile device 150 wishes to perform the operation of the offline-payment operated machine 2100 (Figure 34A).

The offline-payment operated machine validates (2304) the request. Validation of the request indicates (2306) that the respective mobile device is authorized to initiate payment for the operation by a remote server via the long-range communication capability. In some implementations, the payment module 2120 validates the request from the mobile device 150 by determining whether the AuthGrant or the authorization grant token includes a valid authorization code.

In accordance with a determination that the request is valid, the offline-payment operated machine performs (2308) the operation by issuing a predefined signal sequence to the control unit, where the predefined signal sequence emulates a preset number of coins received by the coin receiving switch. For example, in accordance with a determination that the request is valid, the offline-payment operated machine or a component thereof issues a predefined signal sequence to the control unit 2106 that emulates sample 2150 in Figure 34B. Continuing with this example, in response to receiving the predefined signal sequence from the payment module 2120, control unit 2106 causes initiation of the operation of the offline-payment operated machine 2100 by applying current to the gate of the transistor 2110 which allows current to flow from the power supply 2108 to operation unit 2112. In another example, in accordance with a determination that the request is valid, the control unit 2106 causes initiation of the operation of the offline-payment operated machine 2100 by applying current to the gate of the transistor 2110 which allows current to flow from the power supply 2108 to operation unit 2112.

It should be understood that the particular order in which the operations in Figure 36 have been described is merely for example purposes and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., the method 2200 in Figures 35A-35B) are also applicable in an analogous manner to the method 2300 described above with respect to Figure 36.

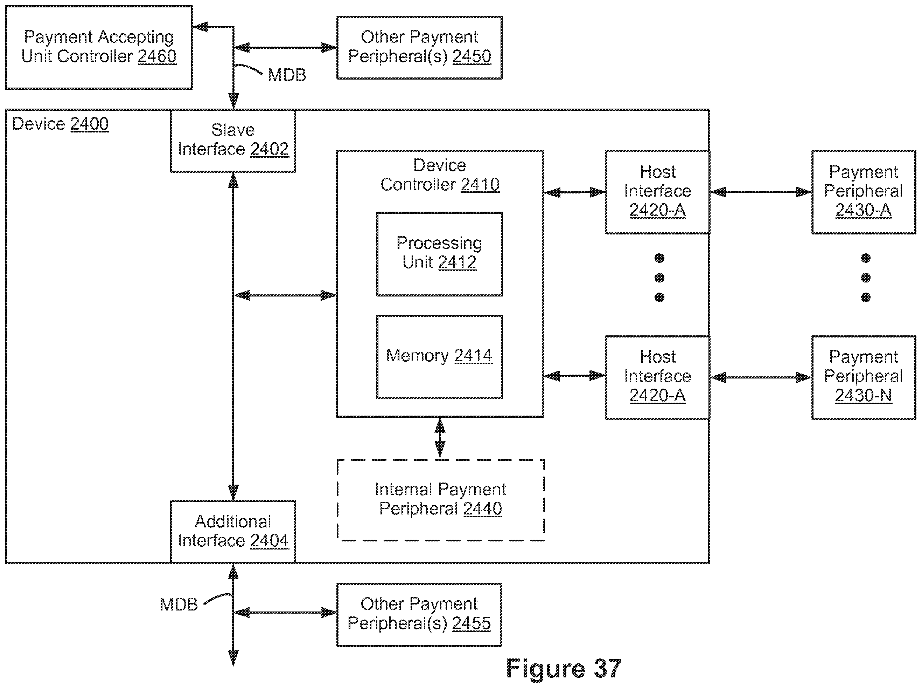

Figure 37 is a block diagram of a device 2400 for retrofitting the payment accepting unit 120 (sometimes also herein called "machine 120") to accommodate a plurality of payment peripherals 2430 in accordance with some implementations. The device 2400 is similar to and adapted from adapter module 100 (sometimes also herein called "payment module 100") as shown in Figure 20 in that the device 2400 connects to a multi-drop bus (MDB) of payment accepting unit 120 and, optionally, provides the payment processing functionalities discussed in Figures 7, 8A-8G, 9A-9E, and 23 (e.g., via the internal payment peripheral 2440).

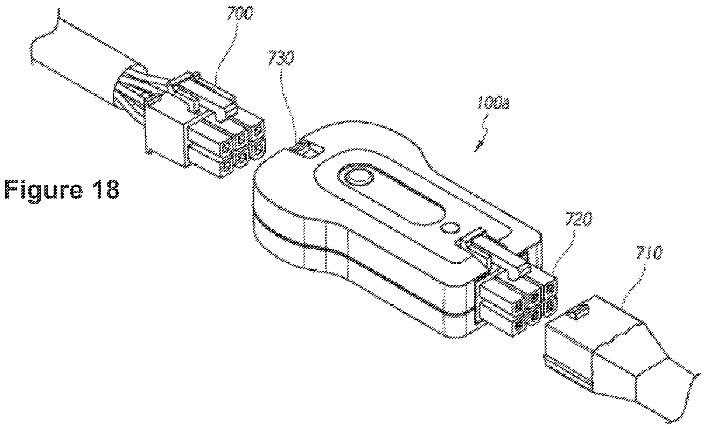

In some implementations, during normal operation, the payment accepting unit 120 includes a multi-drop bus (MDB) connecting a payment accepting unit controller 2460 of the payment accepting unit 120 with payment peripherals (e.g., other payment peripheral(s) 2450, 2455 including coin acceptors, bill acceptors, cashless payment devices such as a payment card reader, and/or the like). In some implementations, the device 2400 is connected in-line to the MDB as shown in Figures 17 and 18. In some implementations, the MDB protocol or the payment accepting unit 120 is configured to support a limited number of payment peripherals or does not support particular payment peripherals. For example, in some circumstances, the payment accepting unit 120 supports a maximum of two cashless payment devices, or the payment accepting unit 120 only supports a bill acceptor and a coin acceptor but not cashless payment devices or other payment peripherals. The device 2400 expands the number of payment peripherals connected to the payment accepting unit 120 beyond this limited number and enables support for a plurality of payment peripherals, which may or may not be compliant with the payment accepting unit 120 and/or the MDB protocol.

In Figure 37, the device 2400 is configured to perform as a virtual payment peripheral of the payment accepting unit 120 and to perform as a virtual payment accepting unit for the one or more payment peripherals 2430. As such, in some implementations, the payment accepting unit controller 2460 views the device 2400 as another payment peripheral connected to the MDB, where the device 2400 sends signals to the payment accepting unit controller 2460 in a manner as if originated by the device 2400 that is functioning as a singular virtual payment peripheral. Moreover, in some implementations, the one or more payment peripherals 2430 view the device 2400 as the payment accepting unit controller 2460, where signals are sent to the one or more payment peripherals 2430 in a manner as if originated by the payment accepting unit 120. To accomplish this, the device 2400 manages and hosts the one or more payment peripherals 2430. Additionally, the device 2400 translates addresses and modifies the communications as necessary to ensure the payment accepting unit 120 understands the traffic that is coming through to it as a singular virtual payment peripheral.

In Figure 37, the device 2400 includes a slave interface 2402 (e.g., the male adapter 720, Figure 20) and an additional interface 2404 (e.g., the female adapter 730, Figure 20) for connecting the device 2400 to the MDB. In some implementations, the device 2400 includes a pass-through channel to enable signals from the payment accepting unit controller 2460 to reach other payment peripheral(s) 2455 and to enable signals from other the payment peripheral(s) 2455 to reach the payment accepting unit controller 2460. In Figure 37, the device 2400 also includes a device controller 2410 with a processing unit 2412 (e.g., including one or more processors, cores, microcontrollers, microprocessors, or the like) and memory 2414 storing one or more programs for execution by the processing unit 2412. In some implementations, the one or more programs cause the device 2430 to perform as a virtual payment peripheral of the payment accepting unit 120 and to perform as a virtual payment accepting unit for the one or more payment peripherals 2430. In Figure 37, the device 2400 also includes one or more host interfaces 2420 (e.g., MDB ports or non-MDB ports) for connecting the device 2400 with one or more payment peripherals 2430 (e.g., payment peripherals 2430-A to 2430-N).

In some implementations, device 2400 optionally includes internal payment peripheral 2440 with hardware, software, firmware, or a combination thereof for providing the payment processing functionalities discussed in Figures 7, 8A-8G, 9A-9E, and 23 (e.g., including the security unit 755 and the communications unit 770 shown in Figure 20).

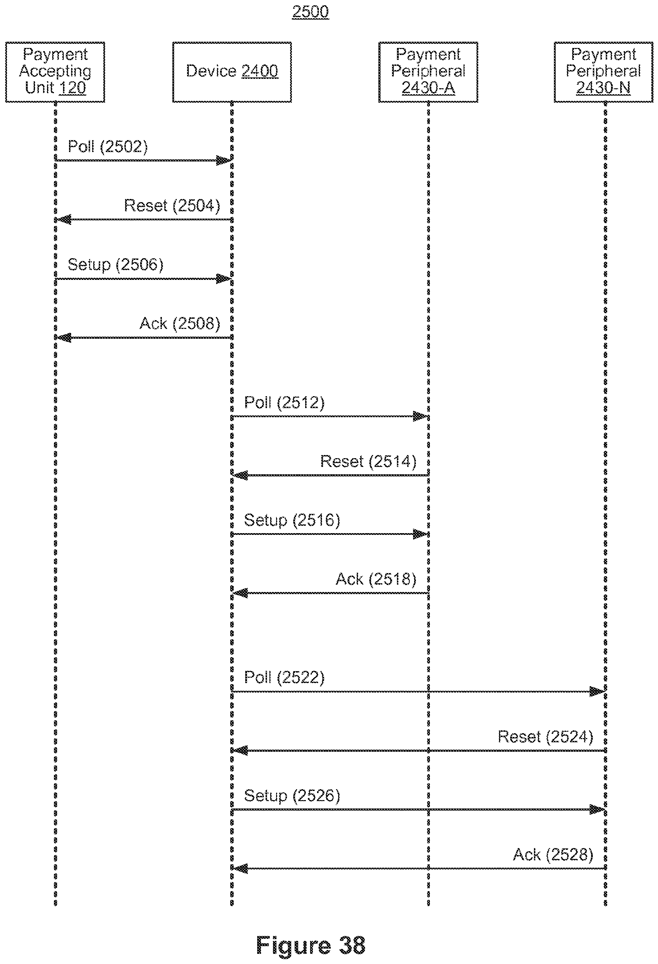

Figure 38 illustrates a schematic flow diagram of a payment peripheral registration process 2500 in accordance with some implementations. As a result of process 2500, the device 2400 is registered as a slave (e.g., a payment peripheral) to the payment accepting unit 120, and the one or more payment peripherals 2430 are registered as slaves to the device 2400, for example, in accordance with MDB protocol.

In some implementations, the payment accepting unit 120 (i.e., the payment accepting unit controller 2460, Figure 37) polls (2502) the device 2400.

In some implementations, in response to the poll command, the device 2400 sends (2504) a reset signal to the payment accepting unit 120. For example, the device 2400 sends the reset signal to the payment accepting unit 120 if it has not yet been registered as a slave (e.g., a payment peripheral). In another example, the device 2400 sends the reset signal to re-register itself as a slave. In some implementations, the device 2400 identifies itself as a coin acceptor, a bill acceptor, or a cashless payment device to the payment accepting unit 120 via the reset signal.

In some implementations, in response to the reset signal, the payment accepting unit 120 sends (2506) a setup signal to the device 2400. In some implementations, the setup signal includes an address assigned to the device 2400.

In some implementations, after receiving and processing the setup signal, the device 2400 sends (2508) an acknowledgement to the payment accepting unit 120 confirming registration as a slave.

In some implementations, the device 2400 polls (2512) the payment peripheral 2430-A.

In some implementations, in response to the poll command, the payment peripheral 2430-A sends (2514) a reset signal to the device 2400. For example, the payment peripheral 2430-A sends the reset signal to the device 2400 if it has not yet been registered as a slave (e.g., a payment peripheral) to the device 2400. In another example, the payment peripheral 2430-A sends the reset signal to re-register itself as a slave. In some implementations, the payment peripheral 2430-A identifies itself as a coin acceptor, a bill acceptor, or a cashless payment device to the device 2400 via the reset signal.

In some implementations, in response to the reset signal, the device 2400 sends (2516) a setup signal to the payment peripheral 2430-A. In some implementations, the setup signal includes an address assigned to the payment peripheral 2430-A.

In some implementations, after receiving and processing the setup signal, the payment peripheral 2430-A sends (2518) an acknowledgement to device 2400 confirming registration as a slave.

In some implementations, the device 2400 polls (2522) the payment peripheral 2430-N.

In some implementations, in response to the poll command, the payment peripheral 2430-N sends (2524) a reset signal to the device 2400. For example, the payment peripheral 2430-N sends the reset signal to the device 2400 if it has not yet been registered as a slave (e.g., a payment peripheral). In another example, the payment peripheral 2430-N sends the reset signal to re-register itself as a slave. In some implementations, the payment peripheral 2430-N identifies itself as a coin acceptor, a bill acceptor, or a cashless payment device to the device 2400 via the reset signal.

In some implementations, in response to the reset signal, the device 2400 sends (2526) a setup signal to the payment peripheral 2430-N. In some implementations, the setup signal includes an address assigned to the payment peripheral 2430-N.

In some implementations, after receiving and processing the setup signal, the payment peripheral 2430-N sends (2528) an acknowledgement to the device 2400 confirming registration as a slave.

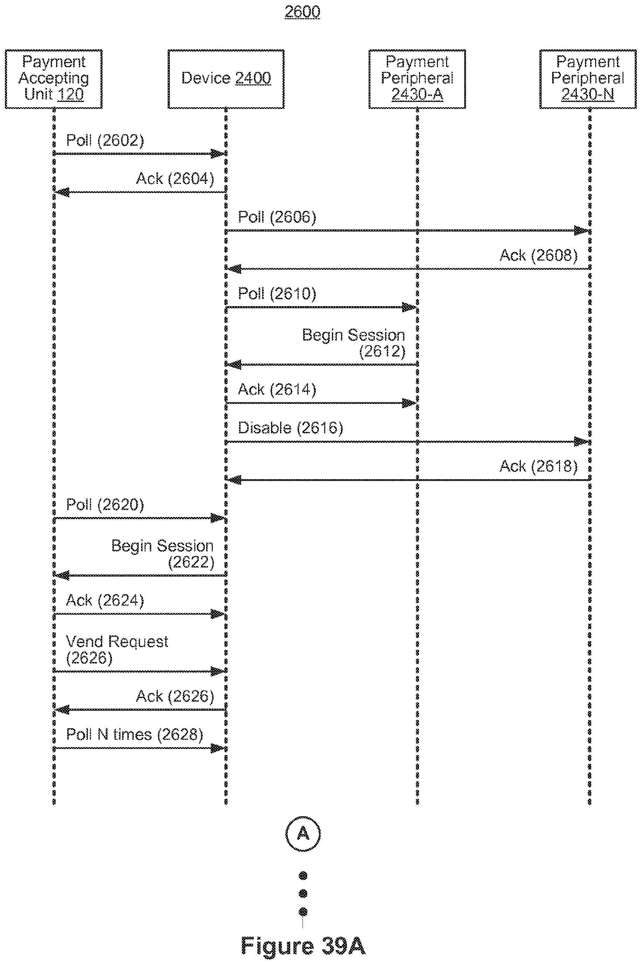

Figures 39A-39B illustrate a schematic flow diagram of a payment process 2600 in accordance with some implementations. In some implementations, device 2400 has already been registered as a slave (i.e., a payment peripheral) to payment accepting unit 120 and payment peripherals 2430-A, 2430-N have already been registered as slaves to device 2400 according to process 2500 in Figure 38.

In some implementations, the payment accepting unit 120 polls the device 2400, along with other payment peripherals connected to the MDB and registered as slaves (e.g., other payment peripherals 2450, 2455 (Figure 37)), according to a predetermined time period (e.g., 5 ms). For example, the predetermined time period is assigned by the MDB protocol or specification (e.g., versions 1.0 to 3.0 or higher), which is incorporated herein by reference in its entirety. In response to the poll commands, all slave devices (e.g., at least including the device 2400) respond with an acknowledgment (e.g., indicating that it is still present on the MDB) or with another signal (e.g., indicating another state). In some implementations, in response to a command from payment accepting unit 120, the device 2400 immediately responds to the command and asynchronously relays the command to at least one of the one or more payment peripherals 2430.

In some implementations, in a manner similar to the payment accepting unit 120, the device 2400 also polls all of the one or more payment peripherals 2430 according to the predetermined time period (e.g., 5 ms). For example, the device 2400 polls all of the one or more payment peripherals 2430 whenever it is polled by the payment accepting unit 120.

In some implementations, the payment accepting unit 120 (i.e., the payment accepting unit controller 2460, Figure 37) polls (2602) the device 2400.

In response to the polling command in operation 2602, the device 2400 sends (2604) an acknowledgment to the payment accepting unit 120.

In response to or independent of the polling command in operation 2602, the device 2400 also polls (2606) the payment peripheral 2430-N. In response to the polling command in operation 2606, the payment peripheral 2430-N sends (2608) an acknowledgment to the device 2400.

In response to or independent of the polling command in operation 2602, the device 2400 also polls (2610) the payment peripheral 2430-A. In response to the polling command in operation 2610, the payment peripheral 2430-A sends (2612) a request to begin a payment session. For example, the request to begin the payment session is sent in response to a user inserting payment (e.g., a bill(s) or coin(s)) into the payment peripheral 2430-A prior to the polling command in operation 2610.

In response to the request to begin the payment session, the device 2400 sends (2614) an acknowledgment to the payment peripheral 2430-A.

In response to the request to begin the payment session, the device 2400 also sends a disable command to the payment peripheral 2430-N so as to disable the payment peripheral 2430-N while processing the payment session for the payment peripheral 2430-A. In response to the disable command, the payment peripheral 2430-N sends (2618) an acknowledgment to the device 2400.

The payment accepting unit 120 (i.e., the payment accepting unit controller 2460, Figure 37) polls (2620) the device 2400.

In response to the polling command in operation 2620, the device 2400 sends (2622) a request to begin a payment session to the payment accepting unit 120. For example, the request to begin the payment session mirrors the request to begin the payment session received from the payment peripheral 2430-A.

In response to the request to begin the payment session in operation 2622, the payment accepting unit 120 sends (2624) an acknowledgement to the device 2400 and also sends (2626) a vend request to the device 2400. In process 2600, vending of a service or product is taken as a non-limiting example.

In response to receiving the vend request, the device 2400 sends (2628) an acknowledgment to the payment accepting unit 120.

In some implementations, the payment accepting unit 120 polls (2630) the device 2400 N times prior to sending the vend approved signal in operation 2640. In some implementations, the device 2400 responds to the N polling command with acknowledgments indicating that the device 2400 is still present and processing the vend request.

In response to receiving the vend request, the device 2400 also relays (2630) the vend request to the payment peripheral 2430-A.

In response to the vend request, the payment peripheral 2430-A sends (2632) an acknowledgement to the device 2400.

Subsequently, the device 2400 polls (2634) the payment peripheral 2430-A. In response to the polling command in operation 2634, the payment peripheral 2430-A sends (2636) a vend approved signal to the device 2400. For example, the vend approved signal indicates that the payment inserted by the user was not-refunded and was used to purchase a service or product.

In response to receiving the vend approved signal, the device 2400 sends (2638) an acknowledgment to the payment peripheral 2430-A and also relays (2640) the vend approved signal to the payment accepting unit 120.

In response to receiving the vend approved signal, the payment accepting unit 120 sends (2642) an acknowledgment to the device 2400 and also sends (2644) a request to the device 2400 to indicate whether the vend was a success or a failure.

In response to receiving the request in operation 2644, the device 2400 sends (2646) a response to the payment accepting unit 120 indicating that the vend was a success or a failure and also relays (2650) the request to the payment peripheral 2430-A to indicate whether the vend was a success or a failure.

In response to the request in operation 2650, the payment peripheral 2430-A sends (2652) an acknowledgement to the device 2400.

In response to receiving the response in operation 2646, the payment accepting unit 120 sends (2648) an acknowledgement to the device 2400 and also sends (2654) a command to end the payment session to the device 2400.

In response to receiving the command to end the payment session, the device 2400 sends (2656) an acknowledgment to the payment accepting unit 120 and relays (2658) the command to end the payment session to the payment peripheral 2430-A.

In response to the command to end the payment session, the payment peripheral 2430-A sends (2660) an acknowledgment to the device 2400.

After receiving the acknowledgment from the payment peripheral 2430-A, the device 2400 sends (2662) an enable command to the payment peripheral 2430-N so as to enable the payment peripheral 2430-N after completion of the payment session for the payment peripheral 2430-A. In response to the enable command, the payment peripheral 2430-N sends (2664) an acknowledgment to the device 2400.

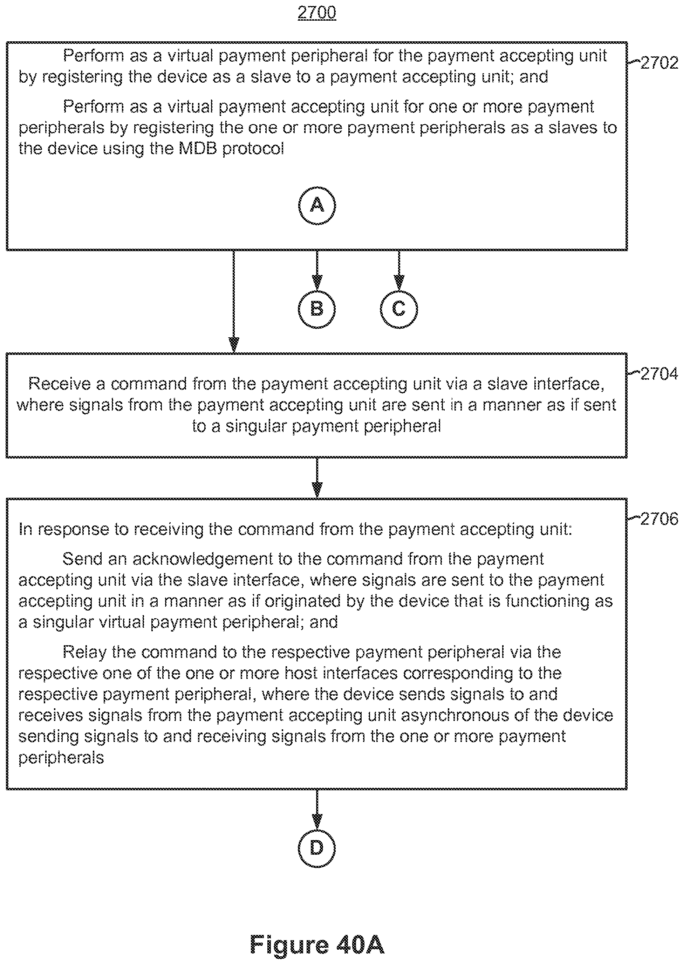

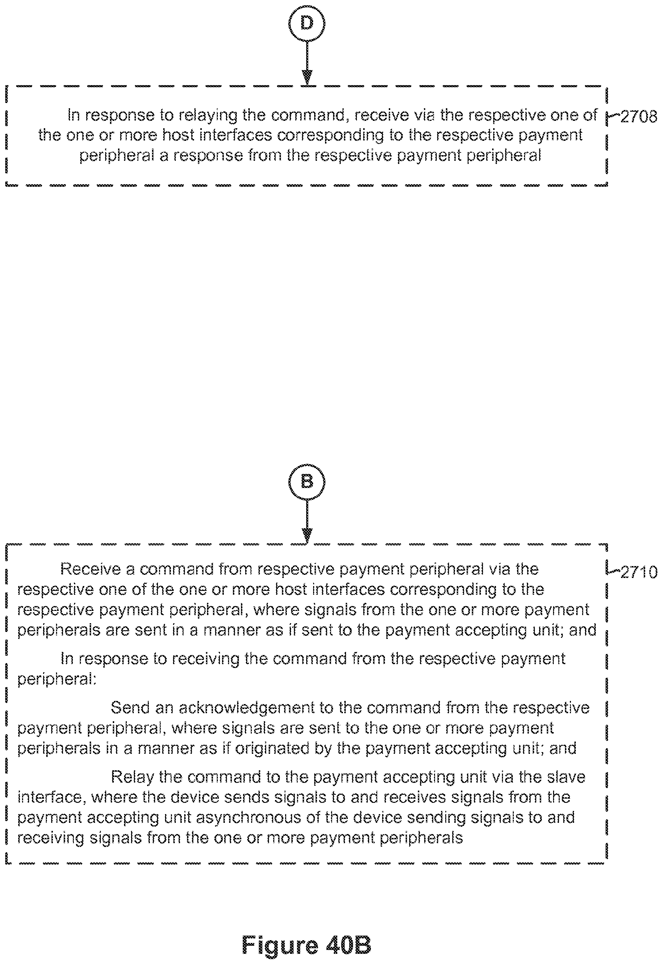

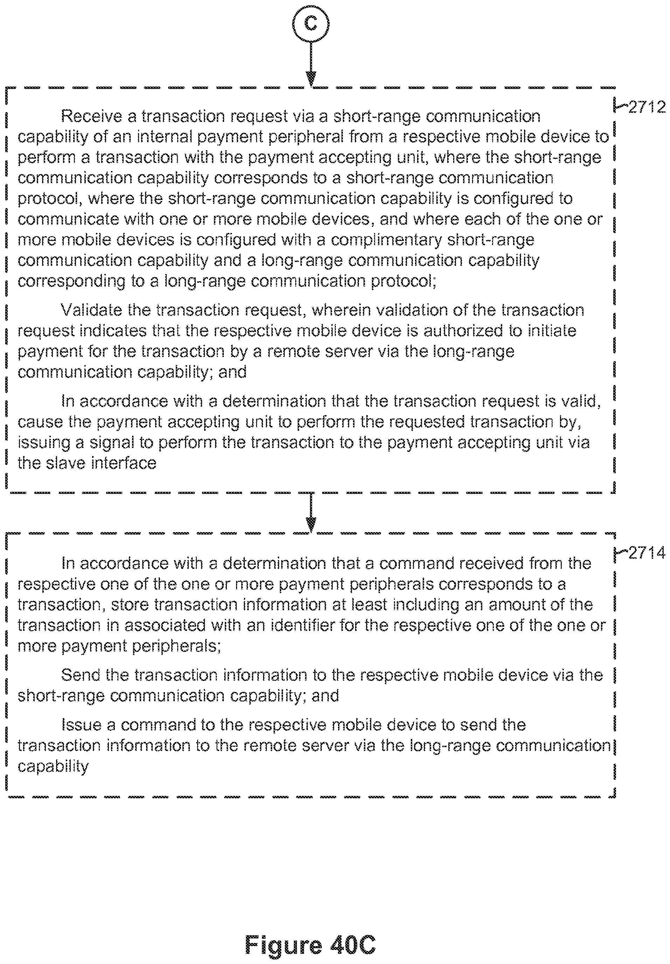

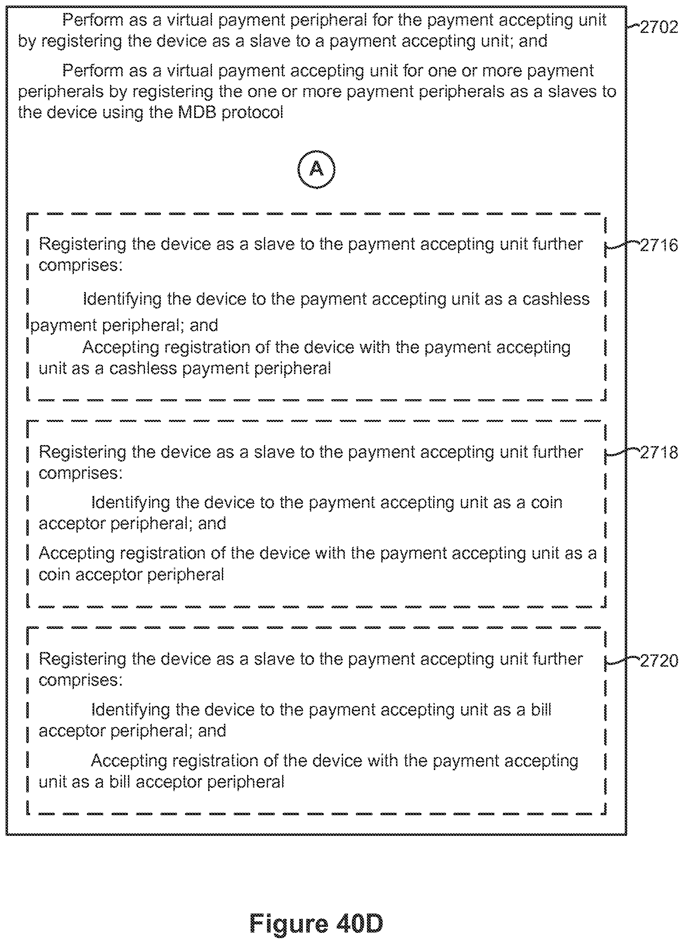

Figures 40A-40D illustrate a flowchart diagram of a method 2700 retrofitting a payment accepting unit to accommodate a plurality of payment peripherals in accordance with some implementations. In some implementations, the method 2700 is performed by a device with one or more processors, memory, a slave interface configured to couple the device with the payment accepting unit via a multi-drop bus (MDB), and one or more host interfaces configured to couple the device with one or more payment peripherals, (e.g., a coin acceptor, a bill acceptor, a cashless payment device such as a payment card reader, and the like) where a respective payment peripheral is decoupled from an MDB interface of the payment accepting unit and coupled with a respective one of the one or more host interfaces, and where the one or more payment peripherals are configured to communicate via MDB protocol. For example, in some implementations, the method 2700 is performed by the device 2400 (Figure 37) or a component thereof (e.g., device controller 2410). In some implementations, the method 2700 is governed by instructions that are stored in a non-transitory computer readable storage medium (e.g., the memory 2414, Figure 37) and the instructions are executed by one or more processors (e.g., the processing unit 2412, Figure 37) of the device. Optional operations are indicated by dashed lines (e.g., boxes with dashed-line borders).

The device performs (2702) as a virtual payment peripheral for the payment accepting unit by registering the device as a slave to the payment accepting unit, and the device performs as a virtual payment accepting unit for the one or more payment peripherals by registering the one or more payment peripherals as a slaves to the device using the MDB protocol. In some implementations, the MDB protocol supports a limited number of payment peripherals. Device 2400 expands the number of payment peripherals connected to the payment accepting unit 120 beyond this limited number by emulating the payment accepting unit 120 to the one or more payment peripherals 2430 coupled with the one or more host interfaces 2420 and emulating a payment peripheral to the payment accepting unit 120. As such, in some implementations, the payment accepting unit 120 (i.e., the payment accepting unit controller 2460) views the device 2400 as another payment peripheral connected to the MDB, where the device 2400 sends signals to the payment accepting unit controller 2460 in a manner as if originated by the device 2400 that is functioning as a singular virtual payment peripheral. Moreover, in some implementations, the one or more payment peripherals 2430 view the device 2400 as the payment accepting unit controller 2460, where signals are sent to the one or more payment peripherals 2430 in a manner as if originated by the payment accepting unit controller 2460.

In some implementations, registering the device as a slave to the payment accepting unit further comprises (2716): identifying the device to the payment accepting unit as a cashless payment peripheral; and accepting registration of the device with the payment accepting unit as a cashless payment peripheral. For example, the device 2400 identifies itself to the payment accepting unit 120 as a cashless payment device (e.g., a payment card reader) when sending the reset signal to the payment accepting unit 120 in operation 2504 (Figure 38).

In some implementations, registering the device as a slave to the payment accepting unit further comprises (2718): identifying the device to the payment accepting unit as a coin acceptor peripheral; and accepting registration of the device with the payment accepting unit as a coin acceptor peripheral. For example, the device 2400 identifies itself to the payment accepting unit 120 as a coin acceptor when sending the reset signal to the payment accepting unit 120 in operation 2504 (Figure 38).

In some implementations, registering the device as a slave to the payment accepting unit further comprises (2720): identifying the device to the payment accepting unit as a bill acceptor peripheral; and accepting registration of the device with the payment accepting unit as a bill acceptor peripheral. For example, the device 2400 identifies itself to the payment accepting unit 120 as a bill acceptor/validator when sending the reset signal to the payment accepting unit 120 in operation 2504 (Figure 38).

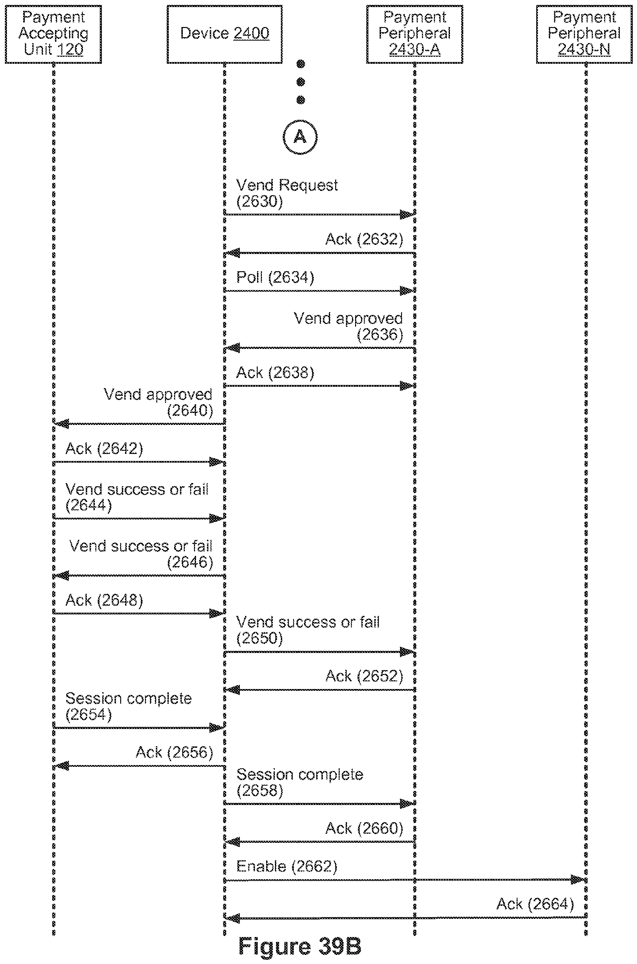

The device receives (2704) a command from the payment accepting unit via the slave interface, where signals from the payment accepting unit are sent in a manner as if sent to a singular payment peripheral. For example, with reference to process 2600, the payment accepting unit 120 sends a command to the device 2400 to end the payment session in operation 2654 (Figure 39B).

In response to receiving the command from the payment accepting unit, the device (2706): sends an acknowledgement to the command from the payment accepting unit via the slave interface, where signals are sent to the payment accepting unit in a manner as if originated by the device that is functioning as a singular virtual payment peripheral; and relays the command to the respective payment peripheral via the respective one of the one or more host interfaces corresponding to the respective payment peripheral, where the device sends signals to and receives signals from the payment accepting unit asynchronous of the device sending signals to and receiving signals from the one or more payment peripherals. Continuing with the example above, with reference to process 2600, in response to receiving the command to end the payment session, the device 2400 sends an acknowledgment to the payment accepting unit 120 in operation 2656 (Figure 39B)in a manner as if originated by the device that is functioning as a singular virtual payment peripheral. Continuing with this example, in response to receiving the command to end the payment session, the device 2400 also asynchronously relays the command to end the payment session to the payment peripheral 2430-A in operation 2658 (Figure 39B). As such, the command is relayed to the payment peripheral 2430-A asynchronous of sending the acknowledgment to the payment accepting unit 120.

In some implementations, in response to relaying the command, the device receives (2708) via the respective one of the one or more host interfaces corresponding to the respective payment peripheral a response from the respective payment peripheral. For Continuing with the example above, with reference to process 2600, in response to the relayed complete session command, the payment peripheral 2430-A sends an acknowledgment to the device 2400 in operation 2660 (Figure 39B).

In some implementations, in response to receiving the response from the respective payment peripheral, the device: sends an acknowledgement to the respective payment peripheral, where signals are sent to the one or more payment peripherals in a manner as if originated by the payment accepting unit; and relays the response to the payment accepting unit via the slave interface, where the device sends signals to and receives signals from the payment accepting unit asynchronous of the device sending signals to and receiving signals from the one or more payment peripherals. In some implementations, in response to receiving the response from the respective payment peripheral, the device forgoes the above steps.

In some implementations, the device receives (2710) a command from respective payment peripheral via the respective one of the one or more host interfaces corresponding to the respective payment peripheral, where signals from the one or more payment peripherals are sent in a manner as if sent to the payment accepting unit, and, in response to receiving the command from the respective payment peripheral, the device: sending an acknowledgement to the command from the respective payment peripheral, where signals are sent to the one or more payment peripherals in a manner as if originated by the payment accepting unit; and relaying the command to the payment accepting unit via the slave interface, where the device sends signals to and receives signals from the payment accepting unit asynchronous of the device sending signals to and receiving signals from the one or more payment peripherals. For example, with reference to process 2600, when polled in operation 2634 (Figure 39B), the payment peripheral 2430-A sends a vend approved signal to the device 2400 in a manner as if sent to the payment accepting unit 120 in operation 2636. Continuing with this example, in response to receiving the vend approved signal, the device 2400 sends an acknowledgement to the payment peripheral 2430-A in a manner as if originated by the payment accepting unit 120 in operation 2638 (Figure 39B). Continuing with this example, in response to receiving the vend approved signal, the device 2400 also asynchronously relays the vend approved signal to the payment accepting unit 120 in operation 2640 (Figure 39B). As such, the command is relayed to the payment accepting unit 120 asynchronous of sending the acknowledgment to the payment peripheral 2430-A.

In some implementations, the device further includes an internal payment peripheral including a short-range communication capability corresponding to a short-range communication protocol, where the short-range communication capability is configured to communicate with one or more mobile devices, and where each of the one or more mobile devices is configured with a complimentary short-range communication capability and a long-range communication capability corresponding to a long-range communication protocol. For example, with reference to Figure 37, the device 2400 includes the internal payment peripheral 2440 which includes hardware, software, firmware, or a combination thereof for providing the payment processing functionalities discussed in Figures 7, 8A-8G, 9A-9E, and 23 (e.g., the security unit 755 and the communications unit 770 as shown in Figure 20). For example, the respective mobile device corresponds to mobile device 150 (Figure 21) with long-range communication capability 872 and short-range communication capability 876.

In some implementations, the device receives (2712) a transaction request via the short-range communication capability from a respective mobile device to perform a transaction with the payment accepting unit, validates the transaction request, where validation of the transaction request indicates that the respective mobile device is authorized to initiate payment for the transaction by a remote server via the long-range communication capability, and, in accordance with a determination that the transaction request is valid, causing the payment accepting unit to perform the requested transaction by, issuing a signal to perform the transaction to the payment accepting unit via the slave interface. In some implementations, the device 2400 or a component thereof (e.g., internal payment peripheral 2440, Figure 37) receives a transaction request via the short-range communication capability (e.g., BLE, NFC, or the like) from the respective mobile device 150 (Figures 7, 8A-8G, 9A-9E, and 21), and the device 2400 or a component thereof (e.g., internal payment peripheral 2440, Figure 37; or the device controller 2410, Figure 37) validates the transaction request from the respective mobile device 150 by determining whether an AuthGrant or authorization grant token associated with the transaction request includes a valid authorization code. In some implementations, in accordance with a determination that the transaction request is associated with a valid authorization code, the device 2400 or a component thereof (e.g., internal payment peripheral 2440, Figure 37; or the device controller 2410, Figure 37) issues a command to the payment accepting unit 120 to perform the requested transaction by via the slave interface 2402 in a manner as if originated by the device 2400 that is functioning as a singular virtual payment peripheral.

In some implementations, in accordance with a determination that a command received from the respective one of the one or more payment peripherals corresponds to a transaction, the device stores (2714) transaction information at least including an amount of the transaction in associated with an identifier for the respective one of the one or more payment peripherals; after storing the transaction information, sends the transaction information to the respective mobile device via the short-range communication capability; and issues a command to the respective mobile device to send the transaction information to the remote server via the long-range communication capability. In some implementations, the device 2400 or a component thereof (e.g., the internal payment peripheral 2440, Figure 37; or the device controller 2410, Figure 37) monitors commands and signals from the one or more payment peripherals 2430 that are relayed to the payment accepting unit 120 and, in accordance with a determination that the command and signals are associated with transactions, stores transaction information such as the transaction amount and the respective payment peripheral 2430 associated with the transaction. For example, the device 2400 stores transaction information for each of the one or more payment peripherals 2430 in a table that associates the transaction information with a payment peripheral type (e.g., bill acceptor, coin acceptor, payment card reader, etc.). In some implementations, the device 2400 or a component thereof (e.g., the internal payment peripheral 2440, Figure 37; or the device controller 2410, Figure 37) sends the table of transaction information or a portion thereof to the respective mobile device 150 that sent the transaction request (or another mobile device 150 that performs a transaction with the device 2400) via the short-range communication capability. In some implementations, the device 2400 or a component thereof (e.g., the internal payment peripheral 2440, Figure 37; or the device controller 2410, Figure 37) commands the respective mobile device 150 to send the table of transaction information or the portion thereof to the server 130 via its long-range communication capability. As such, the device 2400 uses the respective mobile device 150 as a communication bridge to the server 130.

In some implementations, the device 2400 or a component thereof (e.g., the internal payment peripheral 2440, Figure 37; or the device controller 2410, Figure 37) also monitors the commands and signals from the one or more payment peripherals 2430 that are relayed to the payment accepting unit 120 and, in accordance with a determination that the command and signals are associated with error codes (e.g., a coin jam, low coin or bill count, etc.) and other information associated with the operation of the one or more payment peripherals 2430, stores corresponding operation information. In some implementations, the device 2400 also sends the operation information along with the table the table of transaction information or the portion thereof to the server 130.

In some implementations, the payment accepting unit further includes one or more other payment peripherals coupled with the MDB, a respective payment peripheral of the one or more other payment peripherals is one of a bill acceptor, coin acceptor, or payment card reader, and where the device further includes an additional interface configured to couple the device with the one or more other payment peripherals of the payment accepting unit. For example, with reference to Figure 37, the other payment peripheral(s) 2450 (e.g., acceptors, coin acceptors, payment card readers, etc.) are connected to the MDB before the device 2400 (e.g., prior to the slave interface 2402) and the other payment peripheral(s) 2455 (e.g., acceptors, coin acceptors, payment card readers, etc.) are connected to the MDB after the device 2400 (e.g., after the additional interface 2404).

In some implementations, the device further includes a pass-through channel, the pass-through channel is configured to pass-through signals from the one or more other payment peripherals to the payment accepting unit. For example, with reference to Figure 37, the device 2400 includes a pass-through channel to enable signals from the payment accepting unit controller 2460 to reach the other payment peripheral(s) 2455 and to enable signals from other the payment peripheral(s) 2455 to reach the payment accepting unit controller 2460.

It should be understood that the particular order in which the operations in Figures 40A-40D have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein are also applicable in an analogous manner to the method 2700 described above with respect to Figures 40A-40D.

### MISCELLANEOUS

It should be noted that relative terms are meant to help in the understanding of the technology and are not meant to limit the scope of the invention. Similarly, unless specifically stated otherwise, the terms used for labels (e.g., "first," "second," and "third") are meant solely for purposes of designation and not for order or limitation. The term "short" in the phrase "short-range" (in addition to having technology specific meanings) is relative to the term "long" in the phrase "long-range."

The terms "may," "might," "can," and "could" are used to indicate alternatives and optional features and only should be construed as a limitation if specifically included in the claims.

It should be noted that, unless otherwise specified, the term "or" is used in its nonexclusive form (e.g., "A or B" includes A, B, A and B, or any combination thereof, but it would not have to include all of these possibilities). It should be noted that, unless otherwise specified, "and/or" is used similarly (e.g., "A and/or B" includes A, B, A and B, or any combination thereof, but it would not have to include all of these possibilities). It should be noted that, unless otherwise specified, the terms "includes" and "has" mean "comprises" (e.g., a device that includes, has, or comprises A and B contains A and B, but optionally may contain C or additional components other than A and B).

The terms and expressions that have been employed in the foregoing specification are used as terms of description and not of limitation, and are not intended to exclude equivalents of the features shown and described. While the above is a complete description of selected implementations of the present invention, it is possible to practice the invention using various alternatives, modifications, adaptations, variations, and/or combinations and their equivalents, within the scope of the appended claims.

## Claims

1. A method (2200) of retrofitting an offline-payment operated machine (2100) to accept electronic payments, the method being performed by a payment module (2120) including one or more processors, memory, and a short-range communication capability configured to communicate with one or more mobile devices, the payment module (2120) being coupled with the offline-payment operated machine (2100) that includes a coin receiving switch (2102) and a control unit (2106), the payment module (2120) further including:
a first interface (2122) configured to sample payment acceptance signals from the coin receiving switch (2102) of the offline-payment operated machine (2100), where the signals are indicative of a coin being received by the coin receiving switch (2102); and
a second interface (2124) configured to sample control signals from the control unit (2106) of the offline-payment operated machine (2100) that initiate an operation of the offline-payment operated machine (2100) in response to receiving a preset sequence of payment acceptance signals from the coin receiving switch (2102) indicative of a preset number of coins, wherein by sampling and storing the payment acceptance signals and the control signals, the payment module is able to simulate operation of the coin receiving switch (2102) in response to receiving a preset number of coins so as to trigger operation of the offline-payment operated machine (2100) in response to completion of an electronic payment, the method comprising:
broadcasting, via the short-range communication capability, a packet of information (1100) including an authorization code, an identifier associated with the payment module (2120) and a payment zone criterion (1126) that the mobile device (150) is required to observe before being within a payment zone of the payment module (2120);
receiving (2208) via the short-range communication capability and from the respective mobile device (150) a request to perform an operation of the offline-payment operated machine, wherein the request includes an authorization grant token (1140) including the authorization code and wherein the request is sent in response to the mobile device (150) entering the payment zone of the payment module (2120) which occurs upon satisfaction of the payment zone criterion, wherein the payment zone criterion (1126) is adjusted by the respective mobile device (150) based on the strength and/or reception of its short-range communication capability;
validating (2210) the request b determining whether the authorization grant token (1140) includes a valid authorization code, wherein the validation indicates that the respective mobile device (150) is authorized to initiate payment for the operation by a remote server via a long-range communication capability of the respective mobile device (150); and
in accordance with a determination that the request is valid, causing (2214) the offline- payment operated machine (2100) to perform the operation by issuing a predefined signal sequence to the control unit (2106) via the first interface, (2122) wherein the predefined signal sequence emulates a signal sequence that would be issued by the coin receiving switch (2102) in response to receiving the preset number of coins; and
after issuing the preset signal sequence to the control unit (2106), obtaining (2216) by the second interface (2124) a notification indicating that the control unit (2106) sent control signals to initiate operation of the offline-payment operated machine (2100) in response to receiving the predefined signal sequence.

2. The method of claim 1, wherein the payment module is an adapter module (100) and the offline-payment operated machine (2100) is a payment accepting unit (120) comprising a payment receiving mechanism, wherein the payment receiving mechanism of the payment accepting unit (120) is a coin acceptor.

3. The method of claim 2, wherein the adapter module (100) is inserted as an in-line dongle for in-line insertion within a multi-drop bus of the payment accepting unit (120).

4. The method of claim 2, wherein the adapter module (100) includes a pass-through channel, wherein the pass-through channel is configured to enable signals from a payment accepting unit controller (2460) of the payment accepting unit (120) to reach one or more other payment peripherals (2455) and to enable signals from one or more other payment peripherals to reach the payment accepting unit controller (2460).

5. The method of claim 1, further comprising in response (2218) to receiving the notification:
generating operation information based at least in part on the notification; and
storing the generated operation information in the memory.

6. The method of claim 5, further comprising: sending (2220) the operation information to the respective mobile device (150) via the short-range communication capability.

7. The method of claim 1, wherein the payment module (2120) receives from the respective mobile device (150) a model type of the respective mobile device (150).

8. The method of claim 1, wherein the payment zone criterion (1126) corresponds to a baseline payment zone threshold indicating a baseline received signal strength that the respective mobile device (150) is required to observe before being within the payment zone of the payment module (2120).

9. The method of claim 2, wherein the payment accepting unit (120) has a multi-drop bus to the payment receiving mechanism, the multi-drop bus having a male adapter and a female adapter, and said adapter module (100) having a male adapter and a female adapter, wherein said adapter module (100) has been inserted in serial with the multi-drop bus by connecting said male adapter of said adapter module to the female adapter of the multi-drop bus and by connecting said female adapter of said adapter module to the male adapter of the multi-drop bus.

10. The method of claim 1, wherein the offline-payment operated machine 2100 is a dryer or washer at a laundromat, a parking meter, a car wash payment kiosk, or a vending machine.

11. A payment module (2120) for retrofitting an offline-payment operated machine (2100) to accept electronic payments, wherein the offline-payment operated machine (2100) at least includes a control unit (2106) and a coin receiving switch (2102), the payment module (2120) comprising:
a first interface (2122) configured to sample payment acceptance signals from the coin receiving switch (2102) of the offline-payment operated machine (2100), wherein the signals are indicative of a coin being received by the coin receiving switch (2102);
a second interface (2124) configured to sample control signals from the control unit (2106) of the offline-payment operated machine (2100) that initiate an operation of the offline-payment operated machine (2100) in response to receiving a preset sequence of payment acceptance signals from the coin receiving switch (2102) indicative of a preset number of coins, wherein by sampling and storing the payment acceptance signals and the control signals, the payment module is able to simulate operation of the coin receiving switch (2102) in response to receiving a preset number of coins so as to trigger operation of the offline-payment operated machine (2100) in response to completion of an electronic payment;
a short-range communication capability configured to communicate with one or more mobile devices;
one or more processors; and
memory (760) storing one or more progrms to be executed by the one or more processors, the one or more programs comprising instructions for: performing the method of any one of claims 1-10.

## Patentansprüche

1. Verfahren (2200) zum Nachrüsten einer mit Offline-Zahlung betriebenen Maschine (2100) für die Annahme elektronischer Zahlungen, wobei das Verfahren von einem Zahlungsmodul (2120) durchgeführt wird, das einen oder mehrere Prozessoren, einen Speicher und eine kurzreichweitige Kommunikationsfunktionalität umfasst, die zur Kommunikation mit einer oder mehreren mobilen Vorrichtungen konfiguriert ist, wobei das Zahlungsmodul (2120) mit der mit Offline-Zahlung betriebenen Maschine (2100), die einen Münzenannahmeschalter (2102) und eine Steuereinheit (2106) umfasst, verbunden ist, wobei das Zahlungsmodul (2120) außerdem Folgendes umfasst:
eine erste Schnittstelle (2122), die konfiguriert ist, um Zahlungsannahmesignale von dem Münzenannahmeschalter (2102) der mit Offline-Zahlung betriebenen Maschine (2100) abzutasten, wobei die Signale anzeigen, dass eine Münze von dem Münzenannahmeschalter (2102) angenommen wurde; und
eine zweite Schnittstelle (2124), die konfiguriert ist, um Steuersignale von der Steuereinheit (2106) der mit Offline-Zahlung betriebenen Maschine (2100) abzutasten, die eine Betätigung der mit Offline-Zahlung betriebenen Maschine (2100) als Antwort auf das Empfangen einer vorab festgelegten Abfolge von Zahlungsannahmesignalen von dem Münzenannahmeschalter (2102), die eine vorab festgelegte Anzahl von Münzen anzeigen, initiieren, wobei das Zahlungsmodul durch Abtasten und Speichern der Zahlungsannahmesignale und der Steuersignale in der Lage ist, die Betätigung des Münzenannahmeschalters (2102) als Antwort auf das Annehmen einer vorab festgelegten Anzahl von Münzen zum Auslösen einer Betätigung der mit Offline-Zahlung betriebenen Maschine (2100) als Antwort auf einen Abschluss einer elektronischen Zahlung zu simulieren, wobei das Verfahren Folgendes umfasst:
das Senden eines Informationspakets (1100) über die kurzreichweitige Kommunikationsfunktionalität, das einen Autorisierungscode, einen dem Zahlungsmodul (2120) zugeordneten Identifikator und ein Zahlungszonenkriterium (1126) umfasst, das die mobile Vorrichtung (150) erfüllen muss, bevor sie innerhalb einer Zahlungszone des Zahlungsmoduls (2120) sein kann;
das Empfangen (2208) einer Anfrage über die kurzreichweitige Kommunikationsfunktionalität und von der entsprechenden mobilen Vorrichtung (150) zur Durchführung einer Betätigung der mit Offline-Zahlung betriebenen Maschine, wobei die Anfrage ein Autorisierungsgewährungs-Token (1140), umfassend den Autorisierungscode, umfasst und wobei die Anfrage als Antwort auf das Eintreten der mobilen Vorrichtung (150) in die Zahlungszone des Zahlungsmoduls (2120) gesendet wird, das nach Erfüllung des Zahlungszonenkriteriums erfolgt, wobei das Zahlungszonenkriterium (1126) von der entsprechenden mobilen Vorrichtung (150) auf Basis der Stärke und/oder des Empfangs der kurzreichweitige Kommunikationsfunktionalität angepasst wird;
das Validieren (2210) der Anfrage durch Bestimmen, ob das Autorisierungsgewährungs-Token (1140) einen gültigen Autorisierungscode umfasst, wobei die Validierung angibt, dass die entsprechende mobile Vorrichtung (150) autorisiert ist, eine Zahlung für die Betätigung durch einen entfernten Server über eine langreichweitige Kommunikationsfunktionalität der entsprechenden mobilen Vorrichtung (150) zu initiieren; und
in Übereinstimmung mit einer Bestimmung, dass die Anfrage gültig ist, das Veranlassen (2214) der mit Offline-Zahlung betriebenen Maschine (2100), die Betätigung durchzuführen, indem eine vorab definierte Signalabfolge über die erste Schnittstelle (2122) an die Steuereinheit (2106) ausgegeben wird, wobei die vorab definierte Signalabfolge eine Signalabfolge emuliert, die von dem Münzenannahmeschalter (2102) als Antwort auf die Annahme der vorab festgelegten Anzahl von Münzen ausgegeben wird; und
nach dem Ausgeben der vorab festgelegten Signalabfolge an die Steuereinheit (2106) das Erhalten (2216) einer Benachrichtigung von der zweiten Schnittstelle (2124), die angibt, dass die Steuereinheit (2106) Steuersignale ausgesendet hat, um die Betätigung der mit Offline-Zahlung betriebenen Maschine (2100) als Antwort auf den Empfang der vorab definierten Signalabfolge zu initiieren.

2. Verfahren nach Anspruch 1, wobei das Zahlungsmodul ein Adaptermodul (100) und die mit Offline-Zahlung betriebene Maschine (2100) eine Zahlungsannahme-Einheit (120) ist, die einen Zahlungsannahmemechanismus umfasst, wobei der Zahlungsannahmemechanismus der Zahlungsannahme-Einheit (120) ein Münzprüfer ist.

3. Verfahren nach Anspruch 2, wobei das Adaptermodul (100) als integrierter Dongle zum integrierten Einsetzen innerhalb eines Multi-Drop-Bus der Zahlungsannahme-Einheit (120) eingesetzt ist.

4. Verfahren nach Anspruch 2, wobei das Adaptermodul (100) einen Durchlasskanal umfasst, wobei der Durchlasskanal konfiguriert ist, um es Signalen zu ermöglichen, von einer Zahlungsannahme-Einheit-Steuerung (2460) der Zahlungsannahme-Einheit (120) eine oder mehrere Zahlungsperipheriekomponenten (2455) erreichen zu können und es Signalen zu ermöglichen, von einer oder mehreren anderen Zahlungsperipheriekomponenten die Zahlungsannahme-Einheit-Steuerung (2460) erreichen zu können.

5. Verfahren nach Anspruch 1, das außerdem Folgendes umfasst:
als Antwort (2218) auf das Empfangen der Benachrichtigung:
das Erzeugen von Betätigungsinformationen, zumindest teilweise auf Basis der Benachrichtigung;
das Speichern der erzeugten Betätigungsinformationen in dem Speicher.

6. Verfahren nach Anspruch 5, das außerdem das Senden (2220) der Betätigungsinformationen an die entsprechende mobile Vorrichtung (150) über die kurzreichweitige Kommunikationsfunktionalität umfasst.

7. Vorrichtung nach Anspruch 1, wobei das Zahlungsmodul (2120) einen Modelltyp der entsprechenden mobilen Vorrichtung (150) von der entsprechenden mobilen Vorrichtung (150) empfängt.

8. Verfahren nach Anspruch 1, wobei das Zahlungszonenkriterium (1126) einem Basislinien-Zahlungszone-Grenzwert entspricht, der eine Basislinie der empfangenen Signalstärke anzeigt, die die entsprechende mobile Vorrichtung (150) aufbringen muss, bevor sie innerhalb der Zahlungszone des Zahlungsmoduls (2120) sein kann.

9. Verfahren nach Anspruch 2, wobei die Zahlungsannahme-Einheit (120) einen Multi-Drop-Bus an dem Zahlungsannahmemechanismus aufweist, wobei der Multi-Drop-Bus einen eingreifenden Adapter und einen aufnehmenden Adapter aufweist und das Adaptermodul (100) einen eingreifenden Adapter und einen aufnehmenden Adapter aufweist, wobei das Adaptermodul (100) mit dem Multi-Drop-Bus durch Verbinden des eingreifenden Adapters des Adaptermoduls mit dem aufnehmenden Adapter des Multi-Drop-Bus und durch Verbinden des aufnehmenden Adapters des Adaptermoduls und des eingreifenden Adapters des Multi-Drop-Bus in Reihe eingesetzt wurde.

10. Verfahren nach Anspruch 1, wobei die mit Offline-Zahlung betriebene Maschine (2100) ein Trockner oder eine Waschmaschine in einem Waschsalon, eine Parkuhr, ein Autowaschzahlungskiosk oder ein Warenautomat ist.

11. Zahlungsmodul (2120) zum Nachrüsten einer mit Offline-Zahlung betriebenen Maschine (2100) für die Annahme elektronischer Zahlungen, wobei die mit Offline-Zahlung betriebene Maschine (2100) zumindest eine Steuereinheit (2106) und einen Münzenannahmeschalter (2102) umfasst, wobei das Zahlungsmodul (2120) Folgendes umfasst:
eine erste Schnittstelle (2122), die konfiguriert ist, um Zahlungsannahmesignale von dem Münzenannahmeschalter (2102) der mit Offline-Zahlung betriebenen Maschine (2100) abzutasten, wobei die Signale angeben, dass eine Münze von dem Münzenannahmeschalter (2102) angenommen wurde; und
eine zweite Schnittstelle (2124), die konfiguriert ist, um Steuersignale von der Steuereinheit (2106) der mit Offline-Zahlung betriebenen Maschine (2100) abzutasten, die eine Betätigung der mit Offline-Zahlung betriebenen Maschine (2100) als Antwort auf das Empfangen einer vorab festgelegten Abfolge von Zahlungsannahmesignalen von dem Münzenannahmeschalter (2102), die eine vorab festgelegte Anzahl von Münzen angeben, initiieren, wobei das Zahlungsmodul durch Abtasten und Speichern der Zahlungsannahmesignale und Steuersignale in der Lage ist, die Betätigung des Münzenannahmeschalters (2102) als Antwort auf das Annehmen einer vorab festgelegten Anzahl von Münzen zum Auslösen einer Betätigung der mit Offline-Zahlung betriebenen Maschine (2100) als Antwort auf einen Abschluss einer elektronischen Zahlung zu simulieren;
eine kurzreichweitige Kommunikationsfunktionalität, die ausgelegt ist, um mit einer oder mehreren mobilen Vorrichtungen zu kommunizieren;
einen oder mehrere Prozessoren; und
einen Speicher (760), der ein oder mehrere Programme speichert, die von dem einen oder den mehreren Prozessoren ausgeführt werden sollen, wobei das eine oder die mehreren Programme Befehle zum Durchführen eines Verfahrens nach einem der Ansprüche 1 bis 10 umfassen.

## Revendications

1. Procédé (2200) de mise à niveau d'une machine actionnée par paiement hors ligne (2100) pour accepter des paiements électroniques, le procédé étant mis en œuvre par un module de paiement (2120) incluant un ou plusieurs processeurs, une mémoire, et une capacité de communication à courte portée configurée de manière à communiquer avec un ou plusieurs dispositifs mobiles, le module de paiement (2120) étant couplé à la machine actionnée par paiement hors ligne (2100) qui inclut un commutateur de réception de pièces de monnaie (2102) et une unité de commande (2106), le module de paiement (2120) incluant en outre :
une première interface (2122) configurée de manière à échantillonner des signaux d'acceptation de paiement provenant du commutateur de réception de pièces de monnaie (2102) de la machine actionnée par paiement hors ligne (2100), dans lequel les signaux sont indicatifs de la réception d'une pièce de monnaie par le commutateur de réception de pièces de monnaie (2102) ; et
une seconde interface (2124) configurée de manière à échantillonner des signaux de commande provenant de l'unité de commande (2106) de la machine actionnée par paiement hors ligne (2100) qui initie une opération de la machine actionnée par paiement hors ligne (2100) en réponse à la réception d'une séquence prédéfinie de signaux d'acceptation de paiement, provenant du commutateur de réception de pièces de monnaie (2102), indicative d'un nombre prédéfini de pièces de monnaie, dans lequel, en échantillonnant et en stockant les signaux d'acceptation de paiement et les signaux de commande, le module de paiement est en mesure de simuler l'opération du commutateur de réception de pièces de monnaie (2102) en réponse à la réception d'un nombre prédéfini de pièces de monnaie, de façon à déclencher l'opération de la machine actionnée par paiement hors ligne (2100) en réponse à l'achèvement d'un paiement électronique, le procédé comprenant les étapes ci-dessous consistant à :
radiodiffuser, par l'intermédiaire de la capacité de communication à courte portée, un paquet d'informations (1100) incluant un code d'autorisation, un identificateur associé au module de paiement (2120), et un critère de zone de paiement (1126) que le dispositif mobile (150) est tenu d'observer avant d'être dans une zone de paiement du module de paiement (2120) ;
recevoir (2208), par l'intermédiaire de la capacité de communication à courte portée et en provenance du dispositif mobile respectif (150), une demande de mise en œuvre d'une opération de la machine actionnée par paiement hors ligne, dans lequel la demande inclut un jeton d'octroi d'autorisation (1140) incluant le code d'autorisation, et dans lequel la demande est envoyée en réponse à l'entrée du dispositif mobile (150) dans la zone de paiement du module de paiement (2120), laquelle se produit suite à la satisfaction du critère de zone de paiement, dans lequel le critère de zone de paiement (1126) est ajusté par le dispositif mobile respectif (150) sur la base de l'intensité et/ou de la réception de sa capacité de communication à courte portée ;
valider (2210) la demande en déterminant si le jeton d'octroi d'autorisation (1140) inclut un code d'autorisation valide, dans lequel la validation indique que le dispositif mobile respectif (150) est autorisé à initier un paiement pour l'opération, par le biais d'un serveur distant, par l'intermédiaire d'une capacité de communication à longue portée du dispositif mobile respectif (150) ; et
conformément à une détermination selon laquelle la demande est valide, amener (2214) la machine actionnée par paiement hors ligne (2100) à mettre en œuvre l'opération en émettant une séquence de signaux prédéfinie vers l'unité de commande (2106) par l'intermédiaire de la première interface (2122), dans laquelle la séquence de signaux prédéfinie émule une séquence de signaux qui serait émise par le commutateur de réception de pièces de monnaie (2102) en réponse à la réception du nombre prédéfini de pièces de monnaie ; et
après l'émission de la séquence de signaux prédéfinie vers l'unité de commande (2106), obtenir (2216), par la seconde interface (2124), une notification indiquant que l'unité de commande (2106) a envoyé des signaux de commande pour initier l'opération de la machine actionnée par paiement hors ligne (2100) en réponse à la réception de la séquence de signaux prédéfinie.

2. Procédé selon la revendication 1, dans lequel le module de paiement est un module d'adaptateur (100) et la machine actionnée par paiement hors ligne (2100) est une unité d'acceptation de paiement (120) comprenant un mécanisme de réception de paiement, dans lequel le mécanisme de réception de paiement de l'unité d'acceptation de paiement (120) est un module d'acceptation de pièces de monnaie.

3. Procédé selon la revendication 2, dans lequel le module d'adaptateur (100) est inséré sous la forme d'une clé électronique en ligne pour une insertion en ligne dans un bus multipoint de l'unité d'acceptation de paiement (120).

4. Procédé selon la revendication 2, dans lequel le module d'adaptateur (100) comprend un canal de passage, dans lequel le canal de passage est configuré de manière à permettre à des signaux provenant d'un contrôleur d'unité d'acceptation de paiement (2460) de l'unité d'acceptation de paiement (120) d'atteindre un ou plusieurs autres périphériques de paiement (2455), et à permettre à des signaux provenant d'un ou plusieurs autres périphériques de paiement d'atteindre le contrôleur d'unité d'acceptation de paiement (2460).

5. Procédé selon la revendication 1, comprenant en outre les étapes ci-dessous consistant à :
en réponse (2218) à la réception de la notification :
générer des informations d'opération basées au moins en partie sur la notification ; et
stocker les informations d'opération générées dans la mémoire.

6. Procédé selon la revendication 5, comprenant en outre l'étape consistant à : envoyer (2220) les informations d'opération au dispositif mobile respectif (150) par l'intermédiaire de la capacité de communication à courte portée.

7. Procédé selon la revendication 1, dans lequel le module de paiement (2120) reçoit, en provenance du dispositif mobile respectif (150), un type de modèle du dispositif mobile respectif (150).

8. Procédé selon la revendication 1, dans lequel le critère de zone de paiement (1126) correspond à un seuil de zone de paiement de base indiquant une intensité de signal reçu de base que le dispositif mobile respectif (150) est tenu d'observer avant d'être dans la zone de paiement du module de paiement (2120).

9. Procédé selon la revendication 2, dans lequel l'unité d'acceptation de paiement (120) présente un bus multipoint vers le mécanisme de réception de paiement, le bus multipoint présentant un adaptateur mâle et un adaptateur femelle, et ledit module d'adaptateur (100) présentant un adaptateur mâle et un adaptateur femelle, dans lequel ledit module d'adaptateur (100) a été inséré en série avec le bus multipoint en connectant ledit adaptateur mâle dudit module d'adaptateur à l'adaptateur femelle du bus multipoint et en connectant ledit adaptateur femelle dudit module d'adaptateur à l'adaptateur mâle du bus multipoint.

10. Procédé selon la revendication 1, dans lequel la machine actionnée par paiement hors ligne (2100) est un sèche-linge ou une machine à laver d'une laverie automatique, un parcmètre, une borne de paiement de lavage de voiture ou un distributeur automatique.

11. Module de paiement (2120) destiné à mettre à niveau une machine actionnée par paiement hors ligne (2100) pour accepter des paiements électroniques, dans lequel la machine actionnée par paiement hors ligne (2100) inclut au moins une unité de commande (2106) et un commutateur de réception de pièces de monnaie (2102), le module de paiement (2120) comprenant :
une première interface (2122) configurée de manière à échantillonner des signaux d'acceptation de paiement provenant du commutateur de réception de pièces de monnaie (2102) de la machine actionnée par paiement hors ligne (2100), dans lequel les signaux sont indicatifs de la réception d'une pièce de monnaie par le commutateur de réception de pièces de monnaie (2102) ; et
une seconde interface (2124) configurée de manière à échantillonner des signaux de commande provenant de l'unité de commande (2106) de la machine actionnée par paiement hors ligne (2100) qui initie une opération de la machine actionnée par paiement hors ligne (2100) en réponse à la réception d'une séquence prédéfinie de signaux d'acceptation de paiement, provenant du commutateur de réception de pièces de monnaie (2102), indicative d'un nombre prédéfini de pièces de monnaie, dans lequel, en échantillonnant et en stockant les signaux d'acceptation de paiement et les signaux de commande, le module de paiement est en mesure de simuler l'opération du commutateur de réception de pièces de monnaie (2102) en réponse à la réception d'un nombre prédéfini de pièces de monnaie, de façon à déclencher l'opération de la machine actionnée par paiement hors ligne (2100) en réponse à l'achèvement d'un paiement électronique ;
une capacité de communication à courte portée configurée de manière à communiquer avec un ou plusieurs dispositifs mobiles ;
un ou plusieurs processeurs ; et
une mémoire (760) stockant un ou plusieurs programmes devant être exécutés par ledit un ou lesdits plusieurs processeurs, dans lequel ledit un ou lesdits plusieurs processeurs comprennent des instructions pour : mettre en œuvre le procédé selon l'une quelconque des revendications 1 à 10.
